# EUROPEAN PATENT APPLICATION

(11) **EP 0 810 761 A2**
(43) Date of publication of application: **03.12.1997**
(21) Application number: 97108729.1
(22) Date of filing: 30.05.1997
(51) Int. Cl.: H04L 29/06

(54) **Information processing apparatus, information processing method and identification code**

(30) Priority: 31.05.1996 JP 160933/96
(71) Applicant: SONY CORPORATION, Tokyo (JP)
(72) Inventor: Ogawa, Hiroaki, Shinagawa-ku, Tokyo (JP); Kakuda, Hiroshi, Shinagawa-ku, Tokyo (JP); Yamada, Keiichi, Shinagawa-ku, Tokyo (JP); Asano, Yasuharu, Shinagawa-ku, Tokyo (JP); Fujimura, Satoshi, Shinagawa-ku, Tokyo (JP); Kitano, Hiroaki, Shinagawa-ku, Tokyo (JP); Ishii, Kazuo, Shinagawa-ku, Tokyo (JP); Kato, Yasuhiko, Shinagawa-ku, Tokyo (JP); Shimakawa, Masato, Shinagawa-ku, Tokyo (JP); Omote, Masanori, Shinagawa-ku, Tokyo (JP); Honda, Hitoshi, Shinagawa-ku, Tokyo (JP); Hiroe, Atsuo, Shinagawa-ku, Tokyo (JP)
(74) Representative: Melzer, Wolfgang, Dipl.-Ing.

(57) **Abstract**

There is provided an information processing apparatus which may be applied to an information processing apparatus being connected, for example, to an information network such as Internet (2) for transmitting and receiving various pieces of information in order to make access to such network through a terminal (4, 5, 6, 15) of simplified structure such as a telephone terminal (5). A code for uniquely identifying, for example, a telephone terminal (5) and a computer terminal (4) may be formed with the codes corresponding to operators of a telephone terminal (5).

## Description

### BACKGROUND OF THE INVENTION

### Field of the Invention

The present invention relates to a processing information which may be adopted, for example, to a server of information network such as internet, etc. for enabling access to such information networks with terminals of simplified structure by forming an identification code to uniquely identify telephone terminals and computer terminals, etc. using the codes corresponding to an operator of a telephone terminal.

### Description of Related Art

An information network such as the internet is caused to offer various pieces of information assuming accesses from computers.

Namely, in the internet, access can be made to the World Wide Web (WWW) by expressing protocol and host name, etc. in the access format consisting of URL (Uniform Resource Locator). Moreover, in the electronic mails, a mail address can be generated, in the same manner, by expressing user name and domain name with the predetermined expression format.

In such an information format, it has been discussed, in order to expand the possible services, to transmit electronic mails even to facsimile apparatus and pager, etc. and, in addition, it has been made possible in a certain provider to transmit electronic mails through speech synthesis.

If a variety of information can be obtained by making access to the information network of this type explained above from a telephone terminal, the network of this type can be utilized more effectively. However, the information network of this type requires keyboard operation by a user because it is assumed to make access from a computer. Namely, this information network has a problem that the necessary information cannot be identified without operation of the keyboard. Thereby, it has been difficult to make access to such type of information from certain types of telephone terminals.

A service by speech synthesis which is partially utilized is only a local service on the internet by the restricted providers and it is now impossible to enjoy the services of the information except for electronic mails. Moreover, the services for facsimile apparatus and pager which are now discussed in a part of this field is only the one which may be realized by the internet in place of the current telephone network.

### SUMMARY OF THE INVENTION

With the background explained above, the present invention is intended to provide an information processing apparatus which can offer various kinds of services by making access to the information network, for example, from telephone terminals.

In order to solve such problems, the present invention generates the identification code required for transmission and reception of information in the network by combining the codes corresponding to operators operated in the telephone terminals.

Corresponding to this identification code or without relation to this identification code, an management data base having registered information of information origination terminal or information destination terminal is generated to changeover the information transmission and reception processes.

Moreover, in the information processing apparatus for transmitting information such as electronic mail or in the information processing apparatus for holding organically incorporated various pieces of input information, data is transmitted through data conversion due to selection of the information origination terminal and moreover an input information is totally or partially converted at the time of inputting or outputting information to/from an information storing means.

In addition, in such an information processing apparatus, information is transmitted through addition of an address code formed of the identification code and an input information classification information is also added. In the case of the information transmission by the voice signal, amount of data after data conversion is notified to a charging system.

Moreover, in the information processing apparatus of this type, while access is made to the information accumulated in the information storing means, information stored separately is offered to terminal units and thereby information can be offered by voices.

Furthermore, information itself is formed through, addition of the control code for identifying the part which is output by speech synthesis and the part which is output by text.

Formation of the identification code required for transmission and reception of information in the information network through combination of codes corresponding to operators operated in a telephone terminal enables reception of information services through access to the information network from a telephone terminal.

In addition, data conversion and transfer services, for example, may be offered by forming an management database corresponding to or without relation to the identification code and then changing over the information transmission and reception processes.

Namely, in the information processing apparatus for transmitting information such as electronic mails or in the information processing apparatus for holding organically incorporated various pieces of input information, the information of this kind may be input or output, for example, from a telephone terminal through data conversion.

In more practical, the information transfer service may be implemented by transmitting information with addition of address code including the identification code, the corresponding data conversion process may be implemented by addition of the input information classification information and when the voice signal is transmitted, a share of users may be eased by notifying amount of data after data conversion to a charging system.

Moreover, various pieces of information may be offered through effective use of connection waiting time by offering the information stored separately to the terminal units while the access is being made to the information stored in the information storing means. In addition, such information may also he offered by voices for further convenience.

Further, the information of this type can easily be generated by forming the information itself with addition of a control code for identifying the part output through speech synthesis and the other part.

### BRIEF DESCRIPTION OF THE DRAWINGS

Other objects and advantages of the present invention will be apparent from the following detailed description of the presently preferred embodiments thereof, which description should he considered in conjunction with the accompanying drawings in which:
Fig. 1 is a block diagram illustrating a server in the information network in relation to a preferred embodiment of the present invention;
Fig. 2 is a schematic diagram illustrating the network to which the server of Fig. 1 is adopted;
Fig. 3 is a table indicating the basic Gaia codes;
Fig. 4 is a table indicating the attribute codes of Fig. 3;
Figs. 5A to 5D are diagrams offered to explain the encoding of the Gaia codes;
Figs. 6A to 6C are diagrams indicating the encoded Gaia codes;
Fig. 7 is a table indicating a server index of Fig. 3;
Fig. 8 is a diagram offered to explain the server index of Fig. 7;
Fig. 9 is a table indicating various pieces of information expressed by the Gaia codes;
Fig. 10 is a table indicating actual various pieces of information of Fig. 9;
Fig. 11 is a diagram illustrating relationship between a Gaia server and a MAM server;
Fig. 12 is a block diagram illustrating relationship of Fig. 11 with the total system;
Fig. 13 is a table indicating a user information management database;
Fig. 14 is a table indicating the Gaia code incorporation table of the user information management database of Fig. 13;
Fig. 15 is a table indicating the user information database of the user information management database of Fig. 13;
Fig. 16 is a diagram illustrating user data of Fig. 15;
Fig. 17 is a diagram illustrating non-terminal data of Fig. 15;
Fig. 18 is a diagram illustrating terminal data of Fig. 15;
Fig. 19 is a flowchart offered to explain the setting updating process in the table of Fig. 15;
Fig. 20 is a flowchart offered to explain reference to the table of Fig. 15;
Figs. 21A and 21B are flowcharts offered to explain transmission of an electronic mail;
Fig. 22 is a schematic diagram showing the communication sequence in Figs. 21A and 21B;
Fig. 23 is a schematic diagram showing continuous communication sequence of Fig. 22;
Figs. 24A and 24B are flowcharts offered to explain destination input in Figs. 21A and 21B;
Figs. 25A and 25B are flowcharts offered to explain subject input in Figs. 21A and 21B;
Figs. 26A and 26B are flowcharts offered to explain content input in Figs. 21A and 21B;
Figs. 27A and 27B are flowcharts offered to explain destination input by voice recognition;
Fig. 28 is a schematic diagram showing communication sequence of Figs. 27A and 27B;
Fig. 29 is a schematic diagram showing continuous sequence of Fig. 28;
Fig. 30 is a flowchart offered to explain interim change of destination input method;
Fig. 31 is a flowchart showing processing sequence of a server in Fig. 30;
Fig. 32 is a schematic diagram indicating communication sequence in Fig. 30 and Fig. 31;
Figs. 33A and 33B are flowcharts offered to explain input of contents by selecting a formatted sentence or free sentence;
Figs. 34A and 34B are schematic diagrams indicating continuation of Figs. 33A and 33B;
Fig. 35 is a schematic diagram indicating communication sequence of Figs. 33A and 33B and Figs. 34A and 34B;
Fig. 36 is a schematic diagram indicating communication sequence for inputting the contents with a free sentence in Fig. 33 and Fig. 34;
Figs. 37A and 37B are flowcharts offered to explain input of contents with a facsimile apparatus;
Fig. 38 is a flowchart offered to explain services with a MAM server;
Fig. 39 is a flowchart offered to explain user identification;
Fig. 40 is a flowchart offered to explain notification of the number of electronic mails;
Fig. 41 is a flowchart offered to explain services of electronic mail;
Fig. 42 is a flowchart offered to explain retrieval of electronic mails by voice recognition;
Fig. 43 is a flowchart offered to explain retrieval of electronic mails by the number of characters;
Fig. 44 is a flowchart offered to explain retrieval of electronic mails by communication partner;
Fig. 45 is a flowchart offered to explain retrieval of electronic mails by an urgent keyword;
Fig. 46 is a flowchart offered to explain retrieval of electronic mails by keywords classified for each type;
Fig. 47 is a flowchart offered to explain reading of subjects;
Fig. 48 is a flowchart offered to explain reading of English subjects;
Fig. 49 is a flowchart offered to explain reading of subjects by language identification fuction;
Fig. 50 is a flowchart offered to explain reading of a message;
Fig. 51 is a table indicating sources of extended HTML format;
Fig. 52 is a continuous table of Fig. 51;
Fig. 53 is a flowchart showing access to the home page by an ordinary WWW browser;
Fig. 54 is a diagram showing the processing results of sources shown in Fig. 51 and Fig. 52 by the processing of Fig. 53;
Fig. 55 is a flowchart showing a processing sequence by an exclusive server holding a browser to appreciate the sources of Fig. 51 and Fig. 52;
Fig. 56 is a diagram showing the processing results of sources shown in Fig. 51 and Fig. 52 by the processing of Fig. 55;
Fig. 57 is a diagram showing objects of voice recognition by the processing of Fig. 56;
Fig. 58 is a flowchart showing navigation for linking destination by voice recognition in the server 1;
Fig. 59 is a flowchart showing a processing sequence of navigation for linking destination with a DTMF signal;
Fig. 60 is a diagram indicating the guide to the linking destination by the processing of Fig. 59;
Fig. 61 is a flowchart showing a communication sequence for registration of messages in the message service;
Fig. 62 is a flowchart showing continuous sequence of Fig. 61;
Figs. 63A and 63B are flowcharts showing a processing sequence for making access to contents of message dial;
Fig. 64 is a flowchart showing a communication sequence of Figs. 63A and 63B;
Fig. 65 is a flowchart showing continuous sequence of Fig. 64;
Figs. 66A and 66B are flowcharts showing a processing sequence for registration of image data by a facsimile apparatus 6;
Fig. 67 is a flowchart showing a communication sequence of Figs. 66A and 66B;
Fig. 68 is a flowchart showing continuous sequence of Figs. 66A and 66B;
Fig. 69 is a block diagram illustrating peripheral structure of the server 1;
Fig. 70 is a flowchart showing the book mark registration service when a user has made access from a telephone terminal;
Fig. 71 is a flowchart showing the book mark registration processing by a facsimile apparatus;
Fig. 72 is a flowchart showing a processing sequence of the book mark processing when access is made to the selected service by voice;
Fig. 73 is a flowchart showing a processing sequence of charging service;
Fig. 74 is a flowchart showing continuous sequence of Fig. 73; and
Fig. 75 is a table offered to explain the other input method.

### DESCRIPTION OF THE PREFERRED EMBODIMENTS

The preferred embodiments of the present invention will be explained in detail with reference to the accompanying drawings.

### (1) Total structure

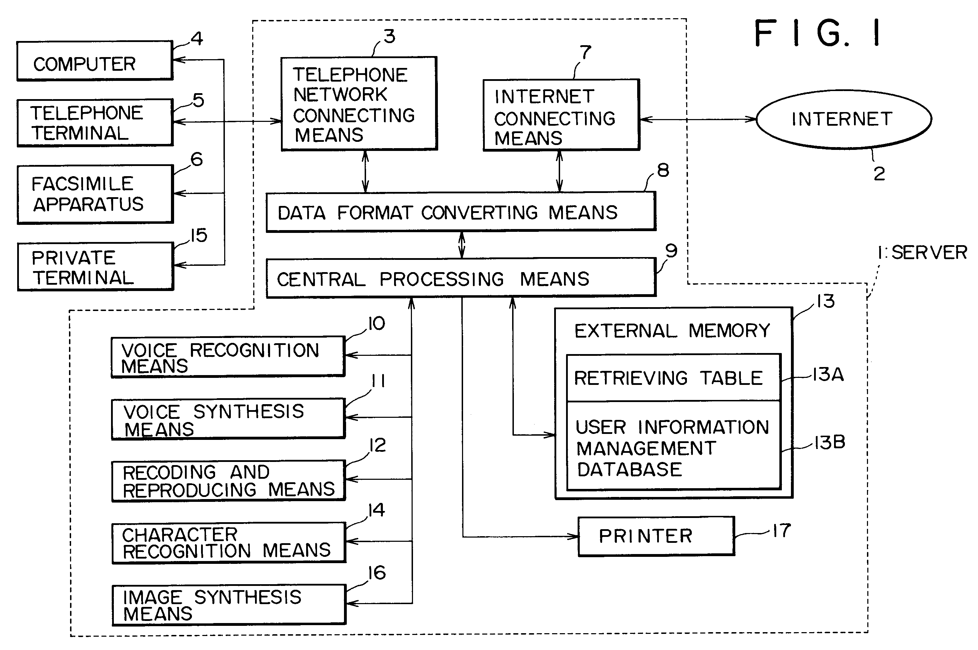

Fig. 1 is a block diagram illustrating a server of the information network depending on the preferred embodiments of the present invention. This server 1 is capable of making communication with a user terminal via the telephone network and also with the other server via the internet 2 as required. Thereby, this server 1 can offer various kinds of services in addition to the services offered by the ordinary internet server, in response to the request from user terminals.

Namely, the telephone network connecting means 3 receives voice signal, voice data, image data through a facsimile apparatus, pager data, DTMF (Dual Tone Multi-Frequency) signal via the telephone network and also executes the encoding, decoding, error correcting operation and dial pulse transmission and reception in accordance with transmission and reception of such signals and data. Thereby, the server 1 is formed to offer, to a computer, various services through the communication like ordinary personal computer communication and also to offer various services to the telephone terminal 5, facsimile apparatus 6, private terminal 15 and pager by detecting operations of the operators in these terminal units. Here, the private terminal 15 the exclusive terminal of this server 1, namely the liquid crystal display panel for displaying text data, image data and image data transmitted from the telephone network connecting means 3, transceiver for inputting and outputting voice and radio telephone terminal having an operator corresponding to the telephone terminal.

Meanwhile, the internet connecting means 7 forms a connecting means between the internet 2 and this server 1 to transmit and receive the data, for example, of electronic mails, FTP (File Transfer Protocol) and HTTP (Hyper Text Transfer Protocol) via the internet 2.

A data format converting means 8 is controlled by a central processing means 9 depending on the user request to change over the operation, outputs the voice data obtained via the telephone network connecting means 3 and image data of the facsimile apparatus obtained via the telephone network connecting means 3 to the internet connecting means 7 after these are converted to the data on the internet and also outputs in turn the data obtained via the internet connecting means 7 after it is converted to the voice signal, etc. to be applied to the telephone network. In this data conversion, a data format converting means 8 transmits the address code of these data using the Gaia code explained later and also transmits the address code which identifies the server and contents of server. On the contrary, when data depending on the Gaia code is received, this data is converted to the original format as required. In addition, for the transmission and reception of this Gaia code, the data format converting means 8 transmits or receives this Gaia code through data compression.

A central processing means 9 controls the total operations of the server 1 to offer various services depending on the keying operations at the computer 4, telephone terminal 5, facsimile apparatus 6 and private terminal 15. In addition, in this case, the central processing means 9 discriminates a type of a terminal unit connected to the telephone network connecting means 3 depending on type of telephone line connected to the telephone network connecting means 3, data exchange when communication is started between the terminal and telephone network connecting means 3 and format of input data input via the telephone network connecting means 3 and offers various services by the data format fitted to the terminal depending on this discrimination result.

Namely, a terminal can be identified from the originator number when the communication is started for the access by means of the ISDN (Integrated Services Digital Network), or from the cell number to which a hand-held telephone set belongs for the access by means of the hand-held telephone set or from the header added at the leading edge of the image data for the access by means of the facsimile apparatus.

A voice recognition means 10 is controlled by the central processing means 9 to change over the operation in order to execute voice recognition for the voice signal input via the internet connecting means 7 and voice signal recorded in a recording and reproducing means 12 and convert these voice signals into address data, text data, etc. Thereby, the server 1 can make access to various pieces of information using the voice signal via the telephone terminal 5, a telephone terminal incorporated to the facsimile apparatus 6 and private terminal 15 and can originate by voice the electronic mail in the text data format.

A speech synthesis means 11 executes the speech synthesis process for the data input via the internet connecting means 7 and the data stored in an external memory 13 to output the voice signal. This voice signal is output as required to he telephone network connecting means 3 and internet connecting means 7. Thereby, the server 1 can offer various services by voice and also offer the service of reading by voice the electronic mail in the form of the text data.

A recording and reproducing means 12 records the voice signal input via the internet connecting means 7 and telephone network connecting means 3 and reproduces and outputs the voice signal in response to the user request. Thereby, the server 1 can offer so-called the message dial service and voice guide service.

A character recognizing means 14 inputs an image data of facsimile apparatus and image data of bit map format or JPEG (Joint Photographic Experts Group) format via the telephone network connecting means 3, executes character recognition process for the image formed from these data and thereby converts these image data into the text data. Thereby, the server 1 can make access to various pieces of information by means of the facsimile apparatus 6 and transmit an electronic mail by means of the facsimile apparatus 6.

An image combining means 16 converts, on the contrary to the character recognizing means 14 explained above, the test data into an image data of the facsimile apparatus. Thereby, the server 1 is designed to originate various pieces of information such as an electronic mail to the facsimile apparatus 6. Thereby, the server 1 is capable of transmitting or receiving information to or from vairous terminals, such as output of electronic mail by the voice signal to the facsimile apparatus 6, by combining mutual data conversion processes centered on the test data among the voice recognizing means 10, speech synthesis means 11, character recognition means 14 and image combining means 16.

An external memory apparatus 13 stores various kinds of information required for operation of the server 1 such as entry information management and spool management of electronic mails. Therefore, the server 1 is designed to form the Gaia server and MAM server by means of the server program in this central processing means 9, while the external memory apparatus 13 also forms the database by these servers.

A printer 17 is controlled by the central processing means 9 to print out addresses and contents of electronic mails. Thereby, the server 1 can distribute the electronic mails by mail. The server 1 is also connected a charging system and local service server which will be explained later to offer various kinds of services.

### (2) Gaia code

The server 1 forms the identification code required for transmission and reception of information on the internet by combination of codes corresponding to the operators to be operated in the telephone terminals. Hereinafter, the identification code due to combination of these codes is called the Gaia code. The operable operators are composed of the operators of numerals "0" to "9" and the operators of signs "*" and "#". Thereby, the server 1 can input the identification code required for transmission and reception of information with an input from the telephone terminal 5 and facsimile apparatus 6 to make access to the information network of this type from these apparatuses. The Gaia code is generated, as required, in place of the identification code by an ordinary ASCII code depending on selection by users or depending on the terminal or server as a partner of communication with the server 1. Accordingly, the server 1 is also capable of transmitting and receiving various pieces of information to and from ordinary servers in the internet.

Moreover, the server 1 holds a retrieval table 13A in the external memory apparatus 13 so that it can assure, regarding the Gaia code, the one-to-one correspondence between each identification code and information on the network and terminal. This retrieval table 13A may be retrieved as required by the central processing means 9.

Here, a telephone terminal is used in the embodiment, but the Gaia code may be formed through combination of the codes (including characters and signs, etc.) corresponding to the operators of the other communication terminals, for example, computer and private terminal, etc.

This retrieval table 13A is placed under the management, like a DNS (Domain Name System), for example, incorporation with the same type of server connected to the internet (hereinafter, the server function by the Gaia code is called the Gaia server). Thereby, a large number of code information can be effectively processed and administrated. Accordingly, each Gaia server is enough to be linked with the adjacent other Gaia server.

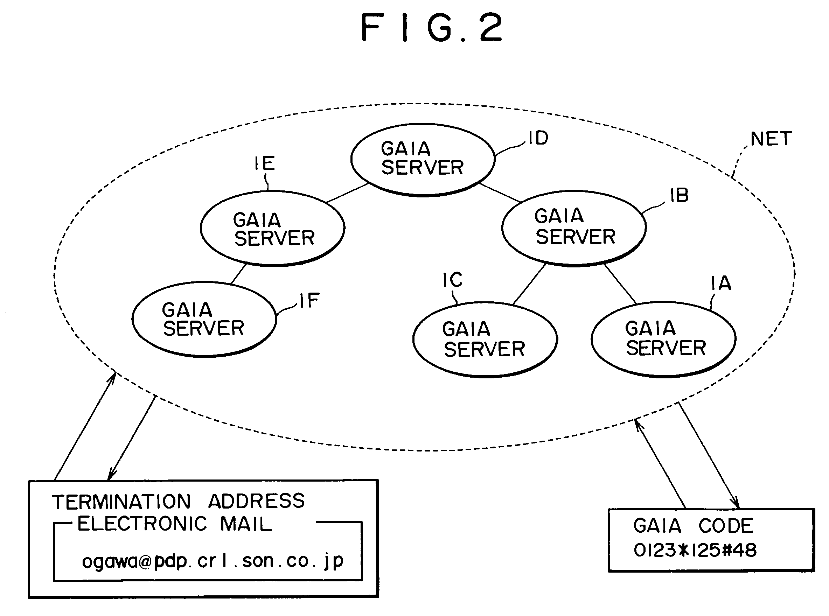

Thereby, as shown in Fig. 2, in this embodiment, the server 1 can transmit or receive, on the contrary, an electronic mail to the electronic mail address "ogawa@pdp.crl.son.co.jp" on the corresponding internet with reference to the retrieval table 13A from the electronic mail address of "0123*125#48", for example, through the network NET on he internet formed of the Gaia servers 1A to 1F of the same type.

Thereby, the server 1 is capable of receiving an electronic mail via the telephone terminal 5 when the electronic mail information is given as the voice signal and ,in the same manner, receiving the various kinds of information offered of voice data by identifying the information originator with the telephone terminal. Moreover, in the same manner, when the information to be transmitted and received is the image data of the facsimile apparatus 6, information service can be received through the facsimile apparatus 6. On the contrary, a computer 4 is capable of transmitting various pieces of information by designating the terminals such as telephone terminal 5, facsimile apparatus 6 and pager, etc.

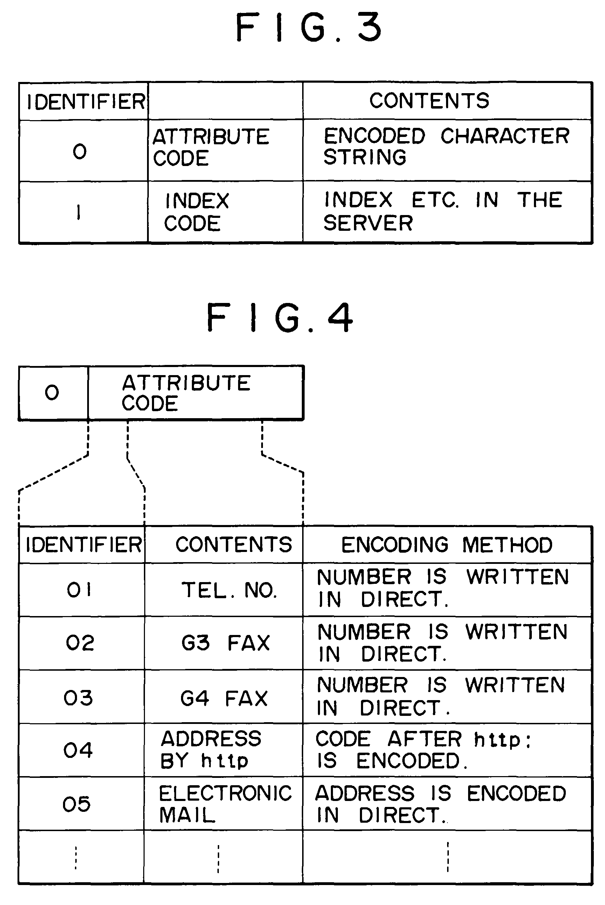

Basically, the identification code is formed , as shown in Fig. 3, of the Gaia code to identify each computer, etc. Namely, the Gaia code can be discriminated depending on the identifier arranged at the leading edge. When the identifier has a value "0", the Gaia code is the attribute code which is generated by encoding the character string of the ASCII (American Standard Code for Information Interchange) code. Therefore, when the identifier is given by the value "1", it indicates the corresponding index code of the information in the memory apparatus on the network. This index code indicates the code for identifying the position of the Gaia server and the index in this server. Briefly, the index code is a so-called abbreviation number and can be obtained by encoding the address of information used frequently and the a communication terminal number.

The attribute code is generated, as shown Fig. 4, by the encoding in the data format converting means 8 or by the direct input from the telephone terminal 5 and the identifier of two digits indicating the contents are assigned, following the identifier "0" indicating the attribute code. The attribute code identifying the access destination with this identifier indicates, when the identifier of two digits has the value "01", that the subsequent content is telephone number. In this case, the subsequent content is formed by describing the telephone number. Moreover, when the identifier of two digits has the values "02" and "03", it indicate that the subsequent content is the facsimile number of G3 type and G4 type. In this case, the subsequent content is formed by describing the number in direct.

Meanwhile, when the identifier of two digits has the values "04" and "05", it indicates that the subsequent content is the address by HTTP (Hyper Text Transfer Protocol) and the electronic mail address. In the former case, the address after "http:" is encoded, while in the latter case, the address as a whole is encoded by the data format converting means 8 or an input is applied in direct from the telephone terminal 5, etc.

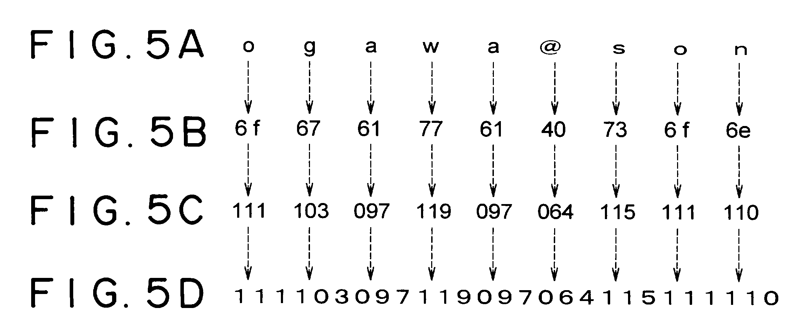

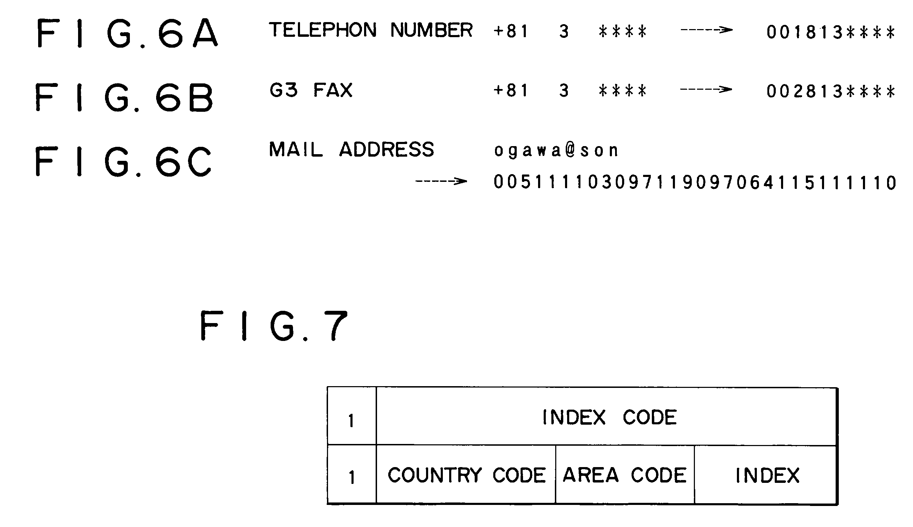

Here, the encoding is performed, as shown in Fig. 5, by converting each character code into the decimal number of three digits for each character string (Fig. 5A and Fig. 5B) expressed by the hexadecimal number wit the ASCII code and then coupling such decimal numbers. Thereby, as shown in Fig. 6, various address data such as telephone number, facsimile number of G3 format and electronic mail address, etc. are expressed by the Gaia code corresponding on one to one basis. In addition, on the occasion of this encoding, it is possible to provide convenience to user for input of the Gaia code from the telephone set, etc. by conducting compression of data, such as the Huffman coding.

Therefore, the data format converting means 8 converts, as required, between the ASCII code and Gaia codes in the data communication with ordinary servers on the internet and communication with user terminals such as computer 4, etc., the addresses on the electronic mail addresses and world wide webs. Moreover, the converters inputs, for the access from the telephone terminal 5 and facsimile apparatus 6, in direct, the addresses of the Gaia code from these apparatuses to the Gaia servers.

Moreover, the data format converting means 8 executes data compression by applying the predetermined data compression method depending on the generation probability of the same numerals in the Gaia codes generated as explained above. Thereby, the data format converting means 8 is capable of efficiently transmitting the Gaia code data by compressing the increasing data length through the encoding process of this type.

Meanwhile, the index code is formatted by the hierarchical structure and in this embodiment, such index code is generated by utilizing the country code and area code of the telephone number. Namely, as shown in Fig. 7, the index code is formed in such a manner that the value "1" is followed by the country code, area code and is then by the index in the server.

Thereby, in the Gaia server, the index code is processed to offer the services which users desire by applying the management method for domain information by DNS in the electronic mails of itnernet and for correspondence between the host name and IP address.

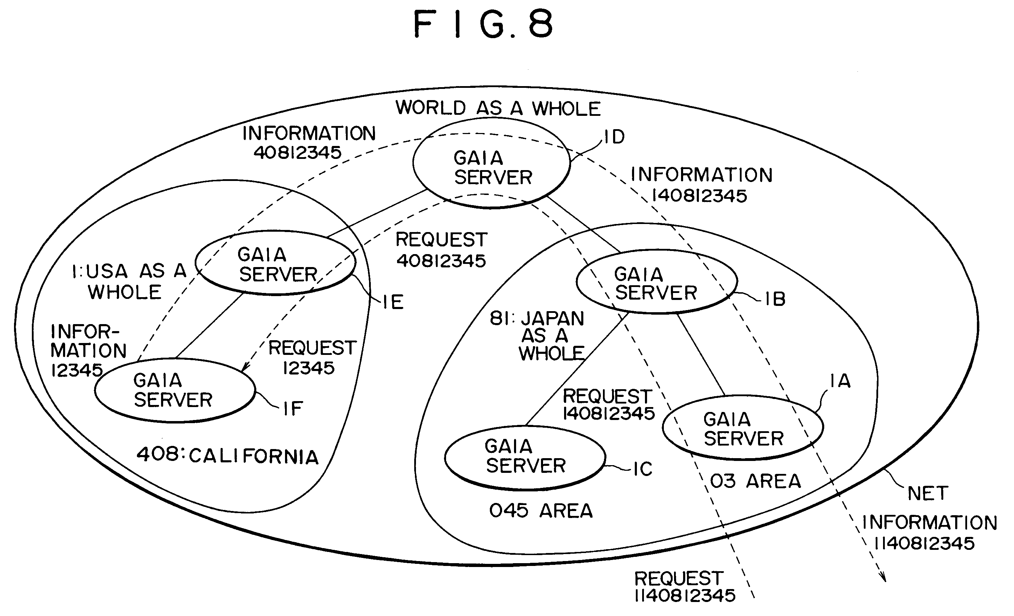

Namely, as shown in Fig. 8, when a request of the index code "1140812345" including the identifier is issued, for example, to the Gaia server 1A having the area code "03" in Japan having the country code "81", the central processing means 9 of this Gaia server 1A judges the index code from the identifier of the leading digits and inquires the index code "140812345" to the Gaia server 1B of the upper rank to administrate Japan because the subsequent country code is different.

The Gaia server 1B having received this inquiry also inquires the index code "140812345" to the Gaia server 1D of further higher rank to administrate all servers in the world because the country code is different. The Gaia server 1D which administrates the world retrieves its own retrieval table and inquires here the index code "40812345" to the Gaia server 1E which administrates the U.S. A with reference to the country code.

Upon reception of this inquiry, the Gaia server 1E also retrieves the retrieval table and then inquires the index code "12345" to the Gaia server 1F which administrates California with reference to the subsequent area code. Thereby, the Gaia server 1F having received this inquiry transmits the necessary information to the Gaia server 1E and this Gaia server 1E transmits this information to the Gaia server 1D which administrates the world in accordance with the inquiry information which has been once stored. Moreover, this information is then sequentially transferred, in accordance with the corresponding inquiry information, to the Gaia server 1B which administrates Japan and the Gaia server 1A which administrates the area having the area code "03" and is finally transferred to the user terminals.

Thereby, the Gaia server 1 retrieves the corresponding information with reference to the index code by the Gaia code and offers the retrieved information to the computer 4, telephone terminal 5 and facsimile apparatus 6, etc.

In the case of electronic mail service, the server 1 judges the destination of an electronic mail with the attribute information. When the destination is given as the address, contents and address of the mail are printed by an external printer 17 and the electronic mail is mailed to this address.

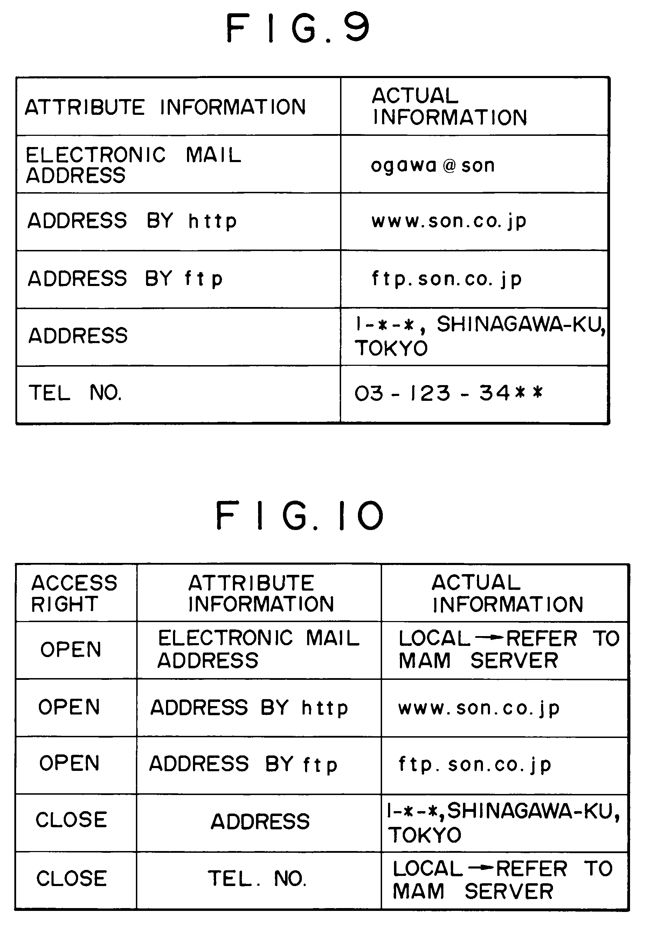

Fig. 9 is a table indicating address data corresponding to the attribute codes of the identification code. Here, these address data are given the attribute information indicating a kind of data for identifying electronic mail address, address by http and ftp, address and telephone number, etc. Therefore, the Gaia server 1 holds these address data in the external memory apparatus 13 and offers these address data as required.

### (3) MAM server (Multi Address Mapping Server)

In order to assure sufficient security in offering of such address data, the Gaia server 1 sets, as shown in Fig. 10, the access right data to the leading edge of each address data depending on designation from users and operation of the network. In addition, the Gaia server 1 allows, when the data for access right is set open, free access to this data as the open data. If the access right data is set closed, disclose of data is stopped, as required, by confirming the access.

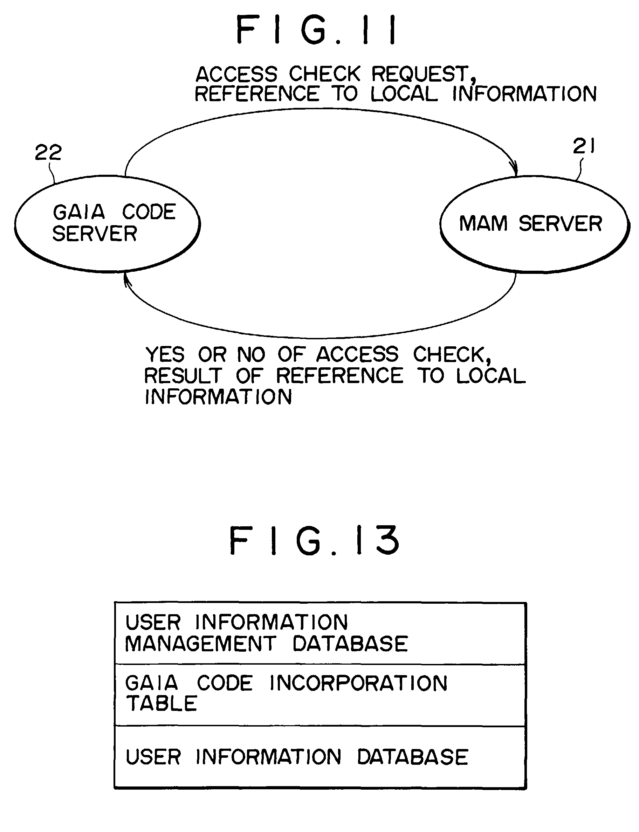

In regard to the information designated in local, this information is held once in the MAM server 1 and thereafter this local information is offered by the MAM server 1, as shown in Fig. 11, corresponding to access check request and request for referring to local information from the Gaia server. Therefore, the MAM server 1 is structured of a server program by the same processing means 9, etc. as the Gaia server 1 in order to realize the services such as multi-address communications by the Gaia server 1 and security may be assured and the services such as multi-address communication and aliasing, etc. which will be explained later may also be offered by switching the information response to each inquiry from such Gaia server 1. Here, the local information means the information for making reference to the MAM server where the actual addresses exist.

For the access check request, the MAM server 1 requests input of the password number to a user and judges success or failure of access by identifying a user from the password number. When services are offered by voices, this MAM server 1 requests input of voice as required as will be explained later and executes the processing for user identification through voice recognition, etc.

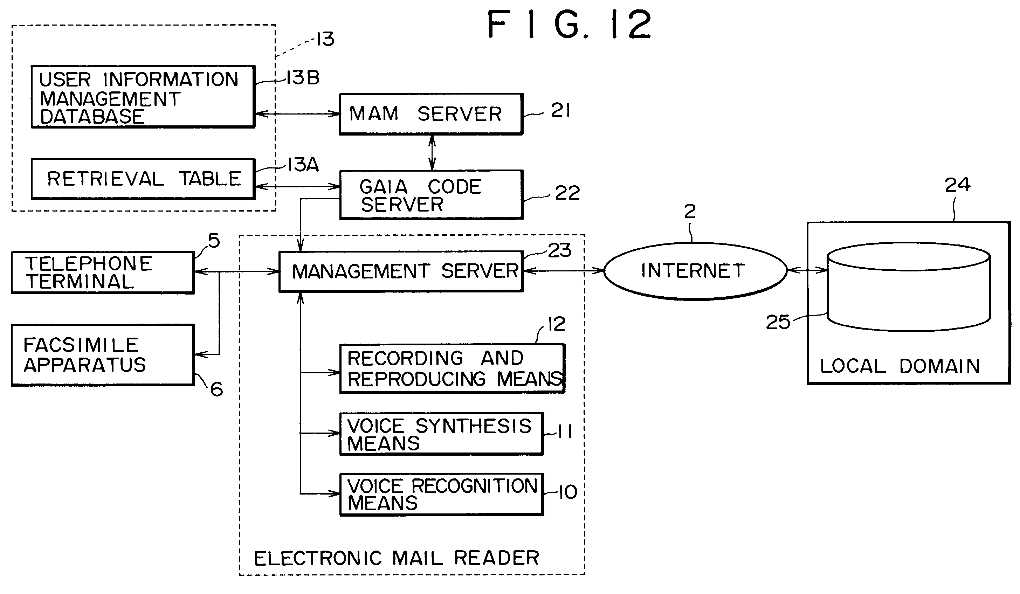

Since the Gaia server and MAM server have been structured as explained above, the server 1 of Fig. 1 structures, as shown in Fig. 12, the MAM server 21, Gaia code server 22 and management server 23 and is then connected to an electronic mail spool 25, etc. of the local domain 24 via the internet 2. Fig. 12 illustrates the central processing means 9 of Fig. 1 through the classified three functions of the MAM sever, Gaia code server and management server.

The MAM server 1 refers to the user information management database 13B held in the external memory appartus 13 for the reference from the Gaia code server and executes various kinds of services by returning, for example, the local information.

### (3-1) User information management database

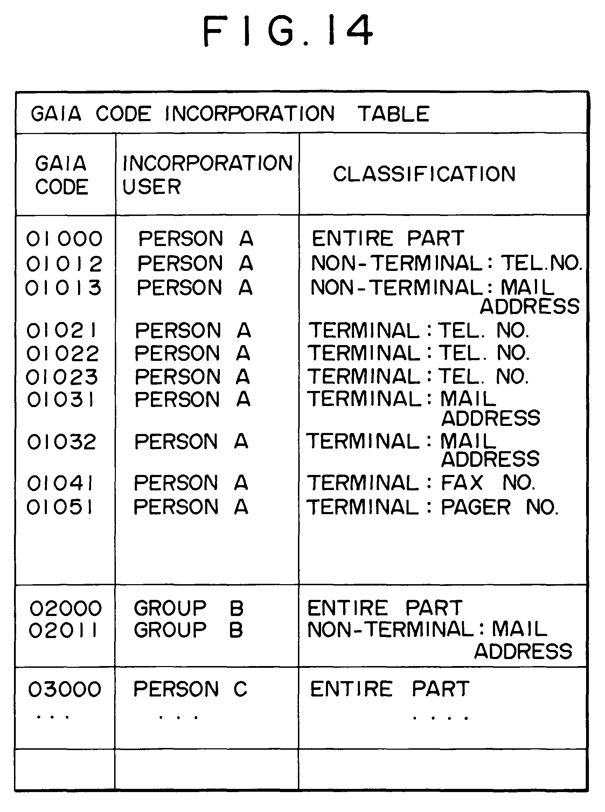

Here, as shown in Fig. 13, the user information management database 13B is formed of a Gaia code incorporation table and a user information database. As shown in Fig. 14, the Gaia code incorporation table registers the incorporated users of all Gaia codes administrated by the server 1 together with object classification identified by the Gaia code. The link with the user information database is set depending on this classification. In the user information management database, only the users registered in each Gaia code are recognized to update the classification incorporated to each Gaia code and user information management database.

For instance, in Fig. 14, it is indicated that the codes starting from the Gaia code "01000" are incorporated to a person A and the codes starting from the Gaia code "02000" are incorporated to a group B. Of the Gaia codes incorporated to a person A, the Gaia code "01012" identifies a virtual telephone terminal of the person A, while the code "01013" identifies a virtual computer terminal or private terminal of the person A. Here, a virtual communication terminal has been set considering convenience of transfer to the communication terminals liked which will be explained later.

Moreover, the Gaia code "01021" identifies a hole telephone terminal of the person A, while the Gaia codes "01022" and "01023" identify the telephone terminals (hand-held telephone sets) in the office and the other attending place of the person A.

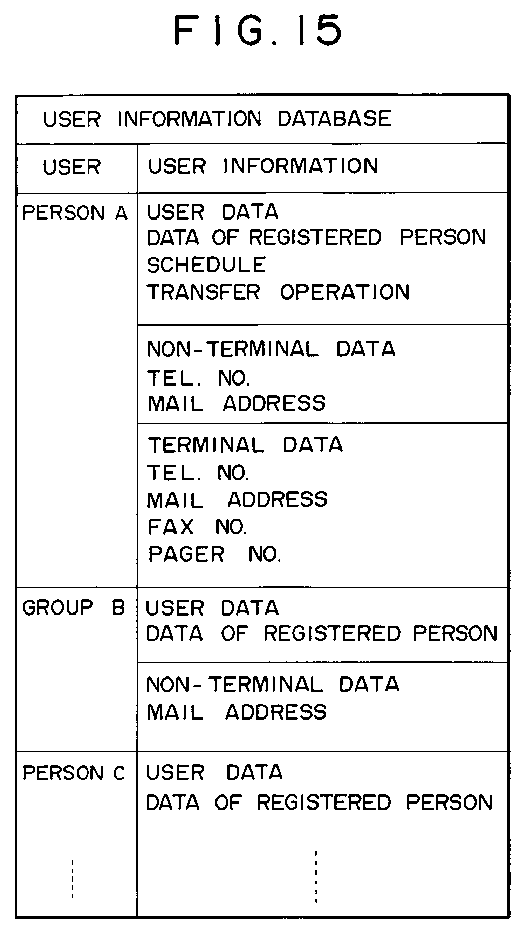

Meanwhile, as shown in Fig. 15, the user information database summarizes user information for each user registered in the Gaia code incorporation table. Each user information is formed of user data, non-terminal data and terminal data. The user data is structured of registered person data, schedule data and transfer operation data. Moreover, the non-terminal data and terminal data are structured of the data for identifying information transfer destination such as telephone number and mail address, etc. of the temporary and permanent places.

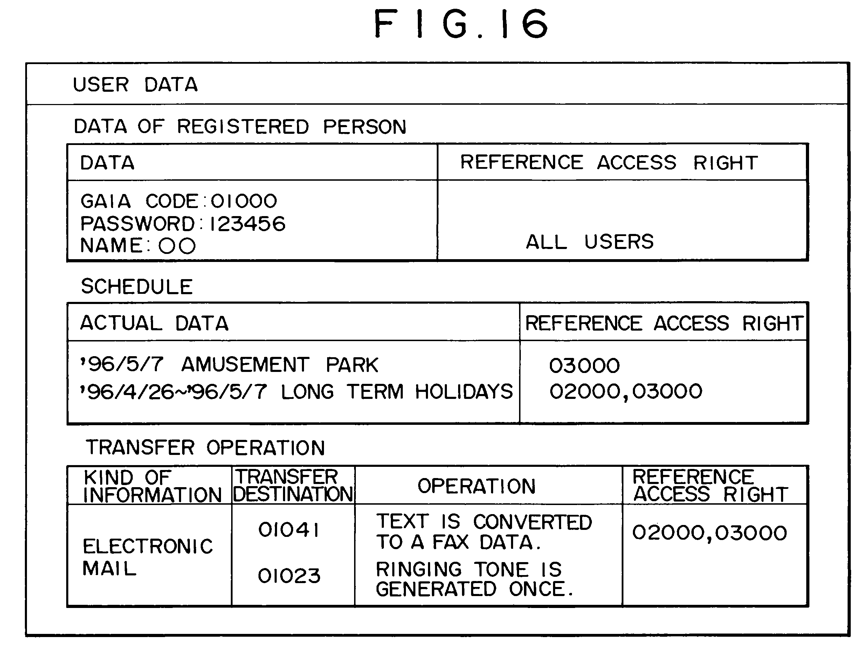

As shown in Fig. 16, the registered person data of user data is the data of registered person himself and is composed of the Gaia code, password number and personal name, etc. The password number is used to identify the registered user and is formed to allow the access of only the registered users. Moreover, a personal name is set allowing registration of a plurality of names and thereby a pen name, for example, may also be registered in addition to own name and the reference access right for disclosing or not the access from users can also be set. The names in Fig. 16 are set to disclose the contents of all accesses. In addition to these names, as the registered person data, the voice templete for user identification and a keyword used for user identification may also be registered.

On the other hand, the schedule data indicates user schedule and is structured of the real data indicating contents of schedule and data indicating the reference access right. In this Fig. 16, it is registered that a person A went to an amusement park on May 7, 1996 and took the long term holiday from April 26 to May 7, 1996. Moreover, the access right is set, in regard to the schedule of May 7, 1996, so that reference is allowed only to a person C (Fig. 14) who is identified by the Gaia code "03000". In the same manner, in regard to the schedule of days from April 26 to May 7, 1996, the access right is set so that reference is allowed to a person C identified by the Gaia code "03000" and a group B identified by the Gaia code "02000".

In this user data, as the setting of such reference access right, time and location of registered users may also be registered in addition to the Gaia codes. Thereby, various conditions may be set, for example, midnight access is inhibited. It is also possible, moreover, to set to present the particular data for the access from a particular person. Accordingly, a message can be transmitted by voice signal or voice data and moreover a map till the home may also be presented by image data.

The transfer operation data is formed with registration of contents of processing which is executed in different manner from the usual processing by user when information of electronic mail, etc. is transmitted to the Gaia code to which the users are incorporated. In Fig. 16, when it is requested to transfer the electronic mail to a person A to the facsimile apparatus (Fig. 14) of the Gaia code "01041", it is specified that the electronic mail is transmitted after it is converted to the image data corresponding to the facsimile apparatus and when it is requested to transfer the electronic mail to the telephone terminal of the Gaia code "01023", it is specified that the ringing signal is once transmitted.

In these cases, the access right is set to be able to make reference to this setting for the group B identified by the Gaia code "02000" and the person C identified by the Gaia code "03000". As the transfer operations, various conditions may be set by setting of the non-terminal data. For example, transmission of information from the particular Gaia code may be set for various conditions in the case of transmission to the particular transfer destination, namely, information is transferred to the particular transfer destination within the predetermined time. In these cases or in other cases, the server 1 sets these operating conditions to register the processes such as display of the name of originator and title of the electronic mail to the pager, for example, when an electronic mail is received and or when it is recorded in the electronic mail spool.

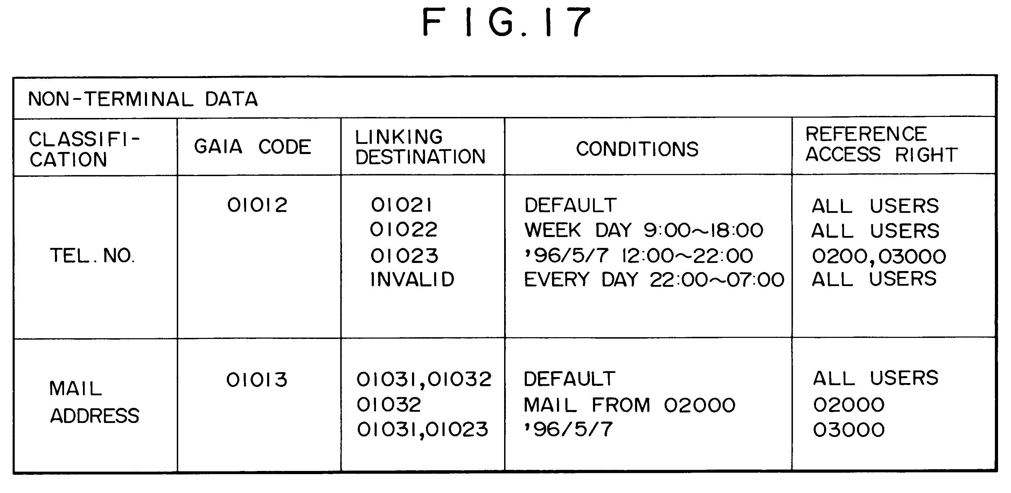

As shown in Fig. 17, the non-terminal data relates to the non-terminal (virtual) Gaia code to which this user is incorporated and this data is formed of the telephone number and non-terminal mail address. In this case, the telephone number identified by the Gaia code "01012" is registered as the object telephone number and four linking destinations are registered for this telephone number according to the conditions. Namely, as a default (without condition), the link destination and conditions are registered so that the information to this telephone number is transferred to the telephone number identified by "01021" and transferred, as an exception, to the telephone number identified by the Gaia code "01022" during the time from 9:00 to 18:00 of the week days.

Moreover, corresponding to the schedule of a user, the link destination and conditions are registered so that information is transferred to the telephone number identified by the Gaia code "01023" on May 7, 1996 and the link destination is invalidated every day during the time from 22:00 to 7:00 and telephone call for the Gaia code "01012" is not connected. In this case, the server 1 sends the operation data to an originator with the guide by voice or is capable of registering these operations to the transfer operation of the user data so that a message recorded previously in the recording and reproducing means 12 can be transmitted to an originator.

Moreover, in this case, whether these link destination and condition are opened or not to any user is specified by the reference access right. When the link destination and condition are overlapped, the server 1 is caused to transfer the information to the link destination under the higher priority condition set by the user. In any case, default has the lowest priority. In this embodiment, the condition for specifying the link destination may also be set depending on the Gaia code of originator and the current position of the user registered. Thereby, this server can freely transfer the telephone call as required.

The mail address is the data regarding the non-terminal mail address to which this user is incorporated and is structured, as in the case of the telephone number, of the Gaia code indicating the mail address of an object, link destination and reference access right. Here, the electronic mail of the address "01013" is registered as an object and the link destination is registered depending on three conditions for this mail address. Namely, information to this mail address as the default is transferred to the transfer destination identified by the Gaia codes "01031" and "01032" and it is also registered that all users are capable of making reference to this relationship. Moreover, information from the Gaia code "02000" is transferred to the transfer destination identified by the Gaia code "01032" and it is also registered that only the user of the Gaia code "02000" is capable of making reference to this relationship. Namely, the user having the reference access right can look over the conditions of the link destination.

Moreover, corresponding to the schedule of a user, it is registered that information is transferred, on May 7, 1996, to the transfer destination identified by the Gaia codes "01031" and "01032" and only the user of the Gaia code "03000" is capable of making reference to this relationship. With the relationship of these links, the server 1 transfers the electronic mail, converts the message into the image data of the facsimile apparatus depending on registration of the transfer operation of user data and issues once the ringing signal.

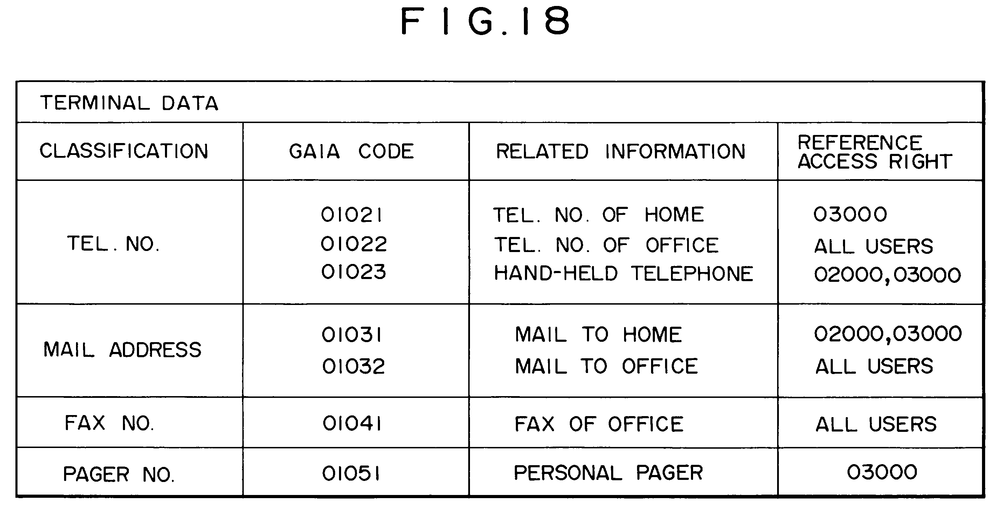

A terminal data is the data regarding the Gaia code of the terminal to which this user is incorporated as shown in Fig. 18. This terminal data is constituted of telephone number, mail address of terminal, facsimile apparatus number and pager number. Here, it is registered that the telephone number identified by the Gaia code "01021" is the home telephone number, while the telephone numbers identified by the Gaia codes "01022" and "01023" are the office telephone number and hand-held telephone number. Moreover, the reference access rights are respectively set to these telephone numbers. In the same manner, the related information and reference access right may also be registered to the mail address, facsimile apparatus number and pager number.

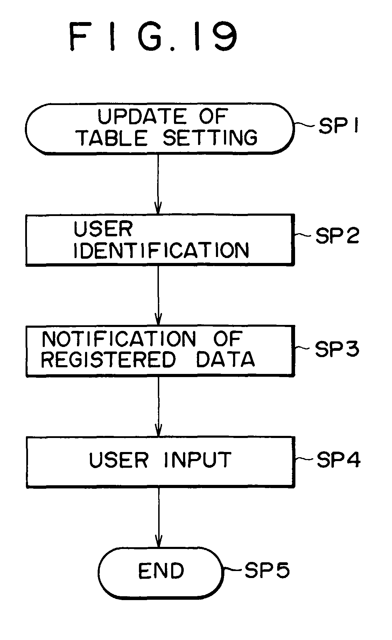

The user information management database 13B is set first to the default value when a user is registered to this server 1 and the setting is updated, at the time of registration and later, with the input of a user himself depending on the guide by voice. That is, Fig. 19 is a flowchart showing the setting update processing of the user information management database 13B. The central processing means 9 shifts to the step SP2 from the step SP1 in this processing sequence to execute the user identification.

Here, the central processing means 9 urges a user to select the input means in accordance with the guide by voice signal and text data. Here, the central processing means 9 receives, by user's selection, input of ID and password number, etc. with voice input using the keyboard or voice recognition process and retrieves this ID and password number depending on the retrieval table 13A and user information management database 13B to identify the user. In the case of access from the private terminal 15 and computer 4, the central processing means 9 automatically obtains the user ID and password number with the communication with the auto-log-in program of the private terminal 15 and computer 4. Moreover, in this user identification process, the central processing means 9 makes inquiry as required to the other servers 1A to 1F to execute the table setting update process in this registered server 1 for the users registered in the other servers 1.

When a user is identified as the registered user by this user identification process as explained above, the central processing means 9 moves to the step SP3 and notifies the menu which may be selected by the voice signal or text data. When a user selects here update of the user information management database with the key input or voice input, the central processing means 9 notifies a registered table. Notification is executed by the method selected by a user. For example, for the user who has made access from the computer 4 or private terminal 15, a schedule, for example, requested by user is displayed via the display screen of the computer 4 or private terminal 15.

For the user who has made access from a telephone terminal 5, contents recorded by voice is notified only for the range which is desired by a user depending on the interactive format through voice recognition and speech synthesis. In addition, for a user who has made access from the facsimile apparatus 6, contents registered by voice or image output from the facsimile apparatus 6 are notified, depending on selection by user, through a telephone terminal incorporated to the facsimile apparatus 6.

Subsequently, the central processing means 9 shifts to the step SP4 to accept addition and update of contents notified from the user and thereafter shifts to the step SP 5 to complete this processing sequence. Thereby, in the server 1, the user information management database is updated by user himself as required to update the telephone transfer destination. In this case, contents of addition and update are accepted by the voice recognition process in the services by voice or by the character recognition in the character recognizing means 14 for the access from the facsimile apparatus 6.

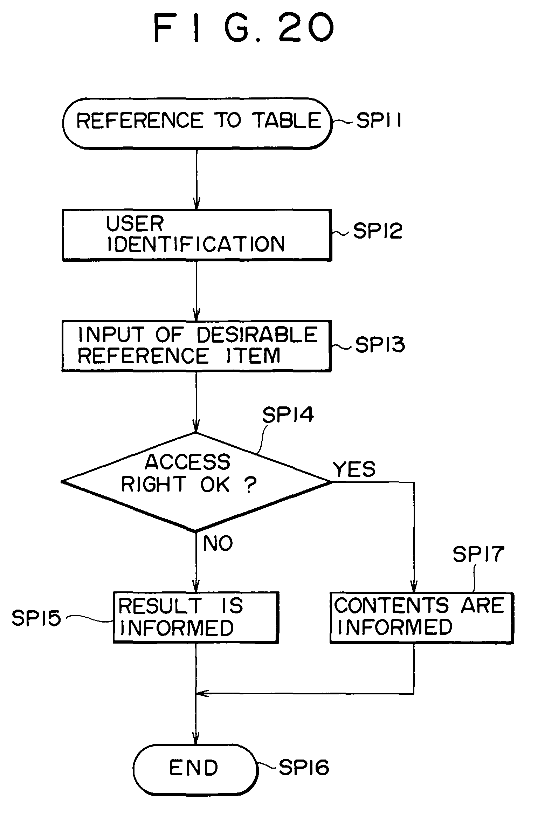

On the other hand, when it is requested to know the schedule of a user, it is considered to make an inquiry to the user information management database from a third party because of the fact that the electronic mail is not transferred or by checking of the mail address of the direct mails. In this case, the central processing means 9 executes the processing sequence shown in Fig. 20 and permits only the inquiry to the authorized users by setting of the access right.

Namely, the central processing means 9 shifts to the step SP12 from the step SP11 to execute the user identification process as in the case of the setting update process of the user information management database explained above. Subsequently, the central processing means 9 shifts to the step SP13 to accept input of items desired for reference. Here, the central processing means 9 requests identification of user information desired for reference depending on the Gaia code (for example, 01000) of user who desires reference, Gaia code of a terminal and ID, etc. and makes access to the corresponding user information management database 13B via this identification. Moreover, the central processing means 9 accepts input of reference items such as schedule, transfer destination and conditions, etc. and makes access to the corresponding items of the user information management database 13B depending on this input.

Subsequently, the central processing means 9 shifts to the step SP14 to judge whether the user identified in the step SP12 is the one allowed to make access or not depending on the access right of the corresponding item. When the negative result is obtained, the central processing means 9 shifts to the step SP15 to transmits the message indicating that reference is not allowed to the user terminal which has made access using the voice signal, text data or image data corresponding to this user terminal and thereafter to shift to the step SP16 to complete the processing sequence.

On the other hand, when the access right is set to permit the reference to this user, the central processing means 9 shifts to the step SP17 from the step SP14 to notify the preset items with the voice signal or text data and further to notify, when a user desires, such items with the image data of the facsimile apparatus in response to the selecting operation by user and thereafter shifts to the step SP16.

Thereby, in the server 1, the users to whom the access right is set and the identified person are allowed to make reference to contents of the user information management database.

### (4) Electronic mail (E-mail)

In this embodiment, the central processing means 9 executes, after it is started by calling from the telephone network, the user identification process to the terminals. Here, when a user is identified, the central processing means 9 presents the selection menu and accepts an electronic mail originated from a user when the user selects origination of the electronic mail.

In this series of processes, when the computer 4 originates this electronic mail, the central processing means 9 receives destination address and contents of electronic mail by mainly transmitting and receiving the text data to and from the computer 4.

Namely, the central processing means 9 urges first a user to select the destination input method through communication with the communication program in the computer 4. When the user selects input by the Gaia code, the means 9 subsequently urges the user to input the destination by the Gaia code. When the user has selected the ordinary input of the electronic mail address of the internet, etc., the central processing means 9 urges the input of destination by the corresponding method in the same manner.

Upon acceptance of the input of destination, the central processing means 9 subsequently urges the user to select the subject line input method. Here, when the user selects input by text data, the means 9 subsequently urges input of the subject line consisting of the headline of the electronic mail to accept this input. Moreover, the central processing means 9 accepts contents of the electronic mail in the same manner and stores this contents in the external memory apparatus 13.

Thereafter, the central processing means 9 makes communication with the server which is administrating the Gaia codes of the destination as in the case described in regard to Fig. 8 to obtain the electronic mail address corresponding to this Gaia code and forms a draft of the electronic mail in the external memory apparatus 13 depending on this electronic mail address. Subsequently, the central processing means 9 originates this electronic mail to the internet 2. When the destination user is the one administrated by this server 1, the central processing means 9 holds in direct the draft of electronic mail in the external memory apparatus 13.

Finally, the central processing means 9 notifies completion of transmission to the user who has input this electronic mail and thereafter closes the line to the user by means of the user's operation. In the transmission of electronic mail from the computer 4 explained above, when a user selects the transmission of electronic mail by the facsimile apparatus and transmission of mail by voice, the central processing means 9 accepts the electronic mail with the same process as the transmission of electronic mail from the facsimile apparatus 6 and telephone terminal 5 explained later.

In this embodiment, the central processing means 9 makes access to the user information management database 13B in common to the input of the subject by various input methods to adds, to this subject, various data as much as possible, for example, header indicating type of terminal used by access for making access, time information indicating day and time of access, sex and age of a user and language used for the electronic mail, etc.

When a user does not transmit an electronic mail from the previously registered terminal, the information of this kind is obtained and added through the line and contact for starting the communication as in the case of storing the information of this type into the user information management database 13B. Moreover, when the information is not yet registered in the user information management database 13B, the data indicating type of apparatus is added by the method as explained above and sex, age and language used are added by user input. When voice input method is used, such data are judged and added on the basis of the voice recognition method.

Thereby, the server 1 assures convenience for retrieval on the occasion of transmitting the electronic mail.

### (4-1) Transmission of electronic mail from telephone terminal

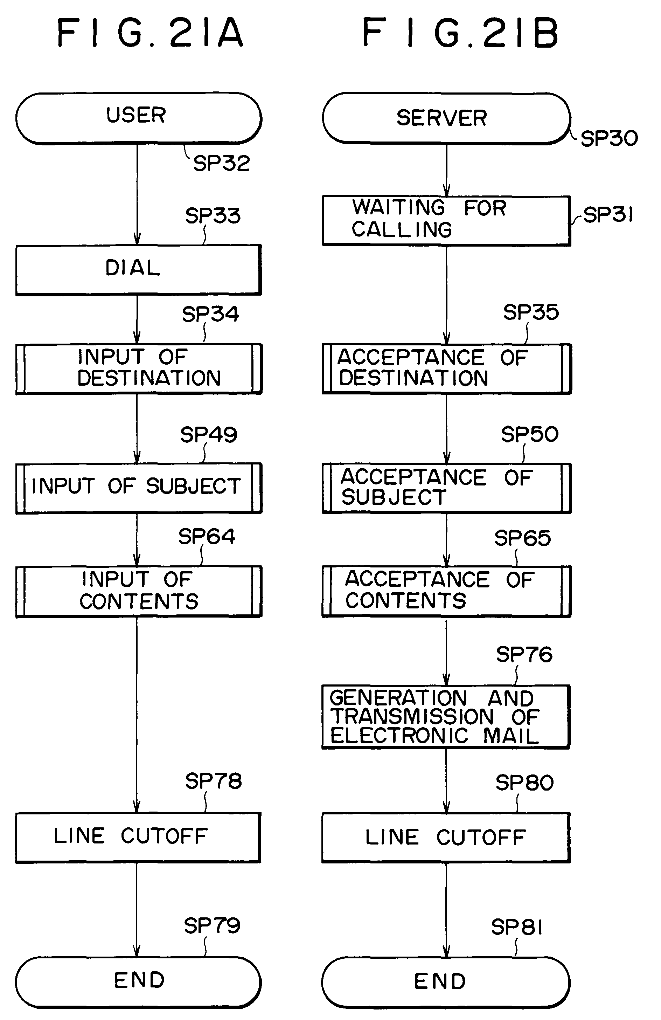

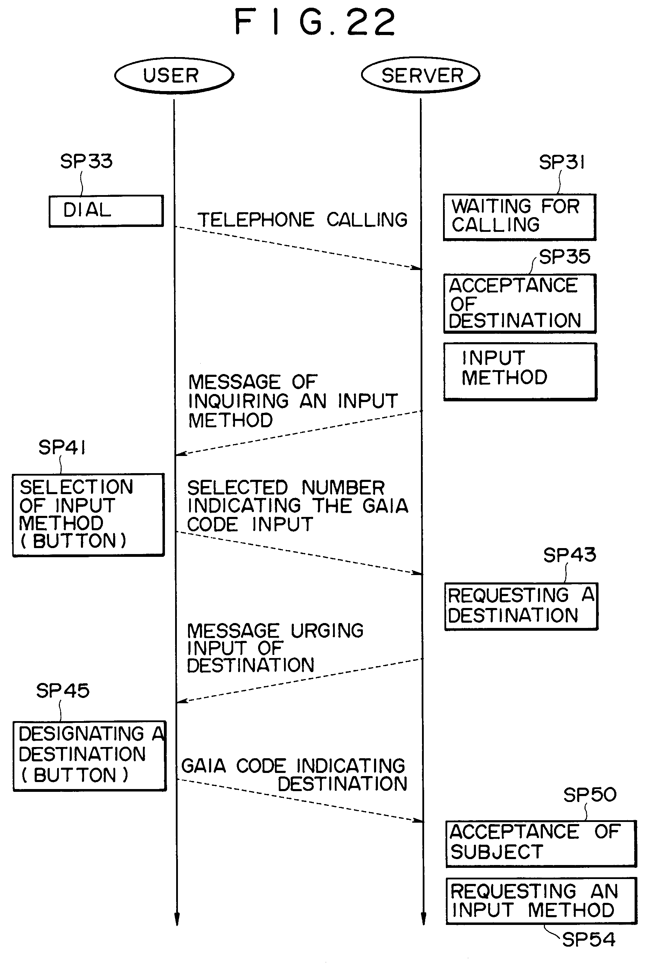

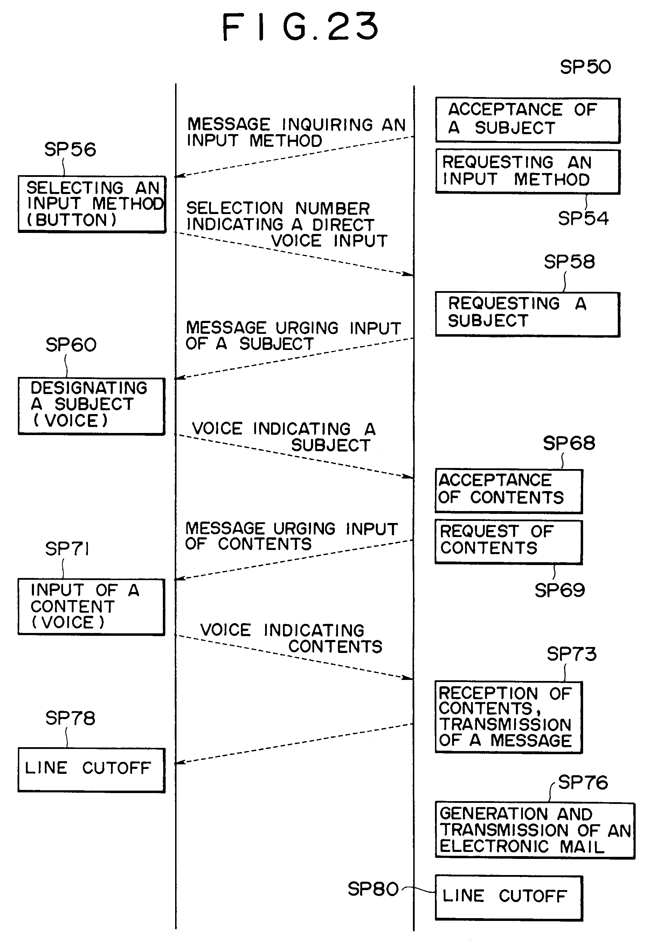

Fig. 21 is a flowchart showing the operation sequence of user and server 1 for accepting an electronic mail from a telephone terminal 5. Fig. 22 is a flowchart showing communication between the telephone terminal 5 and server 1. Fig. 23 is a flowchart showing continuous operations of Fig. 22. In Fig. 22 and Fig. 23, the processing steps in common to Fig. 21 are indicated by the same code In this case, the central processing means 9 shifts to the step SP31 from the step SP30 to wait for the calling. Under this condition, the user shifts to the step SP33 from the step SP32 to dial by operating the operator of the telephone terminal 5. Thereby, the central processing means 9 is activated by the calling from the telephone terminal.

Subsequently, the central processing means 9 executes the user identification process to this terminal and presents the selection menu, upon completion of user identification. Moreover, the central processing means 9 accepts an electronic mail issued from a user, when a user selects origination of electronic mail in response to this menu. For the access from this telephone terminal, the central processing means 9 activates the speech synthesis means 11 or recording and reproducing means 12 and presents the selection menu with the guide by voice. Moreover, in this case, the central processing means 9 detects the operator of the telephone terminal 5 operated by user in response to the guide by voice with the DTMF signal detected through the telephone network connecting means 3 and thereby accepts the selected input by user.

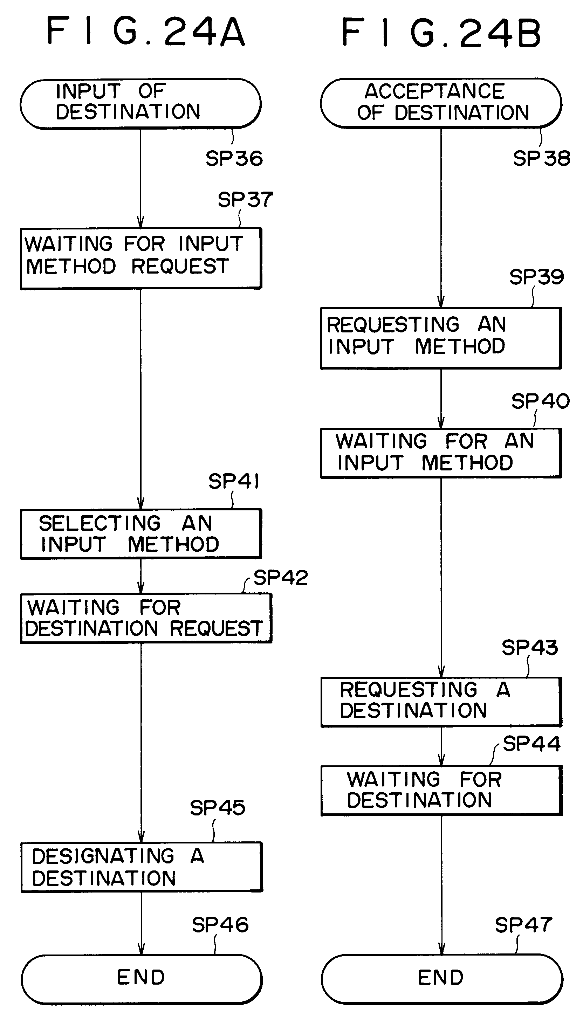

In this series of operations, the central processing means 9 accepts, in the step SP35, the destination input by user in the step SP34. The destination input and destination acceptance processes are executed by the processing sequence of Fig. 24. Namely, the user shifts to the step SP37 from the step SP36 to wait for the input method request, while the central processing means 9 shifts to the step SP39 from the step SP38 to request selection of input method.

In the case of input from the telephone terminal 5, the server 1 is capable of selecting input by the operation of operator of the telephone terminal or input utilizing the voice recognition and moreover, in this case, the destination input by the Gaia code or input of electronic mail address such as an ordinary internet may be selected. The central processing means 9 activates the speech synthesis means 11 or recording and reproducing means 12 to urge selection of input method with the guide by voice and thereafter the means 9 shifts to the step SP40 to waits for selection of the input method. Here, a user shifts to the step SP41 from the step SP37 to select the input method by operating, for example, an operator of the telephone terminal 5 and thereafter shifts to the step SP42 to wait for destination input request.

In response to the user, the central processing means 9 shifts to the step SP43 from the step SP40 to request, with the guide by voice, input of destination depending on the input method selected by user and thereafter shifts to the step SP44 to wait for input of destination. When the user selects input of destination of the Gaia code, the central processing means 9 transmits a voice message urging input of the Gaia code at the time of requesting input of destination and waits for input of destination.

Thereby, a user shifts to the stop SP45 from the step SP42 to input the destination with the Gaia code by operating the operators of numerals "0" to "9" or operators of "*" or "#". Thereafter, a user shifts to the step SP46 to complete the process for inputting the destination. In response to this process, the central processing means 9 accepts the destination and then shifts to the stop SP47 to complete the destination acceptance process.

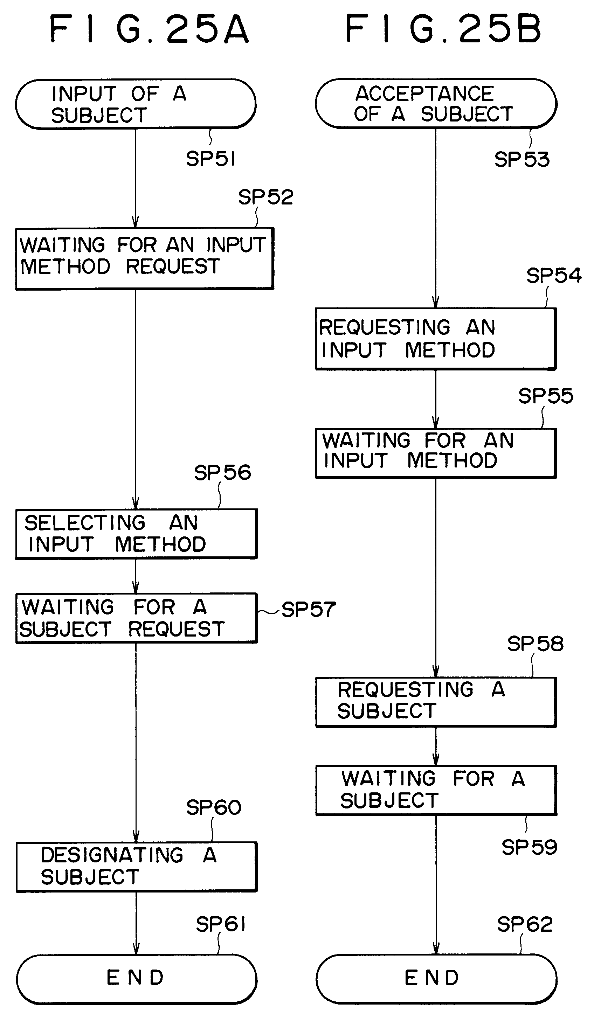

When input and acceptance of destination is completed as explained above, a user shifts to the step SP49 (Fig. 21) to input the subject line, while the central processing means 9 accepts input of the subject line in the step SP50. The process for inputting the subject line and accepting the subject line is executed by the processing sequence shown in Fig. 25.

Namely, a user shifts to the step SP62 from the step SP51 to wait for request of the input method, while the central processing means 9 shifts to the step SP54 from the step SP53 to request selection of the input method and thereafter shifts to the step SP55 to wait for the response. In this case, the central processing means 9 also urges, with the guide by voice, a user to select the input method. In this embodiment, input by formatted sentence such as a telegram or input of free sentence by voice may be selected.

Here, upon selection of the input method in the step SP56 in response to the input method selection request, a user shifts to the step SP57 to wait for the request for input of subject, while the central processing means 9 shifts to the step SP58 from the step SP55 to request input of the subject in accordance with the input method selected by user and thereafter shifts to the step SP59 to wait for response. When a user selects input of subject by voice, he responses to the request for input of subject and inputs a voice message in the step SP60 and finally notifies completion of input by operating, for example, the operator "#" and thereafter shifts to the step SP61 to complete the processing sequence. Meanwhile, the central processing means 9 activates the recording and reproducing means 12 to record a voice signal input from a user and shifts to the step SP62 to complete the processing sequence.

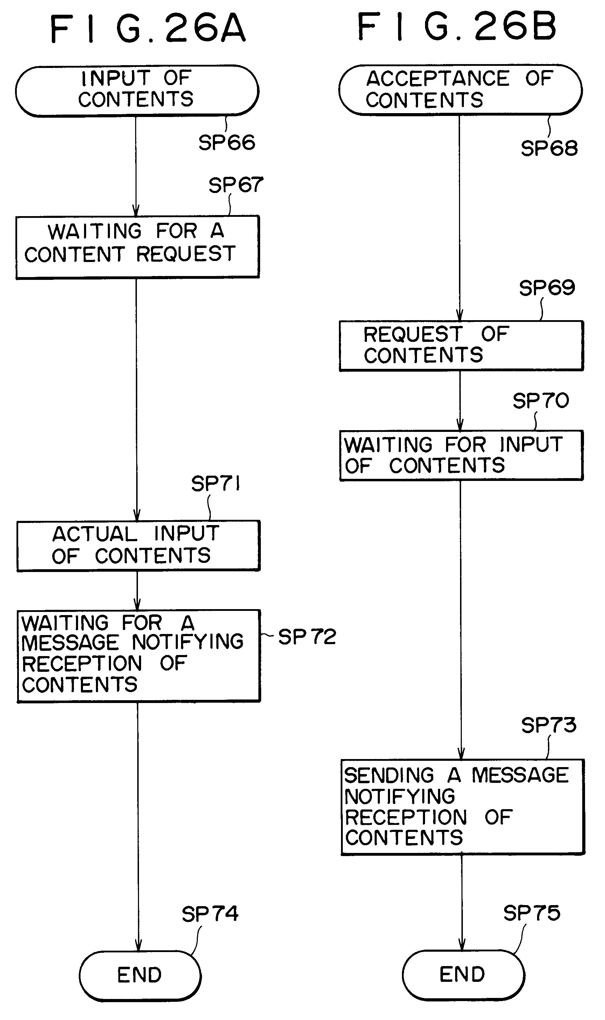

When input and acceptance of subject are completed, a user shifts to the step SP64 (Fig. 21) to input contents of an electronic mail, while the central processing means 9 accepts input of contents in the step SP65. Input and accepting process of contents are executed by the processing sequence shown in Fig. 26. Namely, a user shifts to the step SP67 from the step SP66 to wait for the request for input of contents, while the central processing means 9 shifts to the step SP69 from the step SP68 to request input of contents with the guide by voice and thereafter shifts to the step SP70 to wait for response. Here, a user inputs, response to the input request for contents, a voice message in the step SP71 and notifies completion of input by operating the operator "#", for example, as in the case of input of subject and then shifts to the step SP72 to wait for the response.

Meanwhile, the central processing means 9 drives the recording and reproducing means 12 to record the voice signal input from a user and thereafter shifts to the step SP73 to sending a message notifying that contents have been received. In response to this process, a user shifts to the step SP 74 from the step SP72 to complete this processing sequence, while the central processing means 9 also shifts to the step SP75 from the step SP73 to also complete this processing sequence.

Upon completion of input and acceptance of contents, the central processing means 9 shifts to the step SP76 (Fig. 21) to convert the input items into the predetermined format to generate an electronic mail and then send this electronic mail. In this processing, the central processing means 9 obtains, as explained in regard to Fig. 8, the electronic mail address corresponding to the Gaia code through the communication with the server which is administrating the Gaia code of destination and forms a draft of the electronic mail in the external memory apparatus 13 based on this electronic mail address. In regard to the voice recorded in the recording and reproducing means 12, the central processing means 9 executes the analog-digital conversion to this voice signal to obtain the file of ISDN µ-law format and thereafter converts this file into the MIME (Multipurpose Internet Mail Extension) format to assign the voice signals to subject and contents of the electronic mail based on such format. Upon processing of the voice signal as explained above, the central processing means 9 originates this electronic mail to the Internet 2. When the destination user is administrated by the server 1, the central processing means 9 holds in direct the document of electronic mail in the external memory apparatus 13.

Thereby, a user shuts off the line in the step SP78 corresponding to the message indicating reception of contents and thereafter shifts to the step SP79 to complete this processing sequence. In the same manner, the central processing means 9 also shifts to the step SP80 from the step 76 to shut off the line and thereafter shifts to the step SP81 to complete this processing sequence.

Thereby, the server 1 inputs the destination of the Gaia code in the telephone terminal 5 with the operation of operator depending on the guide by voice and thereafter inputs the subject sentence and main sentence of the electronic mail by voice to originate the electronic mail.

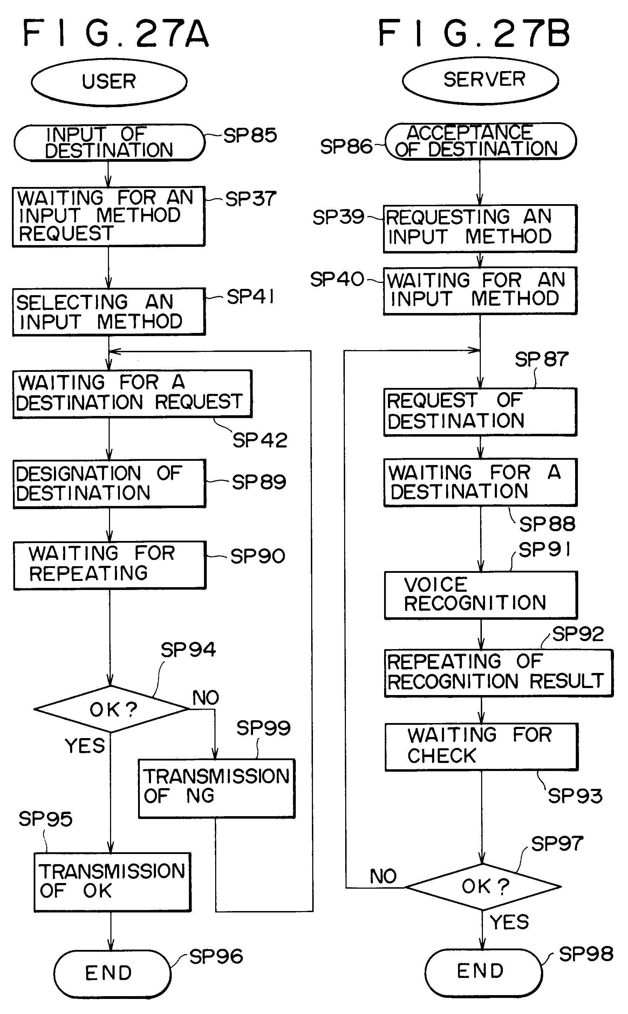

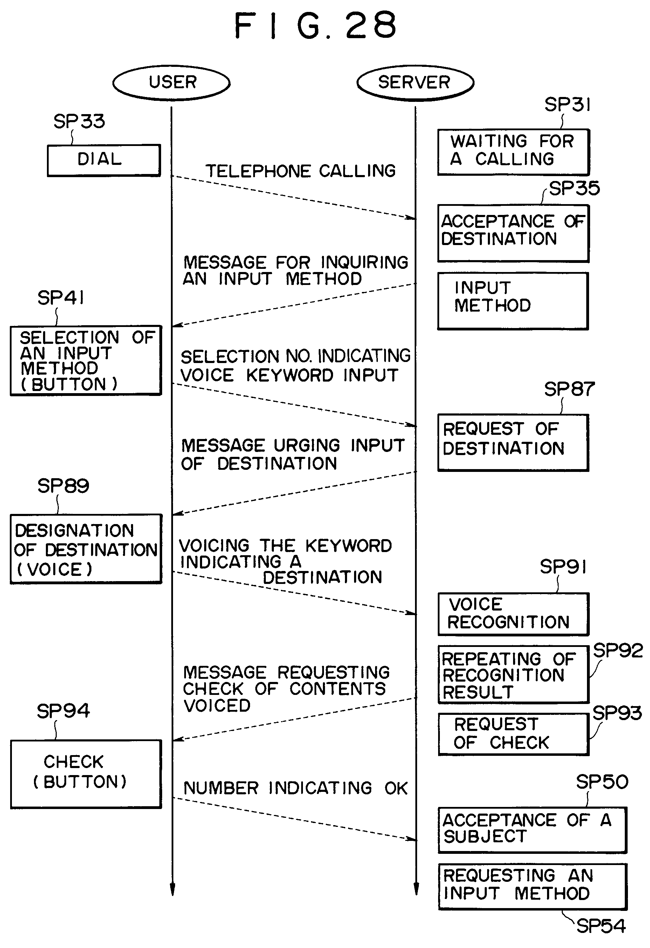

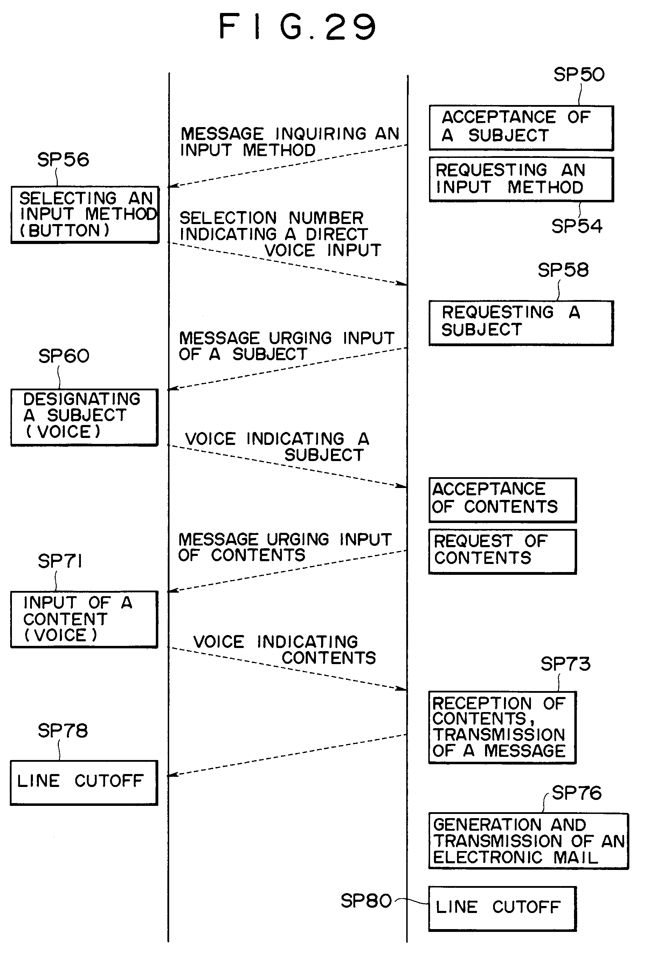

Fig. 27 is a flowchart showing the processing sequence of destination input with the keyword input by voice. Fig. 28 and Fig. 29 are flowcharts showing communication between the telephone terminal 5 and server 1 when the destination input is selected. In Fig. 27 to Fig. 29, the processing sequence corresponding to that of Fig. 21 to Fig. 26 is given the similar codes.

This processing sequence corresponds to the case where a user has operated the operator indicating the voice keyword input depending on the guide by voice for the input method request in the step SP39 for the selection of the destination input method in the step SP41 after the user and central processing means 9 have started this destination input processing sequence in the steps SP85 and SP86. In this case, the central processing means 9 urges a user to input the keyword indicating the destination at the time of requesting the destination in the step SP87 corresponding to the selection by user and then shifts to the step SP88 to wait for the response.

The keyword used here is a term preset in the system and the destination of electronic mail can uniquely be determined using this keyword. In this embodiment, an address, user name, handle name, etc. which are similar to those used in the telephone number guide, for example, in the public telephone network may be used as the keyword. A user can select individual keyword by previously registering it. In response to destination request, a user voices the keyword indicating the destination in the step SP89 and thereafter notifies the end of input by operating the operator "#" and shifts to the stop SP90 to wait for repeating of the keyword in the server 1.

In response to this process, the central processing means 9 activates operation of the voice recognition means 10 and executes voice recognition for the voice signal input sequentially and detects operation of the operator "#" in the step SP91. Thereafter, the central processing means 9 shifts to the step SP92 to activate the speech synthesis means 11 to execute the speech synthesis for the recognized contents and output this contents. Moreover, the central processing means 9 also activates, in the subsequent step SP93, operations of the speech synthesis means 11 or recording and reproducing means 12 to urge these means to check whether speech recognition has been executed normally or not with the guide by voice.

In response to this process, a user shifts to the step SP95, upon judgment that correct voice recognition has been performed, to operate the operator indicating acknowledgment depending on the guide by voice and thereafter shifts to the step SP96 to complete the destination input process. Meanwhile, the central processing means 9 detects, in the step SP97, the check operation by user and shifts, when a user has input the destination accurately, to the step SP98 to complete this processing sequence.

On the other hand, when it is judged that a user cannot input destination accurately, a user shifts to the step SP 99 from the step SP94 to operates the operator indicating that the repeated destination is not acknowledged and then returns to the step SP42 to input again the destination. Corresponding to this process, the central processing means 9 returns again to the step SP87, upon detection of the operation by this user indicating that destination is not acknowledged in the step SP97, to output again the destination request.

Thereby, the server 1 is allowed to also input the destination by voice and can easily input the destination using the keyword. Accordingly, the central processing means 9 is capable of making access to the user information management database 13B using the keyword input and issuing an inquiry as required to the server 1 to generate an electronic mail address.

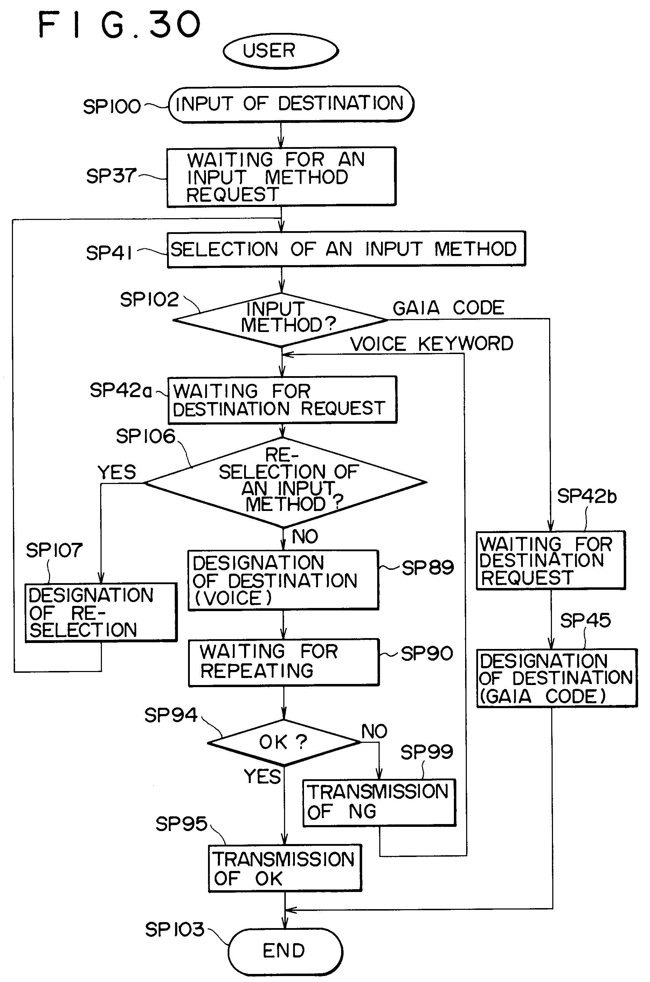

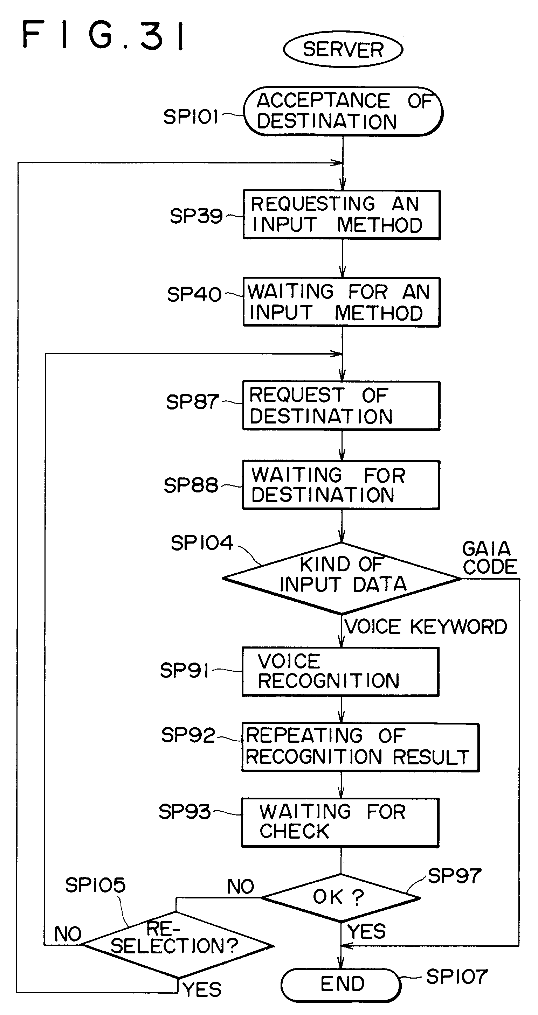

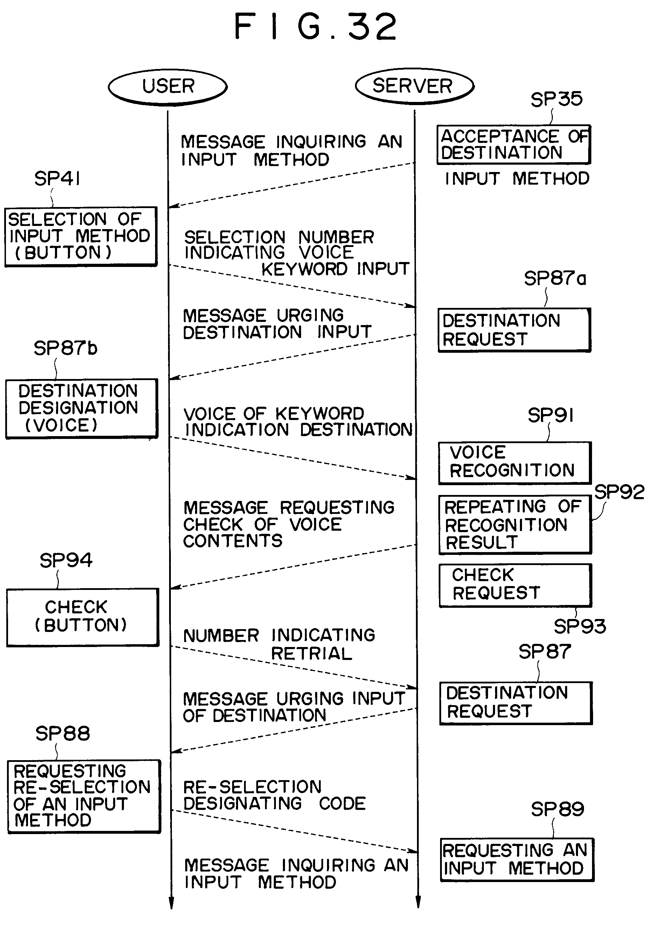

However, it is also considered that correct voice recognition is impossible even if voice input is repeated as explained above. This embodiment is therefore structured so that the input method may be changed in the course of the input operation depending on the selection by a user. Fig. 30 and Fig. 31 are flowcharts showing the processing sequence when the input method is changed. Fig. 32 is the flowchart showing the communication sequence in this process. In Fig. 30 to Fig. 32, the processes similar to that of the above sequence are designated by the same codes.

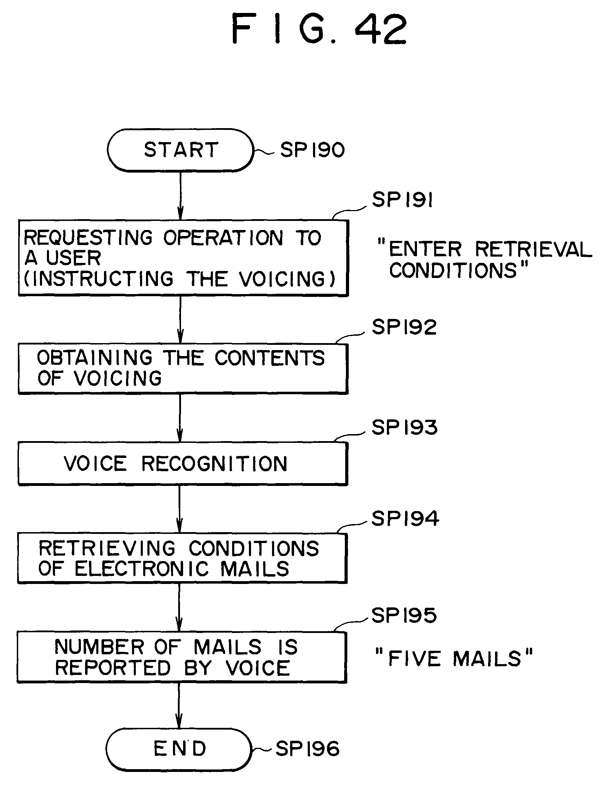

Namely, in this case, a user and the central processing means 9 respectively start the destination input process in the step SP100 and the step SP101 and the central processing means 9 issues the destination input method selection request in the step SP39. In response to this operation, a user notifies the input method in the step SP41. When input by the Gaia code is selected here, a user shifts to the step SP42b from the step SP102 to input the destination with the Gaia code as in the case described in regard to Fig. 42 and thereafter shifts to the step SP103 to complete this processing sequence. In response to this operation, the central processing means 9 shifts to the step SP104 from the step SP88 to accept this input and then shifts to the step SP106 to complete this processing sequence.

Meanwhile, when a user selects the destination input by the voice keyword, a user shifts to the step SP42a from the step SP102 to input the destination with the processing sequence similar to that described in regard to Fig. 27. In the same manner, the central processing means 9 shifts to the step SP91 from the step SP104 to accept destination input by user with the voice recognition.

If it is judged that the voice recognition is not correctly executed at the time of inputting the destination, a user shifts to the step SP99 from the step SP94 to operate the corresponding operator to notify the server 1 and thereafter returns to the step SP42a. In response to this operation, the central processing means 9 returns to the step SP87 from the step SP97.

In the course of this process, the central processing means 9 notifies a user, in the step SP105, whether the destination input method with guide by voice is selected or not under the condition that a user is waiting for the destination request. A user receives this notice in the step SP106. When a user desires the repetitive selection, a user shifts to the step SP107 to operate an operator to instruct the repetitive selection. Thereby, the central processing means 9 obtains acknowledgment result in the step SP105 and returns to the step SP39.

Here, the central processing means 9 newly issues the input method request. In response to this operation, a user returns to the step SP41 from the step SP107 to newly select the input method. If a user does not admit necessity of repetitive selection of input method, a user shifts to the step SP89 from the step SP106, while the central processing means 9 shifts, in response to a user, to the step SP87 from the step SP105 to repeat again the voice recognition process.

Thereby, the server 1 inputs, if voice recognition is difficult, the destination by the key input of the Gaia code to surely originate an electronic mail from the telephone terminal 5.

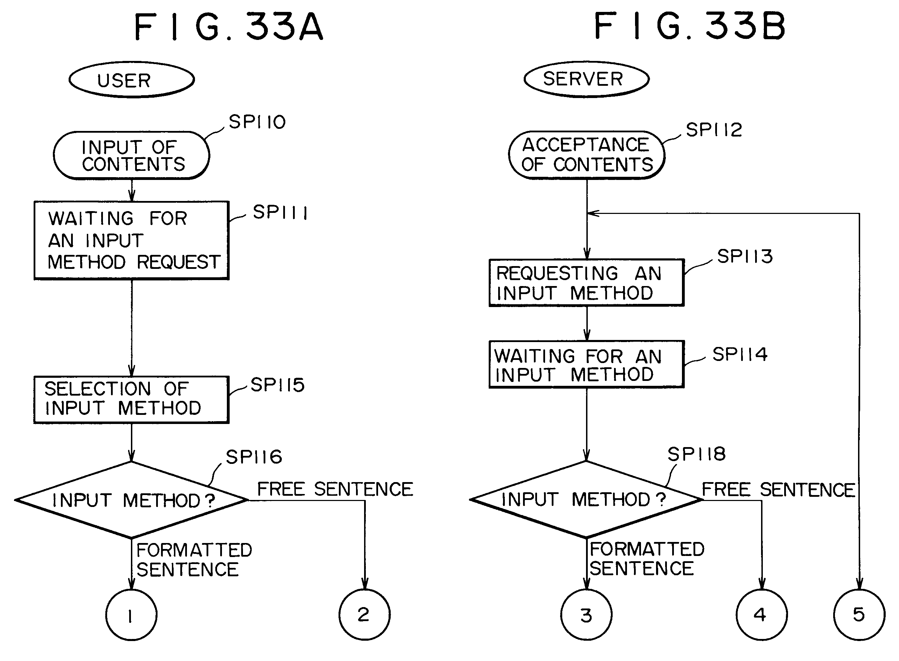

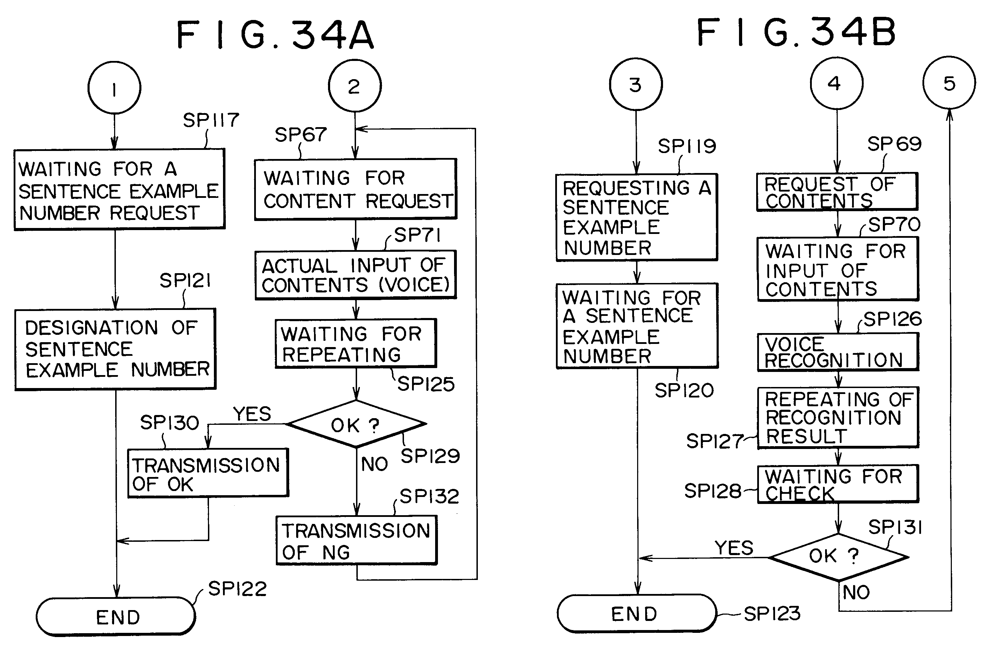

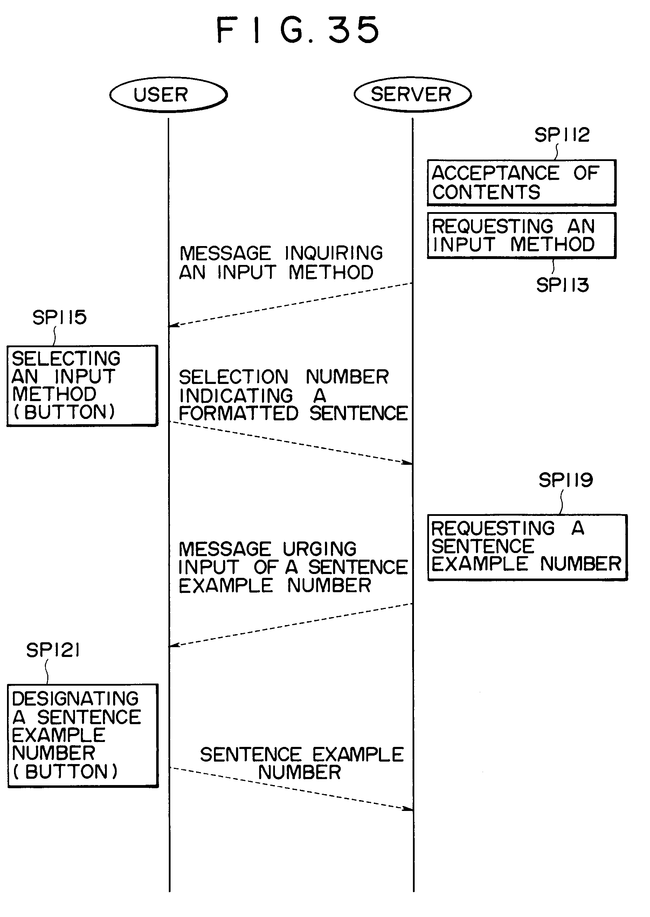

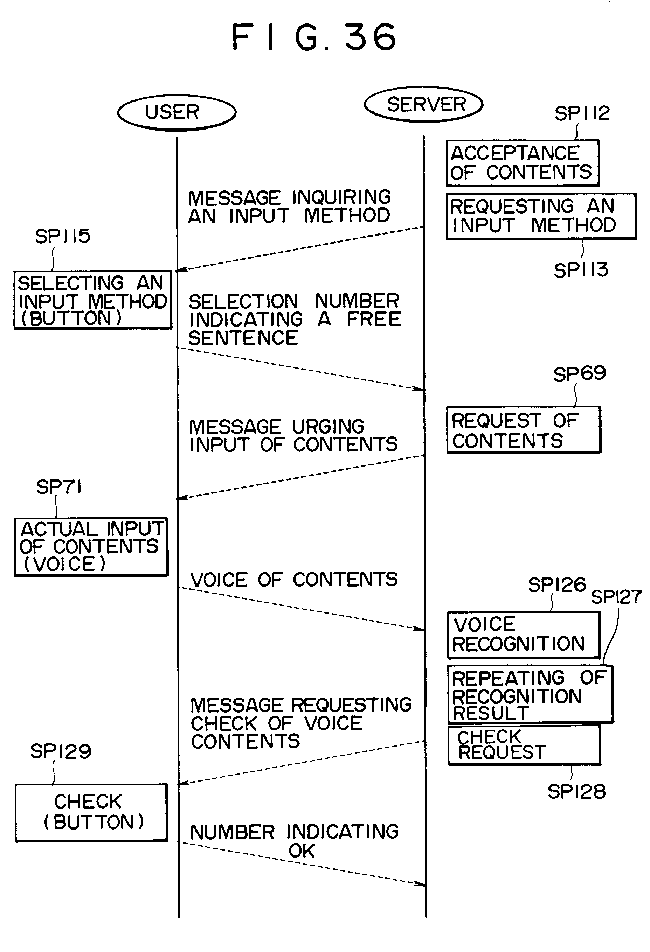

Fig. 33 is a flowchart showing the processing sequence in which a user selects contents of an electronic mail from the formatted sentence and the free sentence. Fig. 34 is a flowchart showing the continuous processing sequence of Fig. 33. Fig. 35 and Fig. 36 are flowcharts showing the communication sequence when a user has selected the formatted sentence and free sentence. Namely, the server 1 can select contents of an electronic mail, in addition to the subject, in the form of the formatted sentence and free sentence. In Fig. 33 to Fig. 35, the same processes as that in Fig. 23 and Fig. 26 are given the corresponding codes.

Namely, a user shifts to the step SP111 from the step SP110 to wait for the input method selection request. While the central processing means 9 shifts to the step SP113 from the step SP112 to output the input method selection request. In this case, the central processing means 9 activates the speech synthesis means 11 or recording and reproducing means 12 to urge operation of operator with the guide by voice and thereafter shifts to the step SP114 to wait for selection of input method. In response to this process, a user selects the input method in the step SP115. When a user selects the input by formatted sentence, a user shifts to the step SP117 (Fig. 34) from the step SP116 to wait for input request of the sentence example number.

Meanwhile, the central processing means 9 shifts, in response to the user's operation, to the step SP119 from the step SP118 to output the input request for the sentence example number and thereafter shifts to the step SP120 to wait for the response. Here, a sentence example is identified depending on a pamphlet distributed previously to a user. In this embodiment, the formatted sentence itself corresponding to the sentence example number can be confirmed through speech synthesis in response to user's operation.

In this case, a user shifts to the step SP121 to input the sentence example number by operating the operator of the telephone terminal 5 and thereafter shifts to the step SP122, after the check from the server side, to complete this processing sequence. In response to this operation, the central processing means 9 waits for input of the sentence example in the step SP120. Upon reception of the sentence example number, the central processing means 9 shifts to the step SP123, after the check by user, to complete this processing sequence. Thereby, the server 1 is capable of transmitting a condolaltory telegram, for example, by an electronic mail.

Meanwhile, upon selection of a free sentence, a user shifts to the step SP67 from the step SP116 to wait for an input request. Meanwhile, the central processing means 9 shifts to the step SP69 from the step SP118 to issue an input request by voice input and shifts to the step SP70 to wait for the response.

In response to this operation, a user shifts to the step SP71 from the step SP67 to generate contents of an electronic mail by generating voices and then shifts to the step SP125 to wait for repetition of voices. On the other hand, the central processing means 9 executes the voice recognition process by the voice recognition means 10 in the step SP126 and executes speech synthesis for the voice recognition result in the subsequent step SP127 and then shifts to the step SP128 to wait for response.

A user shifts, upon judgment that input is made in correct by the repetition of voices, to the step SP130 from the step SP129 to generate a notice of acknowledgment with operation of operator and thereafter shifts to the step SP122 to complete this processing sequence. In response to this process, the central processing means 9 shifts to the step SP 123 from the step SP131, upon reception of the notice of acknowledgment, to complete this processing sequence.

If contents are not recognized correctly by the voice recognition, a user shifts to the step SP123 from the step SP129 by operating the operator indicating negative response to the repeated voices to notify incorrect voice recognition to the server 1 and then returns to the step SP67. In response to this operation, the central processing means 9 shifts to the step SP113 from the step SP131 to newly wait for selection of input method.

Thereby, in this embodiment, an electronic mail may be originated by the formatted sentence or free sentence with the voice input from the telephone terminal 5. Moreover, an electronic mail may be originated by voices in the same manner with the telephone terminal incorporated to the facsimile apparatus 6 and the private terminal 15.

### (4-2) Transmission of electronic mail from a facsimile apparatus:

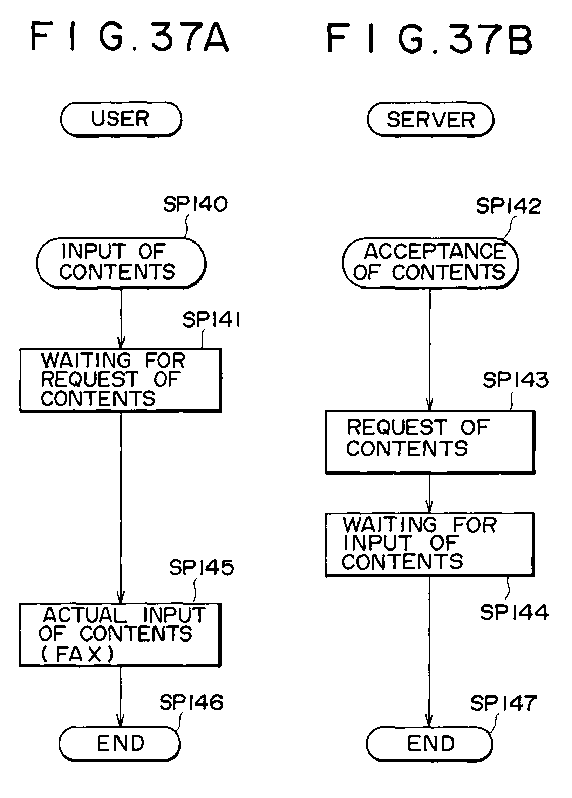

Fig. 37 is a flowchart showing a part of the electronic mail transmission sequence from a facsimile apparatus 6. In this embodiment, the destination and subject are input from a telephone terminal incorporated to the facsimile apparatus 6 as in the case of the transmission of electronic mail from a telephone terminal 5 explained above. With execution of this processing sequence, an image data of the facsimile apparatus is assigned to contents of an electronic mail.

Namely, a user shifts, upon completion of input of destination and subject, to the step SP141 from the step SP140 to wait for input request for contents via the telephone terminal incorporated to the facsimile apparatus 6. Meanwhile, the central processing means 9 shifts, upon completion of input of destination and subject, to the step SP143 from the step SP142 to output the input request of contents with guide by voice and then shifts to the step SP144 to wait for response.

In response to this operation, a user operates the transmission button of the facsimile apparatus in the step SP145 to transmit an image of document and thereafter shifts to the step SP146 to complete this processing sequence. Corresponding to this operation, the central processing means 9 inputs the image data of document from the waiting condition and thereafter shifts to the step SP147 to complete this processing sequence. Thereby, the central processing means 9 assigns this image data to the contents of an electronic mail and also checks the electronic mail address. Thereafter, the central processing means 9 originates the electronic mail to the Internet 2 or stores it in the external memory apparatus 13.

Thereby, in this embodiment, a facsimile apparatus 6 is also capable of transmitting an electronic mail.

Moreover, in this embodiment, the central processing means 9 is also capable of inputting a destination of electronic mail with an image data by character recognition of the image data inputted as explained above through user's selecting operation, thereby improving operation flexibility for a user.

### (4-3) Services by MAM server

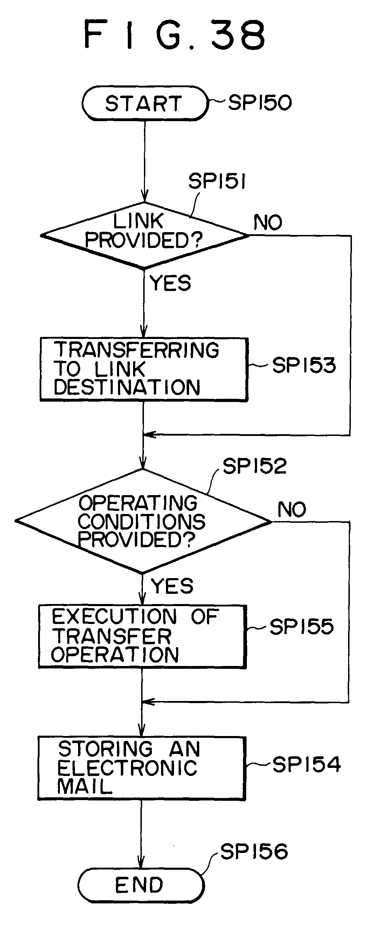

An electronic mail transmitted to the corresponding server as explained above is held in the external memory apparatus 13 of each server. In this case, the MAM server held by each server executes the processing sequence shown in Fig. 38 and thereby various kinds of services may be offered depending on the contents registered in the user information management database 13B.

Namely, in the MAM server, the central processing means 9 shifts, upon distribution of an electronic mail, to the step SP151 from the step SP150 to make access to the user information management database of the corresponding user depending on the address of electronic mail. Subsequently, the central processing means 9 judges whether an effective link destination is specified or not for each corresponding user. When negative result is obtained, the central processing means 9 shifts to the step SP152. Here, the effective link destination means the link destination satisfying the conditions in the non-terminal data of the user information management database.

When the effective link destination is specified, the central processing means 9 changes the destination of an electronic mail to this link destination. Thereby, for example, an electronic mail can be originated with the Gaia code for specifying a group. In this case, when a plurality of transfer destinations are specified to this Gaia code, so-called multi-address calling can be realized to improve the processing flexibility of electronic mails of this kind. Moreover, when the Gaia code identifying the region is indicated by the link, the multi-address calling can be made to the users in the specified region. Moreover, it is also possible to distribute an electronic mail to a hand-held telephone set at the distant area by transferring an electronic mail corresponding to the schedule and moreover, distribution of the electronic mail can be notified to a conference room only from a particular partner during the conference. In addition, the electronic mails distributed to the home telephone, office telephone and hand-held telephone and moreover the electronic mails originated to the mail addresses of each network from various networks may also be read at a time.

Subsequently, the central processing means 9 shifts, upon obtaining the negative result by checking designation of the operating conditions in the step SP152, to the step SP154 to record the is electronic mail into the external memory apparatus 13 and thereafter shifts to the step SP156 to complete the processing sequence.

On the other hand, when the operating conditions are registered, the central processing means 9 shifts, upon reception of the positive result in the step SP152, to the step SP155 to execute the specified operation for the transfer operation. Namely, when it is registered as the operating condition that the contents of the main sentence formed by the text data is converted to the image data corresponding to the facsimile apparatus, the central processing means 9 executes this data conversion process and then shifts to the step SP154 to record the electronic mail depending on the converted image data into the external memory apparatus 13.

Meanwhile, when it is registered that the ringing signal is once transmitted, the central processing means 9 executes this registered contents and thereafter shifts to the step SP154. When it is registered that the image data of facsimile apparatus is converted to the text data, the central processing means 9 converts this image data into the text data after the character recognition by the character recognition means 14 to store the electronic mail as the text data. Moreover, when it is registered that an address is registered as the transfer destination and it is output via the printer 17, the electronic mail and address are output to the printer so that the electronic mail can be originated by mail.

Even if the operating conditions are not specified different from above explanation, when the data format of the electronic mail is not applied to the terminal of the transmission destination, that is, when a facsimile apparatus is specified, for example, as the transmission destination or transfer destination in the user information management database 13B and content of the electronic mail is image data such as JPEG, the central processing means 9 executes the data conversion process depending on the previous registration of the transmission destination user and thereby can improve application flexibility for user.

### (4-4) Output of electronic mail

An electronic mail held by the server as explained above is then output by an access from an user. In this case, the server 1 outputs in direct, for the access from the computer 4, the text data and voice data, image data of ISDN µ-law format, etc. held in the external memory apparatus as in the case of the ordinary network. In the same manner, the server 1 provides the similar output for the access from the private terminal 15. Thereby, the private terminal 15 is capable of displaying contents of the text data and image data on the liquid crystal display panel and checking contents of the voice data through a handset.

In this case, the server 1 outputs the voice data with the voice signal, the text data with speech synthesis and the image data with the text data after character recognition depending on designation by user. In the same manner, in the case of access from a facsimile apparatus, the text data is output after it is converted to the image data corresponding to the facsimile apparatus. Thereby, the server 1 can improve the flexibility of operation.

For the access from a telephone terminal 1, the server 1 executes the electronic mail retrieval service and reading service by voice. For the access from a telephone terminal incorporated to the facsimile apparatus 6 and private terminal 15, such reading service is also offered depending on selection by user.

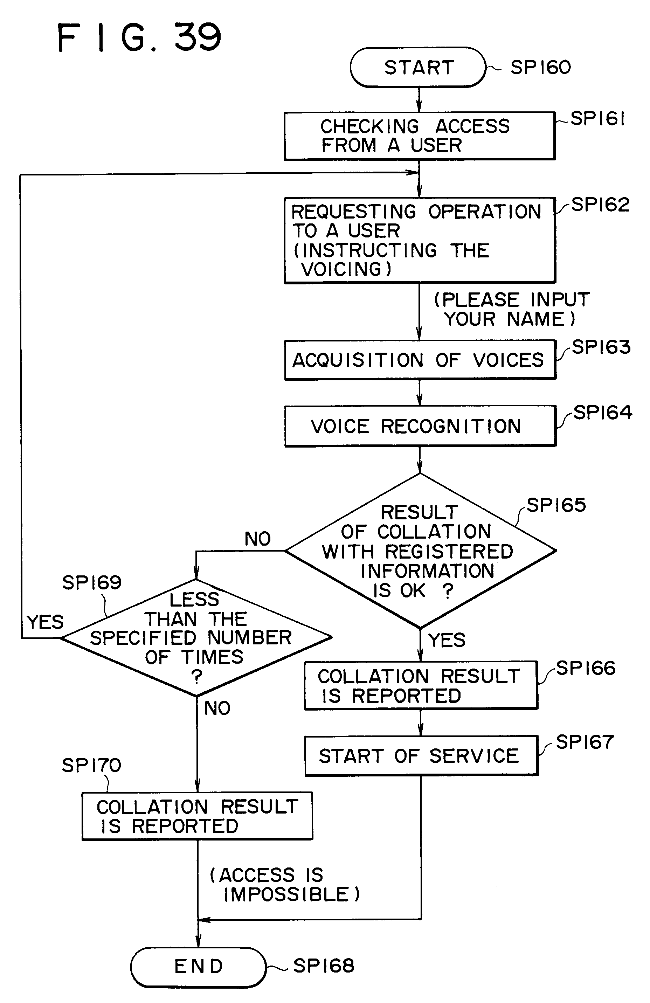

Fig. 39 is a flowchart showing the processing sequence of the user identification executed by the central processing means 9 when an electronic mail is output by access from a telephone terminal 5. In this user identification, the central processing means 9 shifts to the step SP161 from the step SP160 depending on the telephone call from a user to check the access from the user and thereafter shifts to the step SP162.

In this step, the central processing means 9 activates the speech synthesis means 11 or recording and reproducing means 12 to urge input of name with the guide by voice. In this step, a message "Your name, Please!" is output. Subsequently, the central processing means 9 shifts to the step SP163 to obtain the voice generated by a user and thereafter shifts to the step SP164 to execute voice recognition in the voice recognition means 10. Thereafter, the central processing means 9 shifts to the step SP165 to obtain the result of comparison with the voice recognition information registered previously in the user information management database 13B. When the positive result is obtained, the central processing means 9 shifts to the step SP166, upon identification as the correct user.

Here, the central processing means 9 activates the speech synthesis means 11 and reports the result of comparison to a user. Here, result is reported to a user with the message "You are identified". Thereby, the central processing means 9 shifts to the step SP167 to start the service desired by a user and thereafter shifts to the step SP168 to complete this processing sequence.

On the other hand, if voice recognition result does not match the registered voice recognition information, the central processing means 9 shifts to the step SP169 to judge whether the mismatching result of the current access is less than the preset specified number of times or not. When the positive result is obtained, the central processing means 9 shifts to the step SP162 to urge a user to input again the voice. Thereby, the means 9 repeats the processing sequence of the step SP162-SP163-SP164-SP165-SP169-SP162 until the correct user can be identified within the range of the specified number of times. If matching cannot be obtained even after the comparison is repeated until the specified number of times, the central processing means 9 judges that a user is not the correct user and shifts to the step SP170 from the step SP169. Here, the central processing means 9 reports the result of comparison and shifts to the step SP168 to complete this processing sequence. Here, the comparison result is reported to a user with the message "Access is impossible".

Thereby, the server 1 can improve security by utilizing the voice recognition. The central processing means 9 executes user identification by the voice recognition, for a user whose voice recognition information is not yet registered, with reference to sex and age of user registered in the user information management database in addition to the password number and ID input and registers this voice recognition result as the voice recognition information to improve security effect.

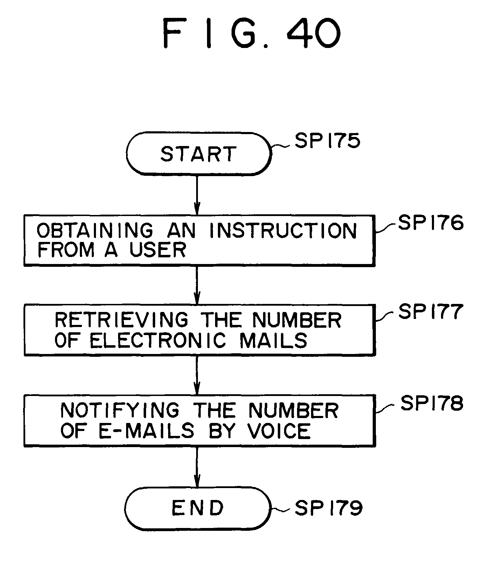

Upon completion of user identification, the central processing means 9 executes the guide by voice to wait for an instruction from a user by operation of the operator of the telephone terminal 5. Here, when a user inquires the number of electronic mails not yet read by operating the predetermined operator, the central processing means 9 executes the processing sequence of Fig. 40.

Namely, the central processing means 9 shifts to the step SP176 from the step SP175 to obtain an instruction from a user and thereafter shifts to the step SP177 to retrieve the number of electronic mails not yet read. Thereafter, the central processing means 9 shifts to the step SP178 to activate the speech synthesis means 11 or recording and reproducing means 12 to report the electronic mails not yet read from the speech synthesis means 11 or recording and reproducing means 12. Thereafter, the central processing means 9 shifts to the step SP179 to complete this processing sequence. Thereby, the server 1 is capable of checking the number of electronic mails not yet read even with the telephone terminal.

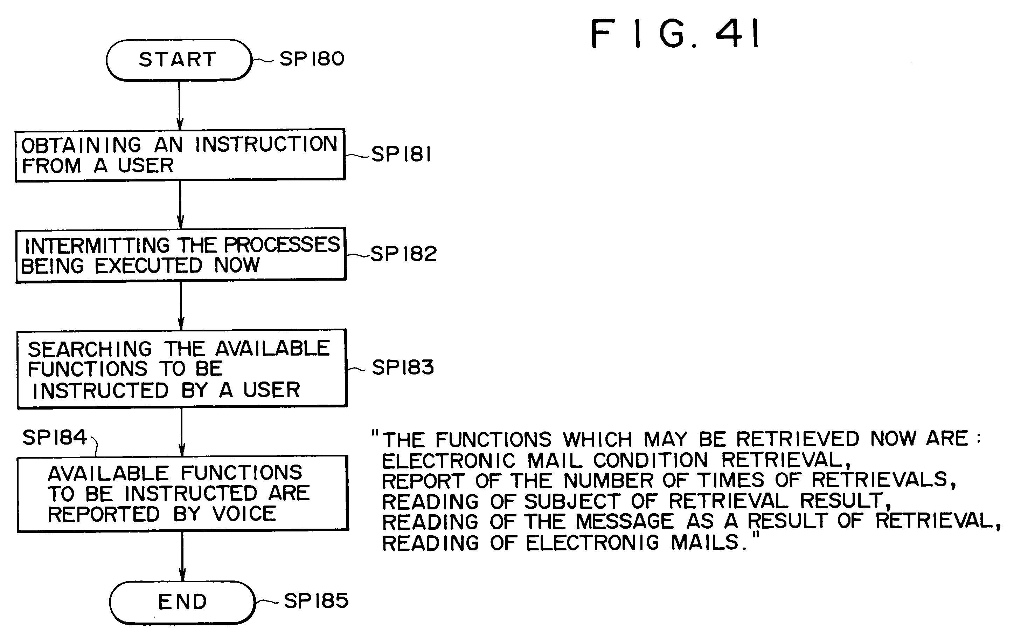

In the case of offering the service as explained above, when a user operates the predetermined operator, the central processing means 9 executes the processing sequence shown in Fig. 41 to notify by voice the current available services. Namely, the central processing means 9 shifts to the step SP181 from the step SP180 to obtain an instruction from a user and thereafter shifts to the step SP182. Here, the central processing means 9 interrupts the service being offered and shifts to the step SP183 to detect the kinds of services which can be presented to user.

Subsequently, the central processing means 9 shifts to the step SP184 to activate the speech synthesis means 11 or recording and reproducing means 12 in order to notify by voice the services which may be presented in current. Here, the message "The functions which may be presented now are retrieval of electronic mail conditions, report of number of electronic mails retrieved, reading of subject of retrieval result, reading of main sentence of retrieval result, reading of electronic mails and end of this service." is sent to a user. Thereby, a user who immediately wants to complete the services may complete the electronic mail service by notifying the completion of service depending on the guide. Thereby, the central processing means 9 sends a notice to a user as explained above and shifts to the step SP185 to complete this processing sequence.

When a user instructs, in response to this notice, the retrieval of electronic mail conditions by operating the operator, the central processing means 9 executes the processing sequence of Fig. 42. Namely, the central processing means 9 shifts to the step SP191 from the step SP190 to urge a user to input by voice the retrieval condition. This retrieval condition is previously instructed with the guide by voice to be selected from the predetermined keywords and thereafter shifts to the step SP193 to accept this retrieval condition by recognizing the voice of user through voice recognition in the voice recognition means 10.

Thereafter, the central processing means 9 shifts to the step SP194 to retrieve the electronic mails not yet read stored in the external memory apparatus 13 in view of counting the number of electronic mails arrived today, when a user inputs, for example, the keyword "Today". Subsequently, the central processing means 9 shifts to the step SP195 to activate the speech synthesis means 11 or recording and reproducing means 12 to report by voice the retrieval report and thereafter shifts to the step SP196 to complete this processing sequence.

After the electronic mails are retrieved as explained above, when a user instructs reading of the electronic mails, the server 1 reads the electronic mails retrieved by speech synthesis. Some electronic mails are not always required to be immediately checked by contents. Moreover, a certain period of time is required to read by voice the electronic mails.

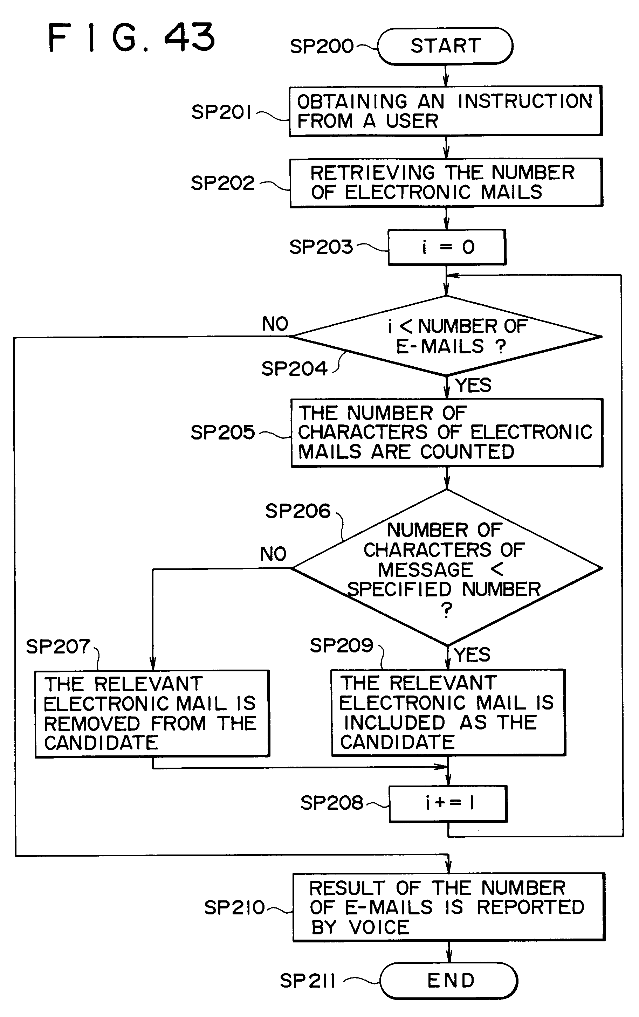

Fig. 43 is a flowchart showing the processing sequence of the central processing means 9 for retrieving, depending on the instruction of a user, the number of electronic mails which are considered important by a user. Namely, in the case of the electronic mails having the contents to be notified immediately to a destination user, the content tends to be shortened. The electronic mail having a longer content requires a longer time for reading and has a demerit that content cannot be understood easily depending on the quality of voice.

Therefore, the central processing means 9 shifts, when a user selects this service, to the step SP201 from the step SP200 to obtain an instruction from a user. Moreover, the central processing means 9 shifts to the step SP202 to retrieve the number of electronic mails not yet read. The central processing means 9 shift, thereafter, to the step SP203 to reset the counter value i to zero (0) and then shifts to the step SP204.

Here, the central processing means 9 judges whether the counter value i is smaller or not than the number of mails detected in the step SP202. When the positive result is obtained, the central processing means 9 shifts to the step SP205 to count the number of characters of the main sentence of the electronic mails not yet read corresponding to the counter value i.

In this embodiment, retrieval of electronic mails depending on the length is executed depending on selection by a user even when contents have the other data. In this case, when the electronic mails are formed of image data and a user requests the mail reading service, the server 1 executes the character recognition process and thereafter outputs the data after the speech synthesis in order to judge a rough number of characters from the amount of data in place of the accurate number of characters. Moreover, when the voice data is used and a user requests this mail reading service, the server 1 drives in direct the sound source to output the voice data to judge, also in this case, a rough number of characters depending on the amount of voice data.

Upon detection of the number of characters as explained above, the central processing means 9 shifts to the step SP206 to judge whether the number of characters is less than the preset specified number or not. If negative result is obtained, it shifts to the step SP207 to remove this electronic mail from the candidate to be notified to a user and thereafter shifts to the step SP208. On the other hand, when a positive result is obtained in the step SP206, the central processing means 9 shifts to the step SP209 to register this mail as the candidate to be notified to a user and thereafter shifts to the step SP208.

In the step SP208, the central processing means 9 increments the counter value i and thereafter returns to the step SP204. Thereby, the central processing means 9 repeats, for all electronic mails not yet read destined to a user, the processing sequence of the steps SP204 - SP205 - SP206 - SP207 - SP208 - SP204 or the steps SP204 - SP205 - SP206 - SP209 - SP208 - SP204 to detect the electronic mails in the number of characters less than the specified number. Moreover, for all electronic mails not yet read destined to a user, the central processing means 9 executes this series of processing sequence. Thereby, when a negative result is obtained in the step SP204, the central processing means 9 shifts to the step SP210 to report by voice the number of mails detected here and thereafter shifts to the step SP211 to complete this processing sequence.

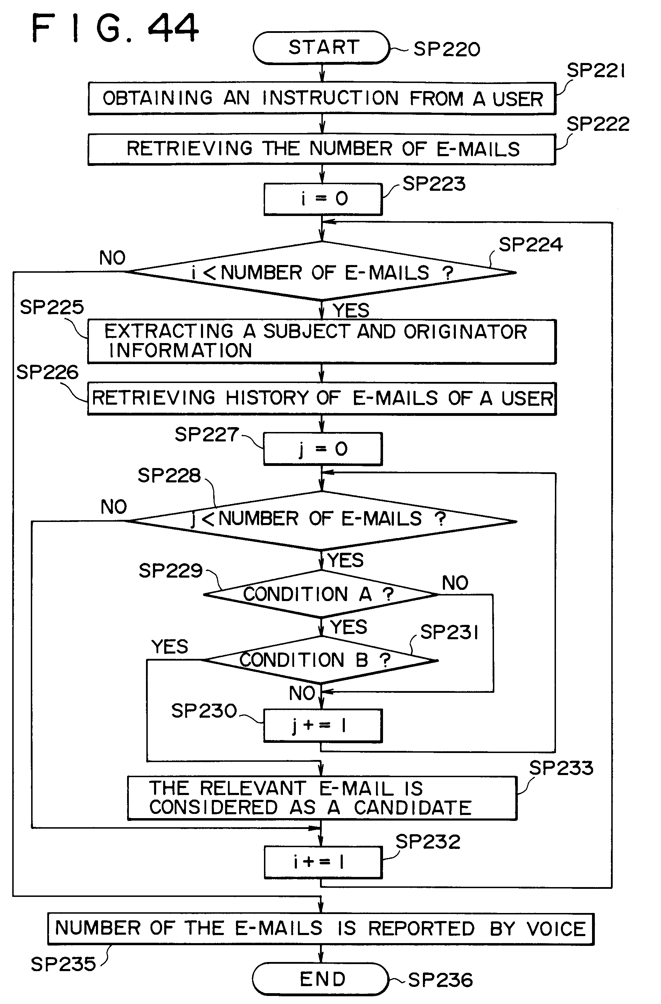

Meanwhile, Fig. 44 is a flowchart showing the processing sequence of the central processing means 9 for detecting the electronic mails closely related to a user depending on selection by user. Here, the central processing unit 9 shifts to the step SP221 from the step SP220 to obtain an instruction from a user and then shifts to the step SP222 to retrieve the number of electronic mails not yet read. Thereafter the central processing means 9 shifts to the step SP223 to set the counter value i to zero (0) and then shifts to the step SP224.

In this step, the central processing means 9 judges whether the counter value i is less than the number of mails detected in the step SP222 or not. If a negative result is obtained, the means 9 shifts to the step SP225 to extract the subject and originator information of t he electronic mails not yet read corresponding to the counter value i.

Subsequently, the central processing means 9 shifts to the step SP226 to retrieve history of electronic mails in the past stored in the record as many as the number of mails. Thereafter, the central processing means 9 shifts to the step SP227 to set the counter value j to zero and then shifts to the step SP228. Here, the means 9 judges whether the counter value j is less than the number of historical mails in the past retrieved in the step SP225 or not. When a positive result is obtained, the means 9 shifts to the step SP229.

Here, the central processing means 9 judges whether destinations of the electronic mails in the past identified by the variable j matches the originators of the electronic mails not yet read identified by the variable i or not. When a negative result is obtained, the means 9 shifts to the step SP230 to increment the counter value j and returns to the step SP228. Thereby, the central processing means 9 repeats, for the electronic mails not yet read identified by the variable i, the processing sequence of the step SP228 - SP229 - SP230 - SP228 to judge whether the mails not yet read identified by the variable i are originated by the same originator who have issued the predetermined number of mails in the past or not.

Here, if the electronic mails are not issued by the same originator who has issued the mails in the past, the positive result cannot be obtained even after this processing sequence is repeated for the predetermined number of times equal to the number of mails. After all, the central processing means 9 obtains the negative result in the step SP228. Thereby, the central processing means 9 shifts to the step SP232 to increment the counter value i and thereafter shifts to the step SP224 to repeat the same process for the next electronic mail not yet read.

Meanwhile, this electronic mail has been issued from the same originator of the mails received in the past, the central processing means 9 obtains the positive result in the step SP229 and then shifts to the step SP231. Here, the central processing means 9 judges whether the subjects of the electronic mails in the past identified by the variable j matches the subjects of the mails not yet read identified by the variable i or whether the characters "Re:" or "RE:" are attached at the beginning of the subjects of the electronic mails not yet read identified by the variable i. Namely, it is accustomed for the electronic mails that a response mail regarding the related item in the past must be returned with the same subject or the characters "Re:" or "RE:" must be added at the beginning of the response mail.

Therefore, the central processing means 9 judges whether the electronic mail not yet read identified by the variable i is related to the mail in the past identified by the variable j. When a negative result is obtained, the means 9 shifts to the step SP230. On the other hand, when a positive result is obtained in the step SP231, the central processing means 9 shifts to the step SP233 to set the mail not yet read identified by the variable i as the candidate mail to be presented to a user and thereafter shifts to the step SP232.

Thereby, the central processing means 9 judges, for all electronic mails detected in the step SP222, judges whether these are closely related with a user or not and shifts, upon completion of this series of process to all electronic mails, to the step SP235, because a negative result is obtained in the step SP224, to report by voice the number of mails detected to a user and thereafter shifts to the step SP236 to complete this processing sequence.

In this embodiment, in place of retrieval of mails depending on characters included in the subject line, the mail retrieval may also be executed depending on type of terminal, sex and age of originator and language used added to the subject of the mail. Therefore, the server 1 can improve the efficiency of retrieval by using such information added at the time of transmission of mail.

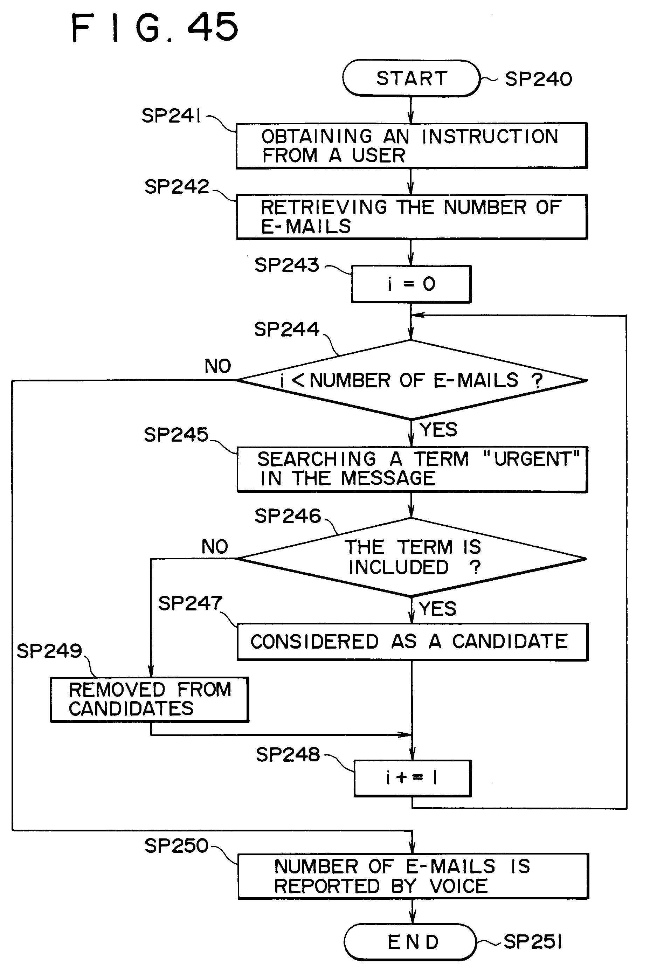

Fig. 45 is a flowchart showing a processing sequence of the central processing means 9 for detecting an electronic mail which is judged by an originator to be notified urgently depending on selection by a user. Here, the central processing means 9 shifts to the step SP241 from the step SP240 to obtain an instruction from a user and thereafter shifts to the step SP242 to retrieve the number of mails not yet read. Subsequently, the means 9 shifts to the step SP243 to set the counter value i to zero and then shifts to the step SP244.

Here, the central processing means 9 judges whether the counter value i is less than the number of mails detected in the step SP242 or not and shifts, upon obtaining a positive result, to the step SP245 to judge whether a term "urgent" is included or not in the main sentence of the electronic mail not yet read corresponding to the counter value i. When a positive result is obtained, the central processing means 9 shifts to the step SP247 to set the mail identified by the variable i as the candidate mail to be presented to a user and thereafter shifts to the step SP248. If, on the other hand, a term "urgent" is not included in the main sentence, the central processing means 9 shifts to the step SP249, because a negative result is obtained in the step SP246, to remove the electronic mail not yet read identified by the variable i from the candidate mails to be presented to a user and thereafter shifts to the step SP248.

In the step SP248, the central processing means 9 increments the counter value i and thereafter returns to the step SP244 to repeat the similar process to the next electronic mail no yet read. Thereby, the central processing means 9 judges whether the all mails detected in the step SP242 include the term "urgent" or not. Upon completion of this series of process to all electronic mails, the means 9 shifts to the step SP250, because a negative result is obtained in the step SP244, to report by voice the number of mails detected to a user and thereafter shifts to the step SP251 to complete this processing sequence.

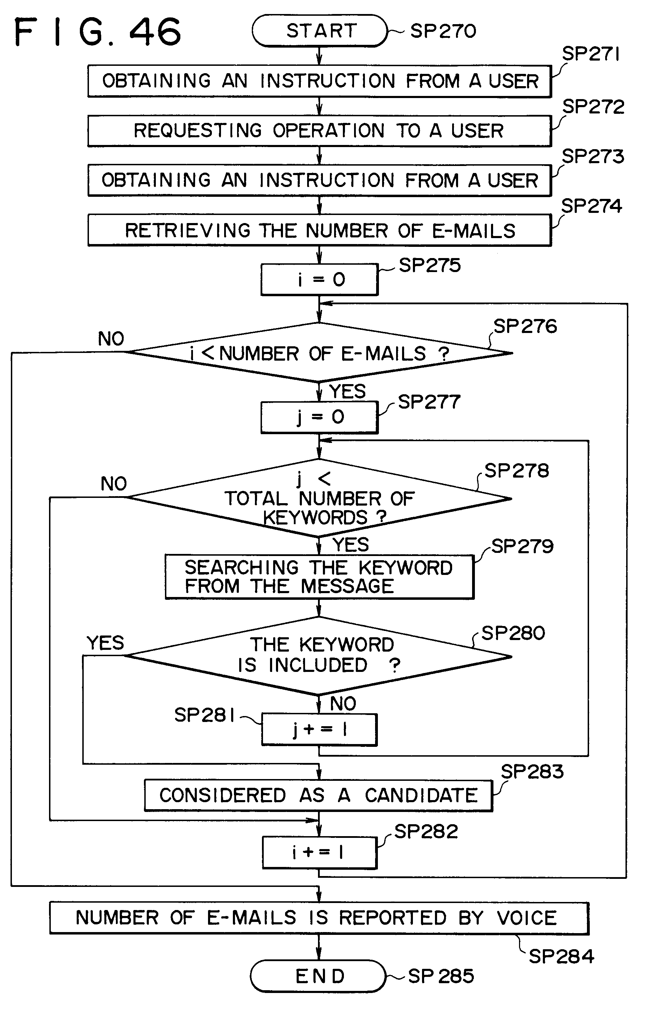

Fig. 46 is a flowchart showing the processing sequence of the central processing means 9 for retrieving the electronic mails with reference to the term previously registered by a user depending on selection by a user. In the central processing means 9, individual keywords of a user can be registered for each kind to the user information management database through voice recognition and access from a computer 4. As the keyword for retrieval of this kind, the terms which are considered to be necessary in common to the other users are held in each kind in the external memory apparatus 13.

In this embodiment, a user is recommended, by preceding registration, to assign "No. 1" to an urgent kind of mail and also assign the keywords "urgent, emergency, quick" to this kind of mail and to assign "No. 2" to a business mail and also assign the keywords "business, job, work" to this kind of mail. Moreover, a user is recommended to assign "No.3" to a personal mail and also assign the keyword of a personal name, for example, "Tanaka" to this kind of mail. In regard to the term considered to be necessary in common to other users, a plurality of keywords are assigned to each kind of mail.

In this processing sequence, the central processing means 9 shits to the step SP271 from the step SP270 to obtain an instruction from a user and thereafter shifts to the stop SP272 to urge a user to input a keyword and thereafter shifts to the step SP273 to accept an instruction from a user. Here, the central processing means 9 accepts an instruction to retrieve the electronic mails with any keyword of the term considered to be necessary in common to users, the term individually registered by a user or the term input by a user through the voice recognition and sequentially accepts the corresponding kind.

When a user has selected a term registered individually, the central processing means 9 accepts the kind which a user desires with the guide by voice and sets the term of this kind as the keyword. When a term considered to be necessary in common to users is also selected, the central processing means 9 also accepts the kind which a user desires with the guide by voice and sets the term of this kind as the keyword. Meanwhile, when a user has input a term by voice recognition, the means 9 retrieves a synonym dictionary stored in the external memory apparatus 13 and sets the terms including synonyms as the keyword based on the result of retrieval.

When the keywords are set as explained above, the central processing means 9 shifts to the step SP274 to retrieve the number of electronic mails not yet read. Subsequently, the central processing means 9 shifts to the step SP275 to set the counter value i to zero and thereafter shifts to the step SP276.

Here, the central processing means 9 judges whether the counter value i is less than the number of mails detected in the step SP274 or not. When a positive result is obtained, the means 9 shifts to the step SP277. The central processing means 9 sets the counter value j to zero and thereafter shifts to the step SP278 to judge whether the counter value j is smaller than the total number of keywords or not. When a positive result is obtained, the means 9 shifts to the step SP279 and retrieves the keyword identified by the counter value j from the main sentence of the electronic mail not yet read corresponding to the counter value i and then shifts to the step SP280.

Here, the central processing means 9 judges whether the keyword identified by the counter value j exists in the main sentence of the electronic mail not yet read corresponding to the counter value i or not. When a negative result is obtained, the means 9 shifts to the step SP281 to increment the counter value j and then returns to the step SP278. Thereby, the central processing means 9 repeats, for each keyword, the processing sequence of step SP278 - SP279 - SP280 - SP281 - SP278 in regard to the electronic mail not yet read corresponding to the counter value i to judge whether this keyword is included in the main sentence of the electronic mail identified by the value i or not.

In this case, when any keyword is not included in the main sentence of the mail identified by the value i, the central processing means 9 shifts to the step SP282 from the step SP278 to increment the counter value i because it obtains a negative result in the step SP278 by repeating this processing sequence for the number of times equal to the number of keywords and thereafter shifts to the step SP276. Thereby, the central processing means 9 changes the retrieval object of keyword to the next electronic mail not yet read.

Meanwhile, when any keyword is included in the main sentence of the electronic mail identified by the value i, a positive result can be obtained in the step SP280 while a series of processing sequence is repeated. In this case, the central processing means 9 shifts to the step SP283. Here, the means 9 sets the electronic mail identified by the counter value i to the candidate mails to be reported to a user and thereafter shifts to the step SP282 to increment the value i and returns to the step SP276.

Thereby, the central processing means 9 repeats this processing sequence for the electronic mail not yet read identified by the variable i and shifts to the step SP284 to report by voice the number of mails detected to a user, because a negative result is obtained in the step SP276 upon completion of this processing sequence to the electronic mail not yet read detected in the step SP274 and thereafter shifts to the step SP285 to complete this processing sequence.

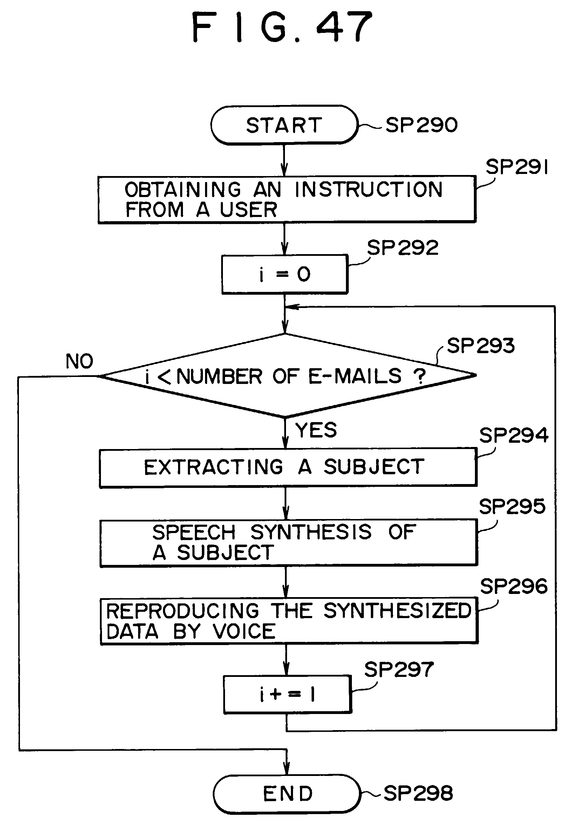

When a user operates the predetermined operator after the number of electronic mails is reported to a user, the central processing means 9 subsequently executes the processing sequence shown in Fig. 47.

Here, Fig. 47 is a flowchart showing the processing sequence when a user has instructed reading of the subject. The central processing means 9 shifts to the step SP291 from the step SP290 to obtain an instruction from a user and then shifts to the step SP292 to set the counter value i to zero and thereafter shifts to the step SP293.

Here, the central processing means 9 judges whether the counter value i is smaller than the number of electronic mails detected in the process before this reading process. When a positive result is obtained, the means 9 shifts to the step SP294 to extract the subject from the mail not yet read identified by the variable i. Subsequently, the central processing means 9 shifts to the step SP295 to convert the extracted subject into a voice signal through the speech synthesis in the speech synthesis means 11 and outputs this voice signal to a user in the step SP296. Thereafter, the means 9 shifts to the step SP297 to increment the value i and returns to the step SP293.

Therefore, the central processing means 9 sequentially repeats this processing sequence for the electronic mail not yet read detected by the various retrieval processes explained above to notify by voice the subject sequentially. Thereafter, the central processing means 9 shifts to the step SP298 to complete this processing sequence because a negative result is obtained in the step SP293 when this processing sequence is completed for all detected mails not yet read.

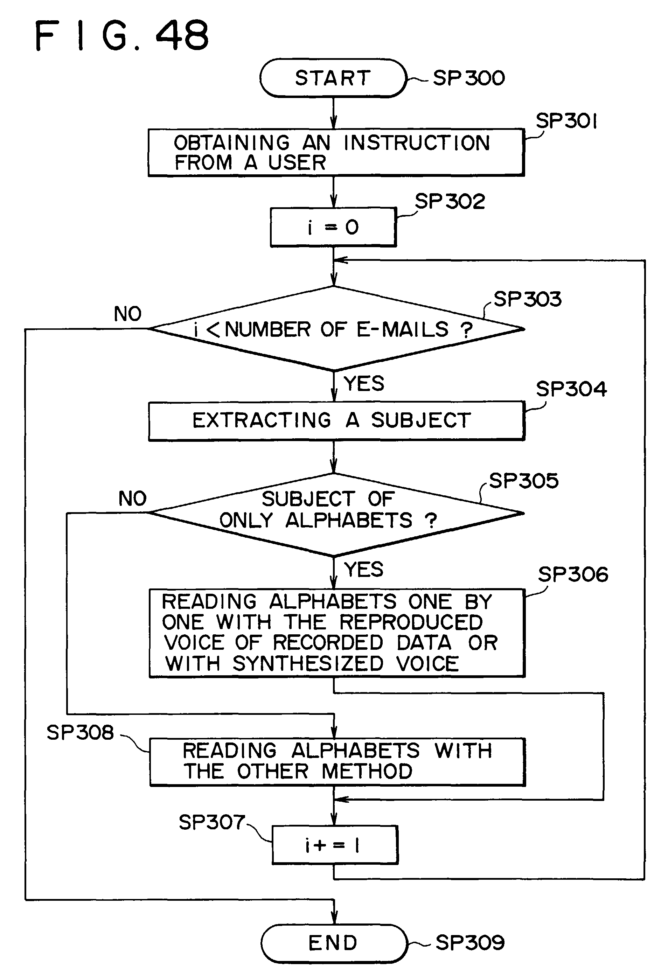

Fig. 48 is a flowchart showing the reading process of subject by the central processing means 9 when English terms are included in the subject. In this case, the central processing means 9 shifts to the step SP301 from the step SP300 to obtain an instruction from a user and thereafter shifts to the step SP302 to set the counter value i to zero and then shifts to the step SP303.

Here, the central processing means 9 judges whether the counter value i is smaller than the number of mails detected in the process before this reading process and shifts, upon obtaining a positive result, to the step SP304 to extract the subject from the electronic mail not yet read identified by the variable i. In succession, the means 9 shifts to the step SP305 to judge whether this subject is formed of only alphabets or not from each character code forming the subject. When a positive result is obtained, the means 9 shifts to the step SP306 to read, by the recording and reproducing means 12 or speech synthesis means 11, the alphabets of the extracted subject character by character. Namely, when the subject is formed by the character string of "INFO.", the central processing means 9 reads "I, N, F, O, Period". Therefore, the server 1 is capable of reading the subject through the simplified speech synthesis. Subsequently, the central processing means 9 shifts to the step SP307 to increment the value i and then returns to the step SP303.

When a negative result is obtained in the step SP305, the central processing means 9 shifts to the step SP308 to read the subject with the other method. Namely, when this server 1 is installed in Japan, the subject formed of only Japanese, subject formed by combination of Japanese terms and English terms and subject formed by the relevant language when an originator address is in the zone other than the English zone may be considered. Therefore, the central processing means 9 reads the subject through the speech synthesis as in the case explained in regard to Fig. 47 when the subject is formed of the Japanese terms. In other cases, the means 9 reads the subject in the relevant language in accordance with the kind of language added to the subject, depending on selection by user.

Therefore, the central processing means 9 increments the value i in the step SP307 and returns to the step SP303. Thereby, the means 9 repeats this processing sequence, for the electronic mail not yet read detected by the various retrieving processes explained above, to notify by voice the subject to a user and thereafter shifts to the step SP309 to complete this processing sequence because a negative result is obtained in the step SP303 when this processing sequence is completed for all detected electronic mails not yet read.

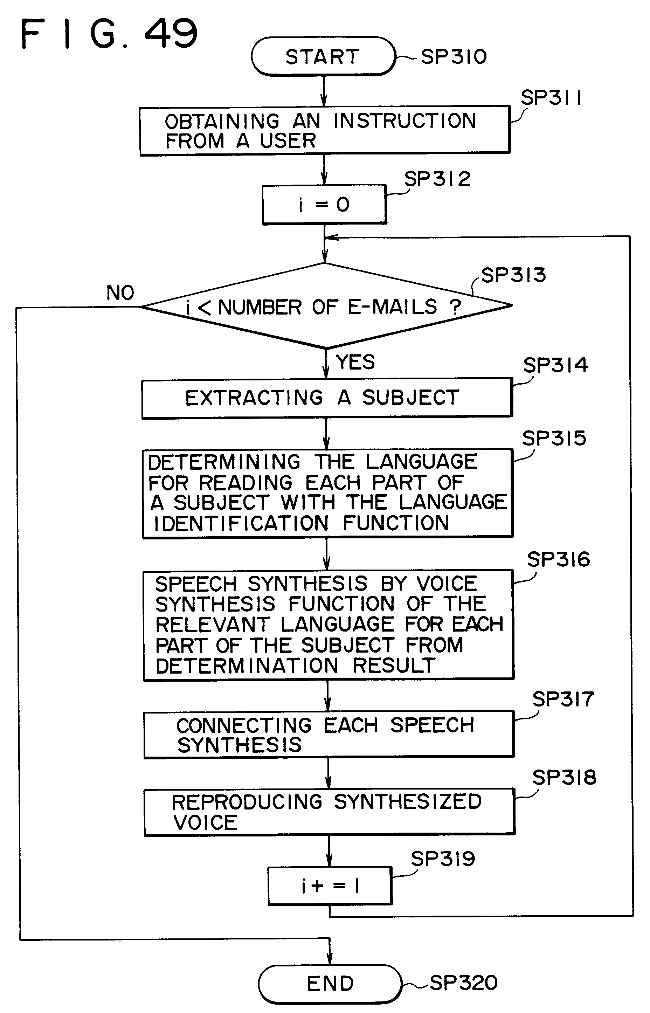

Fig. 49 is a flowchart showing the processing sequence of the central processing means 9 when a user has previously set the language identification mode. In this embodiment, this mode may be set by the preceding registration.

Namely, the central processing means 9 shifts to the step SP311 from the step SP310 to obtain an instruction from a user and then shifts to the step SP312 to set the counter value i to zero and shifts to the step SP313.

Here, the central processing means 9 judges whether the counter value i is smaller than the number of electronic mails detected in the process before this reading process or not and shifts to the step SP314 upon obtaining a positive result to extract the subject from the mail not yet read identified by the variable i. Thereafter, the central processing means 9 shifts to the step SP315 to judge the language for the reading for each part of the subject from the character code forming the subject. (An example of judgment is necessary.) Thereafter, the central processing means 9 shifts to the step SP316 to executes the speech synthesis for the subject depending on the result of judgment and then shifts to the step SP317 to connect the voices synthesized by languages to send the voice to a user in the step SP318. Thereby, the central processing means 9 reads the subject, for example, 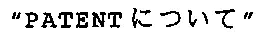 in such a manner that "PATENT" is read by the synthesized voice in English and 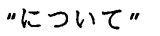 is read by the synthesized voice in Japanese.

Thereby, the central processing means 9 reads the subject in the language considered adequate by the language recognition function of the server 1 and thereafter increments the counter value i in the step SP319 and then returns to the step SP319. Moreover, the central processing means 9 shifts, upon completion of this series of processing sequence for the electronic mail not yet read detected by various retrieving processes explained above, to the step SP320 from the step SP313 to complete this processing sequence.

On the occasion of reading the subject, the central processing means 9 is caused for the subject formed of the predetermined number or more number of characters to read only the predetermined number of characters from the beginning for the convenience of a user. Moreover, depending on registration of setting by a user, speech synthesis is switched to generated, for example, the voice of male or female for each mail to be read. Thereby, the end of electronic male can be naturally recognized.

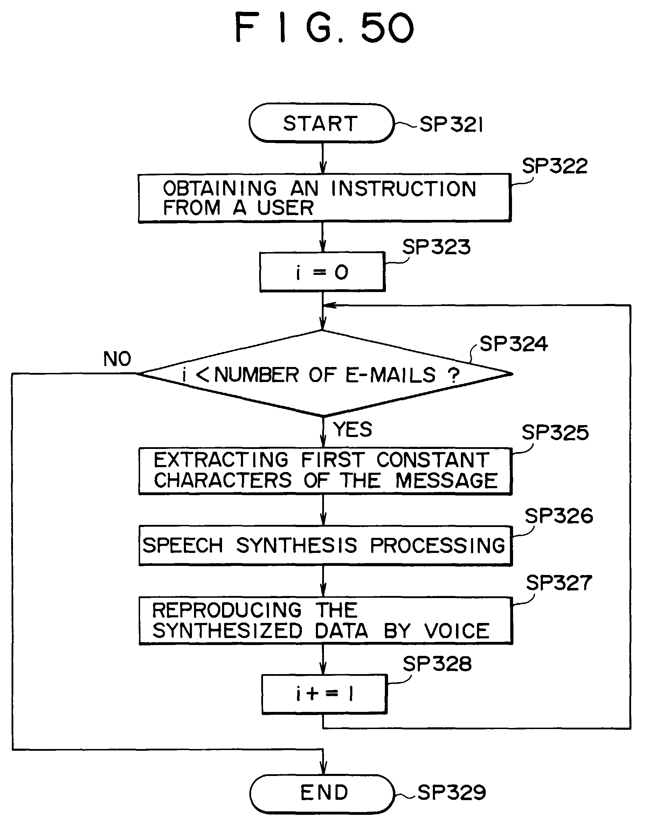

Fig. 50 is a flowchart showing a processing sequence executed wen a user instructs reading of the electronic mail by operating the operator after the above retrieval processing or reading of the subject. In this processing sequence, the central processing means 9 shifts to the step SP322 from the step SP321 to obtain an instruction from a user and then shifts to the step SP323 to set the counter value i to zero and then shifts to the step SP324.

Here, the central processing means 9 judges whether the counter value i is smaller than the number of mails detected in the process before the mail reading process and shifts, upon obtaining a positive result, to the step SP325 to extract the main sentence of the mail not yet read identified by the variable i. Here, the central processing means 9 extracts only the predetermined number of characters from the beginning of the main sentence and shifts to the step SP326 to execute the speech synthesis of the extracted part and thereafter shifts to the step SP327 to output the synthesized voice to a user.

Thereby, the central processing means 9 reads the predetermined number of characters of the contents of the main sentence and thereafter increments the counter value i in the step SP328 and then returns to the step SP324. At the time of reading the main sentence through the speech synthesis, the central processing means 9 changes the reading voice, for example, from the voice of male or from the voice of female to the voice of male or female for the part enclosed in the signs "", [] and () in order to accurately notify the contents emphasized in the main sentence by an originator. Moreover, since the predetermined number of characters from the beginning is read and thereafter the number of characters read is reported by voice for the total number of characters of the main sentence, operation flexibility of user may be improved.

When a user operates, while the mail is being read, the operator assigned to a skip, mail reading is once interrupted and the subsequent electronic mail is read in the step SP328. On the contrary, when a user operates the operator for continuously reading the mail, the main sentence following the number of characters extracted in the step SP325 is extracted and then output through the speech synthesis. Moreover, when a user operates the operator assigned for specifying the reading speed, the reading speed is changed in response to operation of the operator. Reading is executed word by word depending on the punctuation marks so that a user can easily recognize the contents of mail.

In the case of the retrieving by keyword, the background music corresponding to the keyword and kind used for this retrieval is played to reducing the waiting time of a user at the time of reading the main sentence. Also, in the case of reading this main sentence, voice can be changed for each electronic mail depending on the preceding registration and moreover, the language recognition function, etc. may also be used. In addition, it is possible to execute the setting so that speech synthesis is not effectuated to the idiomatic phrases at the beginning and end of the sentence used in the electronic mail of this kind, department name, telephone number, facsimile apparatus number and electronic mail number, etc. Thereby, flexibility of use can be very much improved.

Moreover, the central processing means 9 is capable of effectively using the information added to the subject line to execute the speech synthesis, depending on the preceding setting by a user, by voice of female for the mail received from a female user or by voice of male for the mail received from a male user and moreover executes the speech synthesis with the level of voice depending on age. In this case, the language used for speech synthesis depends on the language added to the subject.

The server 1 separately registers the electronic mail thus retrieved by combining such electronic mail reading process and the services by the MAM server explained previously and thereafter outputs the mails by transferring to the facsimile apparatus 6 and computer 4, etc.

### (5) World Wide Web

In this embodiment, when a user requests the World Wide Web service with the Gaia code or by designation of address in an ordinary Internet, the central processing means 9 navigates this network to offer the service requested by a user. In this case, when a user has made an access from the computer 4 , the central processing means 9 offers the service requested by a user in the same manner as the server in the ordinary server.

In addition, the server 1 also holds the information formed of the organically inter-related hyper-media to offer the World Wide Web service also from the telephone terminal 5, facsimile apparatus 6 and private terminal 15 and also offer such information in various formats.

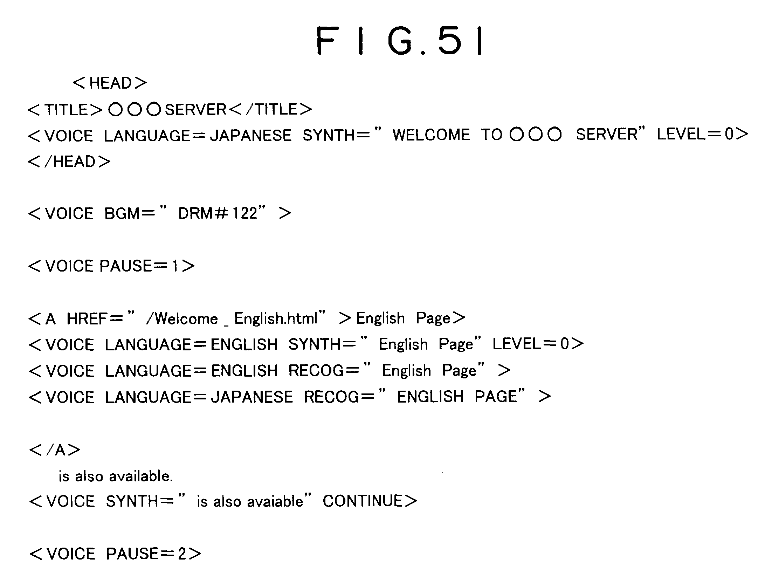

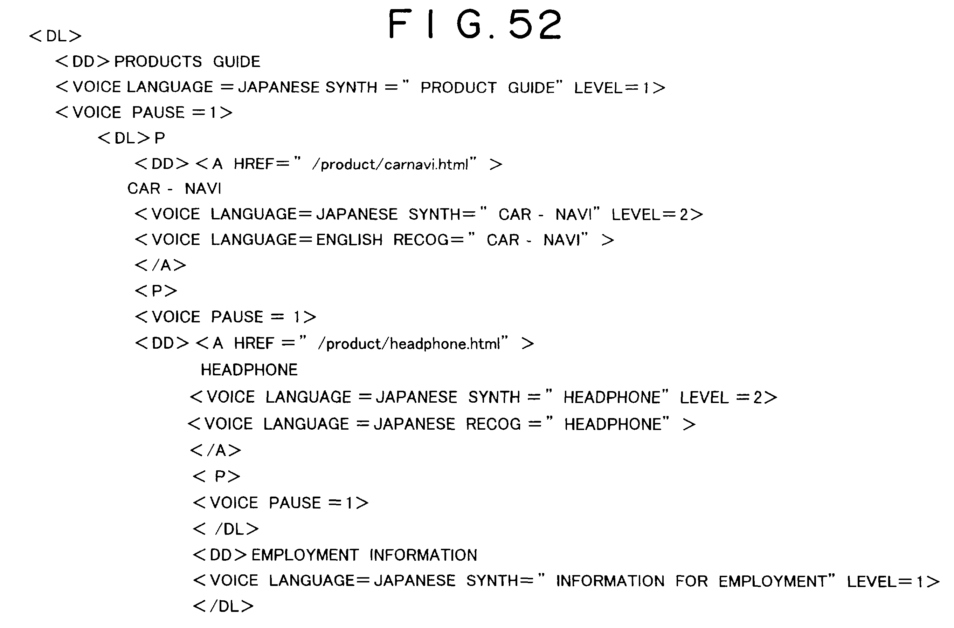

Therefore, the server 1 holds, in the external memory apparatus, the hyper-media sources shown in Fig. 51 and Fig. 52. Here, this source is described in the format that various codes are increased for the HTML (Hyper Text Markup Language) format, namely in the format realized by expanding the HTML format. Therefore, the server 1 transfers the source code held therein as required through the Internet.

Namely, in Fig. 51 and Fig. 52, "〈HEAD〉" indicating initiation is described first and thereafter the text data indicating this server is described between "〈TITLE〉" and "〈/TITLE〉" indicating start and end of the title. Moreover, being enclosed by tags, "VOICELANGUAGE = JAPANESE" indicating the process by Japanese language is described, thereafter "SYNTH =" instructing speech synthesis of the object is described, followed by description of "Welcome to the ○ ○ ○ server" indicating the object of speech synthesis and "LEVEL=0" indicating the level of speech synthesis. Thereby, the part "Welcome to the ○ ○ ○ server" can be recognized as the object of speech synthesis from the description.

Subsequently, after "〈/TITLE〉" is described, "VOICE BGM=" indicating reproduction of the background music is described, "DRM#122" indicating the title of music is then enclosed by tags. With the description explained above, the music enclosed by the sign " " is reproduced as the background music during the period of waiting for user's operation.

Moreover, "〈VOICE PAUSE=1〉 for providing a pause as long as the specified numeral in the speech synthesis output is described, followed by description of "〈AHREF="/Welcome English.html"〉 English Page" of the text setting the link destination and anchor corresponding to this link destination. Thereafter, "VOICE LANGUAGE=English SYNTH=" indicating the speech synthesis by English is also described with the description of "English Page" indicating contents of speech synthesis and "LEVEL=0" indicating the level of speech synthesis. Thereby, the part "English Page" may be easily recognized as the object of speech synthesis.

Subsequently, after "RECOG" instructing voice recognition is described with the description for specifying the process by English with description of "English Page" indicating the language to be recognized. Thereafter , it is also described for voice recognition of 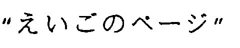 by Japanese. Thereby, in this source, navigation to Welcome_English.html as the link destination is possible with the voicing of "English Page" or 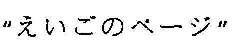 and with designation of "English Page" formed of the text.

In this embodiment, following this description, the source code displayed after "English Page" is described, and therefter contents are also described. Subsequently, the source code indicating the speech synthesis following "English Page" is described together with contents of speech synthesis to designate the period of pause of speech synthesis.

Thereafter, in the case of this source (Fig. 52), the source code indicating display by text is described with the contents thereof "Item Guide" and subsequently speech synthesis by Japanese of "Guidance for Item" is described. Moreover, the pause of speech synthesis is designated and thereafter text "Car-Navi" is described with designation of link destination and speech synthesis and voice recognition by Japanese of "Car-Navi" are described. Thereafter, text "Headphone" is described with designation of the link destination and speech synthesis and voice recognition by Japanese of "Headphone" are described in the same manner as the description of "Employment Information".

Thereby, in this embodiment, reading by voice of home page from a telephone terminal can be made and in this case, various pieces of information may be offered like an ordinary home page for the access from a computer.

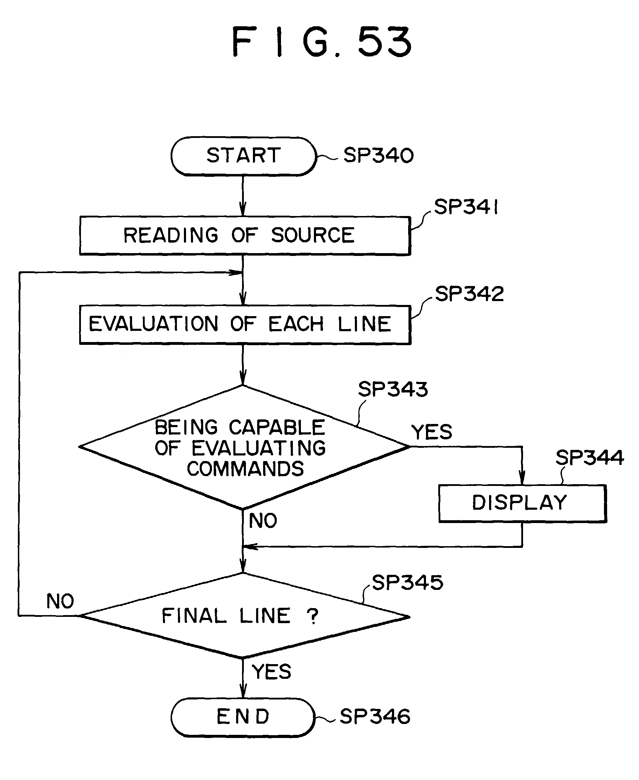

Namely, Fig. 53 is a flowchart showing access to the home page by an ordinary WWW browser. In this case, the browser shifts to the step SP341 from the step SP340 to read the source and then shifts to the step SP342 to interpret each line. Subsequently, the browser shifts to the step SP343 to judge whether the command may be interpretd or not and shifts, upon obtaining a positive result, to the step SP344. Here, the browser displays contents in accordance with the command and shifts to the step SP345 but shifts in direct, upon obtaining a negative result, to the step SP345.

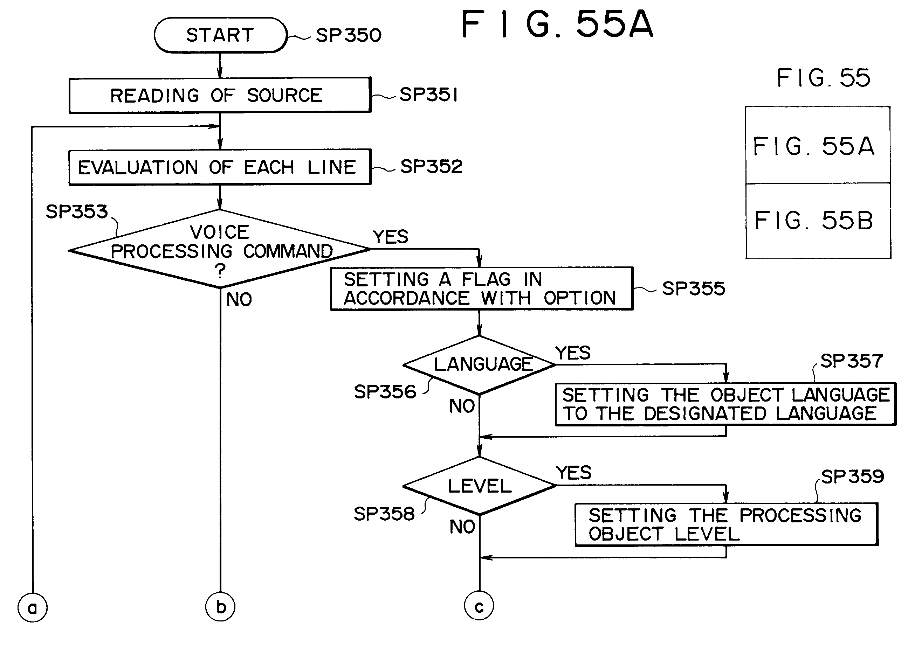

In this step SP345, the browser judges whether the line is the final line or not and returns, upon obtaining a positive result, to the step SP342. But when a negative result is obtained, the browser shifts to the step SP346 to complete this processing sequence. Thereby, in the browser of this type which cannot recognize by voice the source code as explained with reference to Fig. 51 and Fig. 52, the contents where the source code is added by voice is omitted from the display and the contents shown in Fig. 54 is displayed. The underlined part indicates the linked area.

### (5-1) Access by telephone terminal

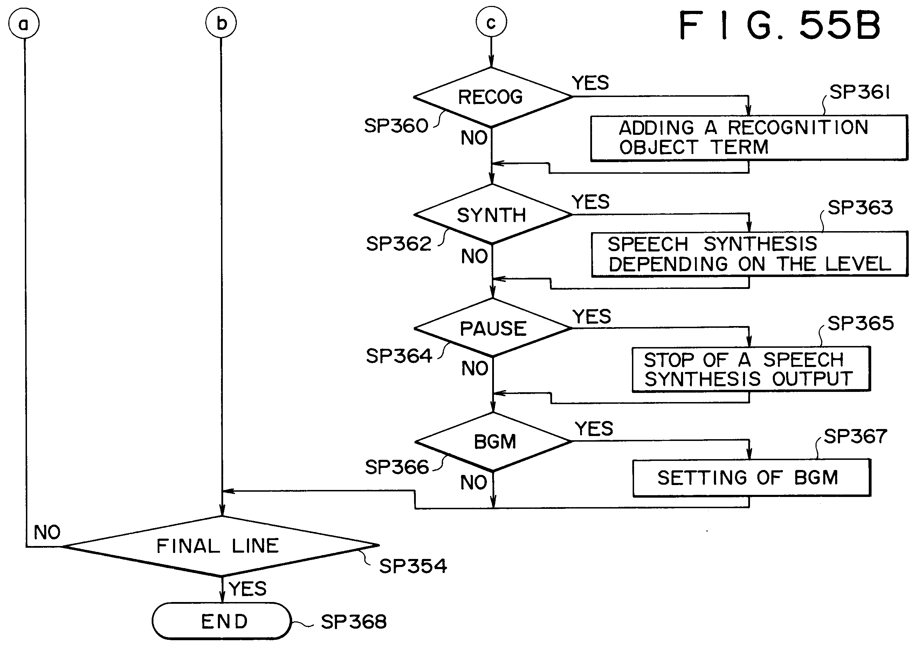

Fig. 55 is a flowchart showing a processing sequence of the private central processing means 9 holding the browser to interpret this source. When the server 1 is accessed from a telephone terminal or a telephone terminal incorporated to the facsimile apparatus 6 and when a user has selected the service by voice by making access to the server 1 from a private terminal 15, the central processing means 9 executes this processing sequence.

Namely, the browser shifts to the step SP351 from the step SP350 to read the source. Thereafter, the browser shifts to the step SP352 to interpret each line and thereafter judges, in the step SP353, whether the command of voice processing exists or not in the line interpreted in the step SP353. When a negative result is obtained, the browser shifts to the step SP354 to judge whether the line is the final line or not and thereafter returns, upon obtaining a negative result in the step SP354, to the step SP352.

Meanwhile, when the voice processing command is included, since a positive result is obtained in the step SP353, the browser shifts to the step SP355. Here, the browser starts flat setting process depending on the option set in the interpreted voice processing command. Namely, the browser interprets the language in the subsequent step SP256. If the language is not preset, voice processing is executed by the language used in current. When the language is preset, the browser sets the corresponding language to the language of processing object in the step SP357.

In the subsequent step SP358, the browser judges the level. If the level is not preset, voice processing is performed in the current level. When the level setting is performed, the browser sets the processing object level to the corresponding level in the step SP359.

Moreover, the browser judges whether voice recognition process is specified or not in the step SP360. If it is not preset, the voice processing is performed in the same manner. When the voice recognition is preset, terms for voice recognition are added in the step SP361.

The browser judges, in the step SP362, whether speech synthesis process is specified or not. If it is not yet specified, the speech synthesis is executed in the same manner and when it is specified, the browser executes the speech synthesis for the corresponding description in the step SP363.

Moreover, the browser judges, in the step SP364, existence of description of pause. If it is not yet specified, the browser shifts to the step SP366, but when it is specified, the browser sets the corresponding pause period in the step SP365 and then shifts to the step SP366. In this step SP366, the browser judges whether instruction for the background music is described or not. When a negative result is obtained, the browser shifts to the step SP354 but wen a positive result is obtained, the browser reproduces the music specified in the step SP367 and then shifts to the step SP354.

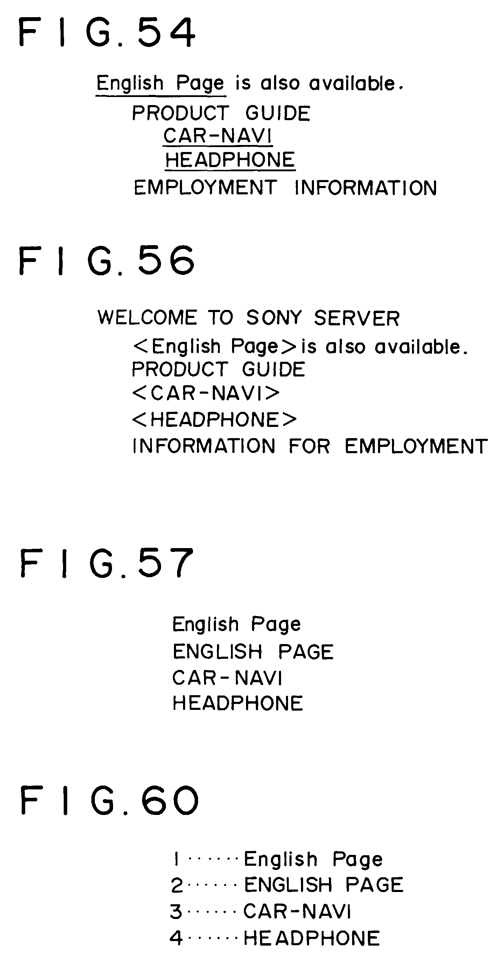

Thereby, the server 1 corresponding to the expanded HTML format sequentially executes only the commands in relation to the voice processing and when it reaches the final line, it shifts to the step SP368 from the step SP354 to complete this processing sequence. Therefore, in this case, the services of the contents shown in Fig. 56 are offered by voice in the telephone terminal 5, the telephone terminal incorporated to the facsimile apparatus 6 and the private terminal 15. In Fig. 56, contents enclosed by the tags are formed of the contents where the link is preset. Therefore, the server 1 is caused to execute the speech synthesis by changing the voice at the part enclosed by the tags in view of urging user's attention. Accordingly, when the terms shown in Fig. 57 are voiced, voicing of terms is voice recognized and is then navigated to the corresponding link destination.

As explained above, a couple of portions may be described in parallel to form a source by identifying the portion for offering information by the text data and the portion for offering information by voice and thereby the time required for generation of source can drastically be shortened in comparison with the case where the source offered by the text and the source offered by voice are formed individually.

Moreover, when the portion corresponding to the headline of this source is described hierarchically, navigation to this hyper-media of this kind can be realized easily and reliably by voice or by display of text and the information of this kind can be used so far effectively and easily.

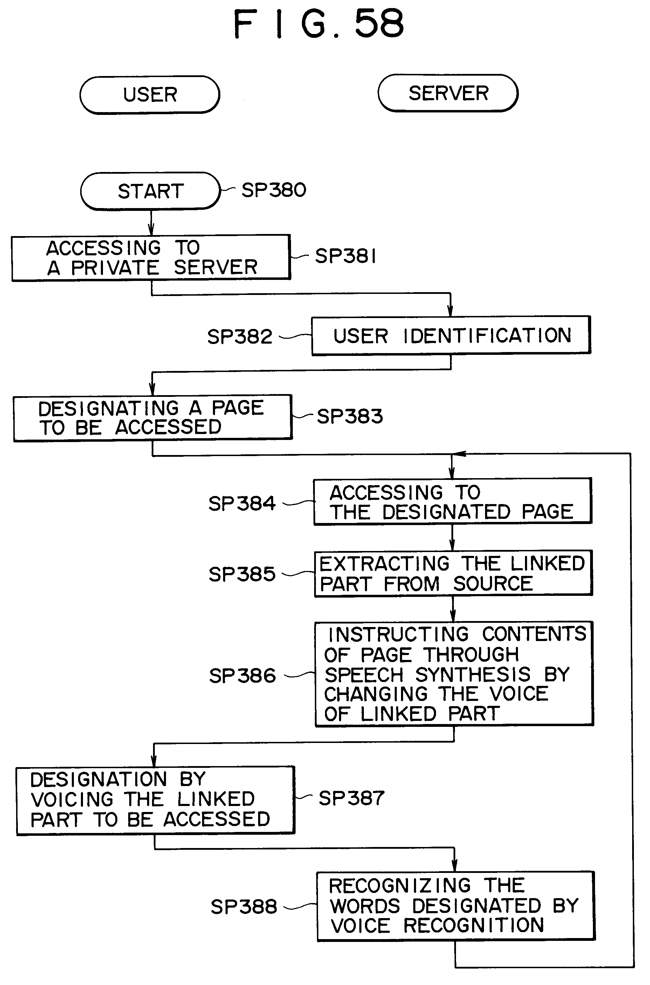

Fig. 58 is a flowchart showing navigation of link destination by voice recognition in the server 1. In this processing sequence, the central processing means 9 shifts to the step SP381 from the step SP380 and shifts, when a user has accessed to the server 1 from the telephone terminal 5 or the telephone terminal incorporated to the facsimile apparatus 6 and selects the service by voice by making access to the server 1 from a private terminal 15, to the step SP382 to execute user identification by voice as in the case of electronic mail service by voice or to identify a user by detecting ID and password number input by operation of operator with the DTMF signal.

Subsequently, the central processing means 9 extracts, in the step SP385, the linked area from the description of source assigned to this page. Thereby, in the source explained above in regard to Fig. 51 and Fig. 52, the area enclosed by the tags explained above in regard to Fig. 56 is extracted.

Thereafter, the central processing means 9 sequentially repeats, in the step SP386, the processing loop explained above in regard to Fig. 55 to present the page contents through the speech synthesis and then waits for an instruction from a user. In this case, the central processing means 9 changes the voice at the linked area for speech synthesis of page contents.

Namely, the server presents, in the step SP386, various voices to urge a user to select a kind of voice when a user selects the service by speech synthesis. When a user selects an ordinary speech synthesis, the central processing means 9 executes the speech synthesis by voice of male for the ordinary portion or by voice of female for the linked area. When a user selects the other speech synthesis, the means 9 executes the speech synthesis by lower voice of male or female for the ordinary portion or by higher voice of male or female for the linked area. Moreover, when a user specifies quality and level of voice, the speech synthesis is performed by changing the voice at the linked area and the other portion with the voice customized by this user.

After page contents are guided by voice and a user voices the words of the linked area to which a user wants to make access in the step SP387, the central processing means 9 shifts to the step SP388 to recognizes this voice to recognize the words designated by user. In this case, if accurate voice recognition is difficult, and if a user does not voice the corresponding words, the central processing means 9 urges again a user to input the voice after the predetermined time has passed.

Thus, upon recognition of words voiced by user, the central processing means 9 shifts to the step SP384 to make access to the designated page to repeat this series of processing sequence in view of offering, as required, various pieces of information organically inter-related.

In this embodiment, the central processing means 9 voices the linked words shown in Fig. 57 together with numerals, on the occasion of urging a user to designate by voice the link destination, and thereafter detects operation of the operator corresponding to this numeral with the DTMF signal and thereby to navigate the link destination with the operation of the operator of the telephone terminal, etc. in place of the voice recognition.

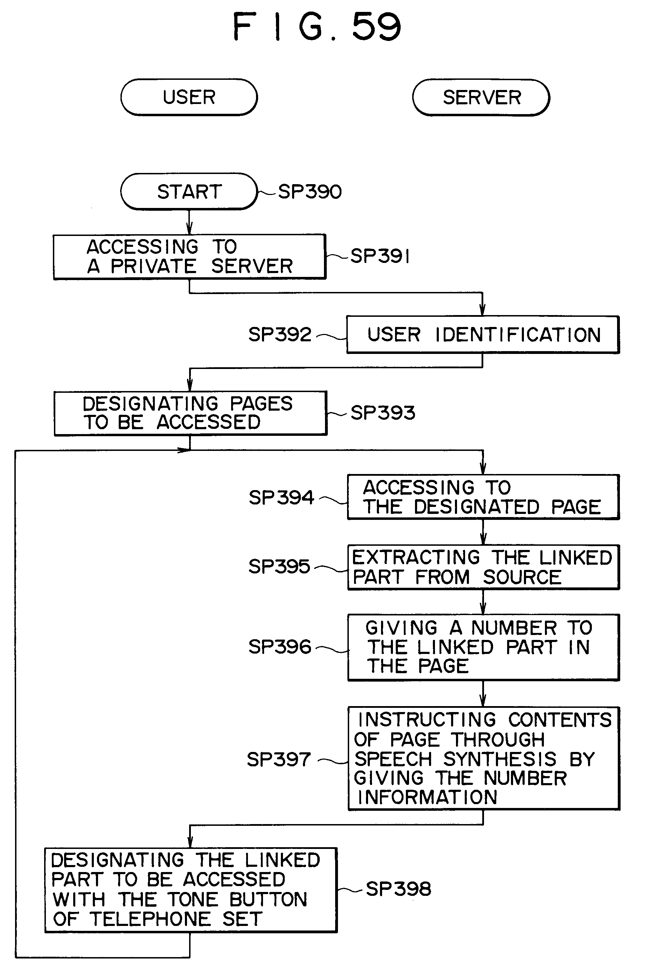

Fig. 59 is a flowchart showing a processing sequence for navigation of the link destination with this DTMF signal. In this processing sequence, the central processing means 9 shifts to the step SP391 from the step SP390 and thereafter shifts, when a user makes access to the central processing means 9 from the telephone terminal 5 and from the telephone terminal incorporated to the facsimile apparatus 6 and when a user makes access to the central processing means 9 from a private terminal 15 to select the service by voice, to the step SP392 to identify the user by voice as in the case of the electronic mail service by voice or identify the user by detecting ID and password number input by the operation of the operator with the DTMF signal.

Subsequently, the central processing means 9 offers by voice the kind of services with the numerals to urge a user to select the desired service. When a user operates the operator corresponding to access to the word wide web, the central processing means 9 then urges a user to designate the page and shifts, when a user selects the access page by operation of the operator in the step SP398, to the step SP394 to make access to the page selected by the user.

Here, the central processing means 9 accepts, depending on selection by a user, designation of the page based the Gaia code or combination of the operators of numerals "0 to 9, * and #" assigned to the telephone terminal.

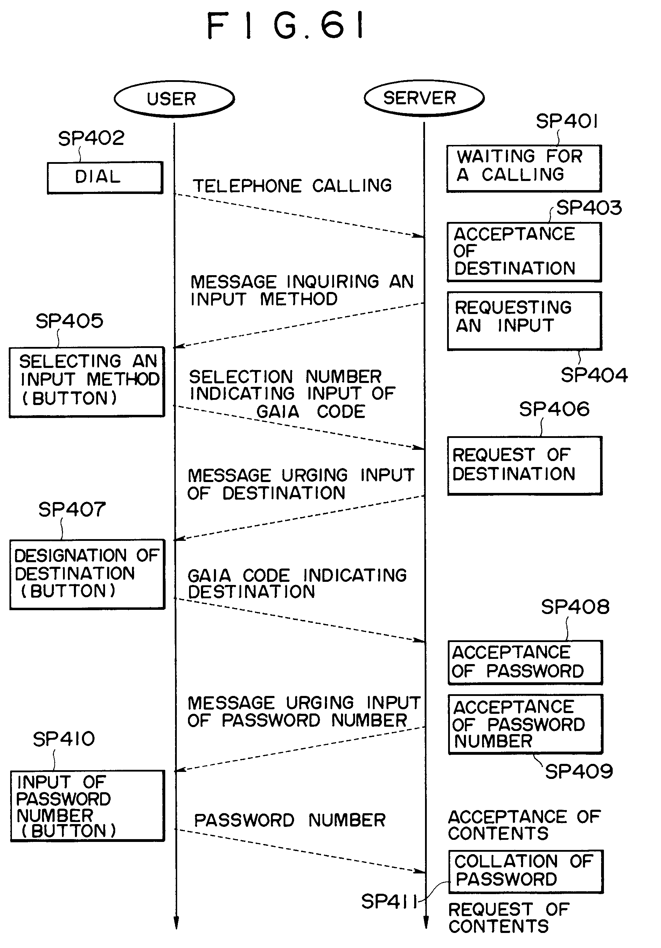

Subsequently, the central processing means 9 extracts, in the step SP395, the linked area from the description of source assigned to this page and shifts to the step SP396 to sequentially add the numbers to the linked area as shown in Fig. 60. Moreover, the central processing means 9 offers by speech synthesis the page contents in the step SP397 for the speech synthesis of the linked part and the number assigned in the step SP396.

Thereafter, the central processing means 9 waits for an instruction from a user and detects, when a user operates the operator corresponding to the link destination to be accessed, this operation with the DTMF signal in the step SP394 to make access to the corresponding page. Here, the central processing means 9 executes the speech synthesis by changing the voice as in the case of accepting the selection of user by the preceding voice recognition and thereby guides the user to the pages to be selected.

Thereby, the server 1 can navigate the world wide web by operating the operator of the telephone terminal depending on the guide by voice.

### (5-1) Message dial utilizing web

This server 1 is capable of registering voice and text of a user in the home page to offer the message dial service. Here, the central processing means 9 records the voice with a voice signal into the recording and reproducing means 12 corresponding to a kind of the terminal used for registration and also records such voice in the external memory apparatus 13 with the voice data of WAV format, etc. In addition, it is also recorded in the external memory apparatus 13 with the text data, image data and video data. Moreover, depending on a kind of the terminal for making access to the voice recorded as explained above, the recorded voice can be output in direct and can also be output as required through data conversion.

When a message content is input by voice or by voice data of the WAV format from a terminal consisting of the computer 4, this message content is recorded in the recording and reproducing means 12 or external memory apparatus 13. When such message content is input by the text data, image data and video data, it is also recorded in the external memory apparatus 13. Meanwhile, when the message content is input by voice or image data from a terminal consisting of the facsimile apparatus 6, it is recorded in the recording and reproducing means 12 or external memory apparatus 13.

On the other hand, when an inquiry is issued for the message from a terminal consisting of the computer 4, message content is output by the voice signal or voice data of WAF format or by the text data, image data, video data, depending on the format designated by a user. Moreover, when an inquiry is issued from a terminal consisting of the facsimile apparatus 6, the video data and text data are converted as required into the image data and are then output. When the message content is formed of voice, it is converted into the text as required by the voice recognition and is then output.

Meanwhile, when the message content is input by voice signal via the telephone terminal 5, telephone terminal incorporated to the facsimile apparatus 6 and private terminal 15, this voice signal is recorded in the recording and reproducing means. When a message inquiry is issued from these apparatuses, the voice signal is reproduced and output from the recording and reproducing means 12. When an inquiry content is text data, the text data is read by the speech synthesis and output depending on user's operation.

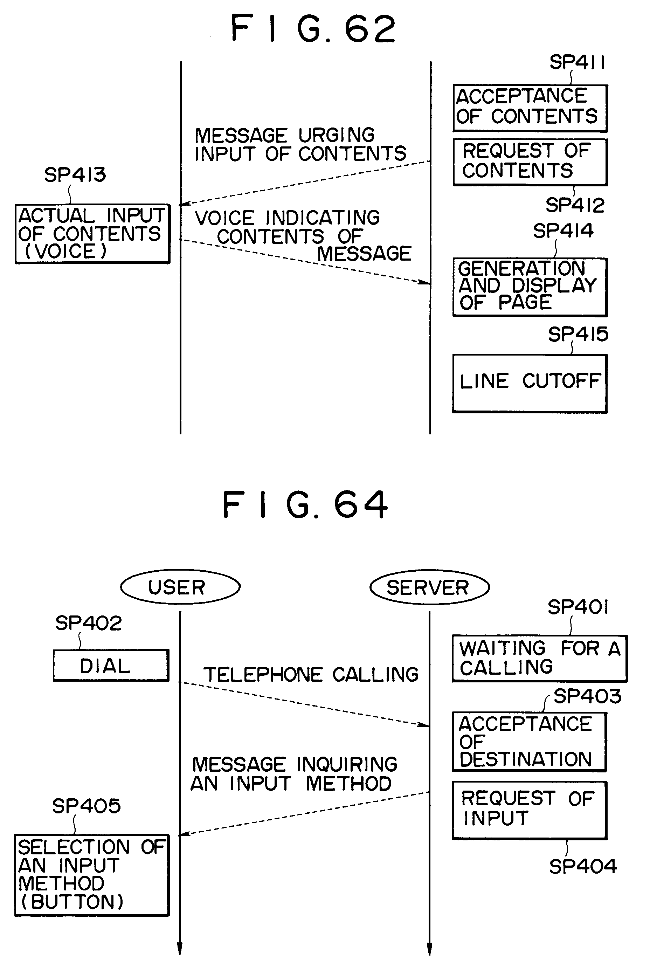

Fig. 61 is a flowchart showing a communication sequence for registering a message in the message service by voice signal. Fig. 62 is a flowchart showing the continuous communication sequence of Fig. 61. Namely, the central processing means 9 waits for the calling in the step SP401 and starts in response to the calling by telephone when a user dials under this condition by operating the operator of the telephone terminal 5 in the step SP402.

Thereafter, the central processing means 9 executes the user identification process to this terminal and presents, upon obtaining user identification, the selection menu by speech synthesis or by reproduction of voice with the recording and reproducing means 12. Moreover, the central processing means 9 starts acceptance of destination in the step SP403 when a user selects registration service in he message dial in response to the selection menu.

In this destination acceptance process, the central processing means 9 inquires, in the step SP404, an input method to a user with the Gaia code. When a user selects the input method with input of the Gaia code by operating the operator of the telephone terminal in the step SP405, the means 9 urges a user to input of destination in the subsequent step SP406. When a user inputs the Gaia code indicating the destination, for example, by operating the operator of the telephone terminal in the step SP407 in response to this urge, the central processing means 9 starts acceptance of password number in the step SP408.

Here, the central processing means 9 urges, in the step SP409, a user to input the password number following the guide by voice and thereafter retrieves, when a user inputs the password number by operating the operator of the telephone terminal in the step SP410 in response to this urge, the documents of world wide web designated by the destination to judge whether the input password number matches the registered password number or not.

When a mismatching result is obtained, the central processing means 9 notifies, by speech synthesis or reproducing the recorded contents, that message dial contents cannot be registered because of mismatching of the password number and thereafter closes the line.

On the other hand, when a matching result is obtained, the central processing means 9 starts acceptance of contents in the step SP411. For acceptance of the contents, the central processing means 9 requests, in the step SP412, a user to input the contents by notifying a message for urging a user to input the contents. In response to this operation, a user voices, in the step SP413, contents of the message dial and thereafter notifies the end of input by operating, for example, the operator "#".

When contents of message dial are input as explained above, the central processing means 9 records this contents in the recording and reproducing means 12 in the step SP414. The central processing means 9 converts this voice, as required, into the voice data of WAV format, in place of the operation explained above, and records this voice data into the external memory apparatus 13. Moreover, the central processing means 9 generates or updates the page of home page adopted to the message dial in accordance with the contents of this voice and thereafter presents this information to a document and then notifies the end of registration to a user in the step SP415 to close the line.

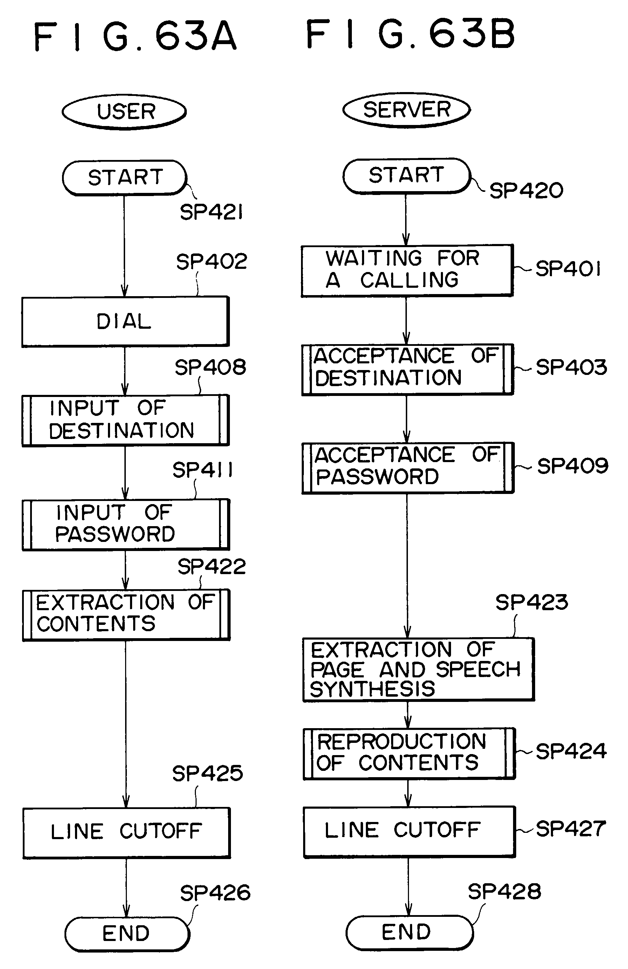

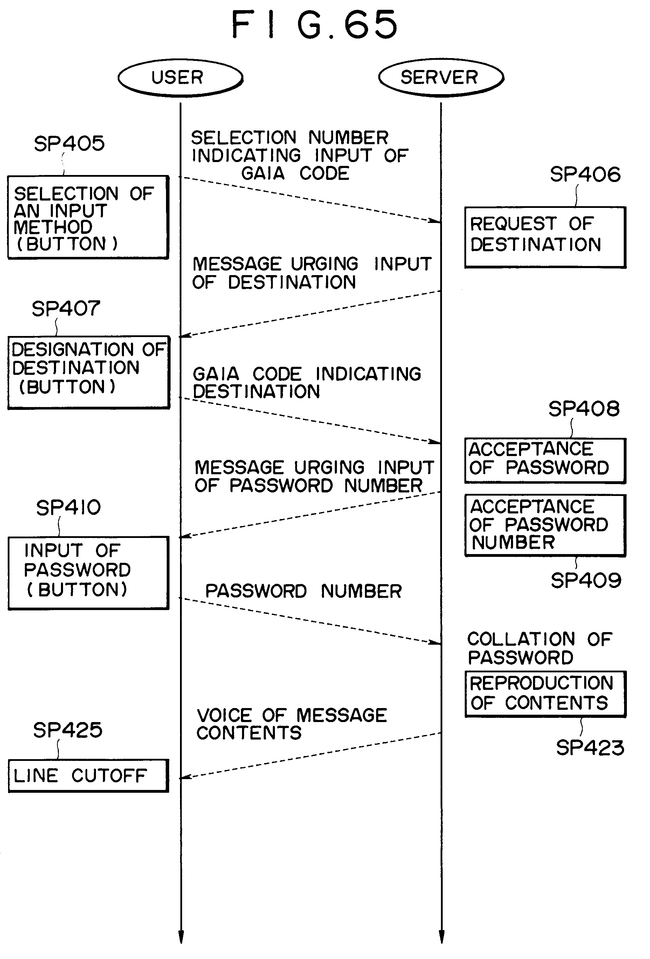

Meanwhile, Fig. 63 shows a processing sequence for making access to the contents of the message dial. This processing sequence is executed by the communication sequence shown in Fig. 64 and Fig. 65. The processes corresponding to Fig. 61 are designated by the common reference numbers through Fig. 63 to Fig. 65.

Namely, the central processing means 9 shifts to the step SP401 from the step SP420 to wait for a calling. Under this condition, when a user shifts to the step SP402 from the step SP421 to dial by operating the telephone terminal incorporated to the facsimile apparatus, the central processing means 9 starts operation in response to the calling by the telephone.

Thereafter, the central processing means 9 executes the user identification process to the terminal and thereafter presents the selection menu by voice and then starts the acceptance of destination in the step SP403 when a user selects the contents check service in the message dial.

For acceptance of destination, the central processing means 9 inquires by voice the input method in the step SP404 and urges a user to input of destination in the subsequent step SP406 (Fig. 65) when a user selects the input method, for example, with the input of Gaia code in the step SP405. When a user inputs the Gaia code indicating the destination, for example, with operation of the operator in the step SP 407, the central processing means 9 starts the acceptance of the password number in the step SP408.

Here, the central processing means 9 urges a user to input the password number following the guide by voice in the step SP409 and retrieves, when a user inputs the password number by operating the operator in the step SP410 in response to this urge, the documents of world wide web designated by the destination in order to judge whether such input password number matches the registered password number or not.

When a mismatching result is obtained, the central processing means 9 notifies, by speech synthesis or by reproducing the recorded contents, that contents of message dial cannot be opened because of mismatching of the password number and thereafter closes the line.

Meanwhile, when a matching result is obtained, the central processing means 9 reproduces, in the steps SP423 and SP424, the registered contents in response to user's operation to instruct extraction of contents in the step SP422. When contents are recorded in the recording and reproducing means 12, the central processing means 9 outputs reproduced contents. When, on the other hand, contents are stored in the external memory apparatus 1 with the voice data of WAV format or with the voice data of WAF format obtained by making access to the other server, this voice data is converted into the voice signal and is then output.

Meanwhile, contents are formed of the text data, contents are read by the speech synthesis. In this case, when the contents include image data and video data, the central processing means 9 notifies by voice the fact to a user.

When message contents are offered by voice as explained above, a user closes the line in the step SP425 and then shifts to the step SP426 to complete this processing sequence. On the other hand, the central processing means 9 also closes the line in the step SP427 and thereafter shifts to the step SP428 to complete this processing sequence.

Thereby, the server 1 is capable of offering the message dial service by effectively utilizing the Internet.

### (5-2) Transmission and reception of message data by the facsimile apparatus:

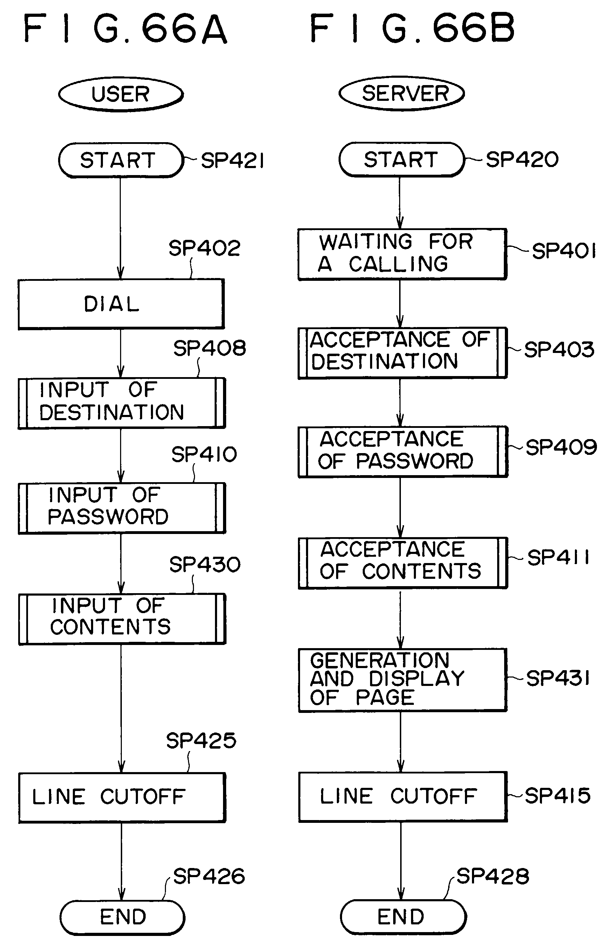

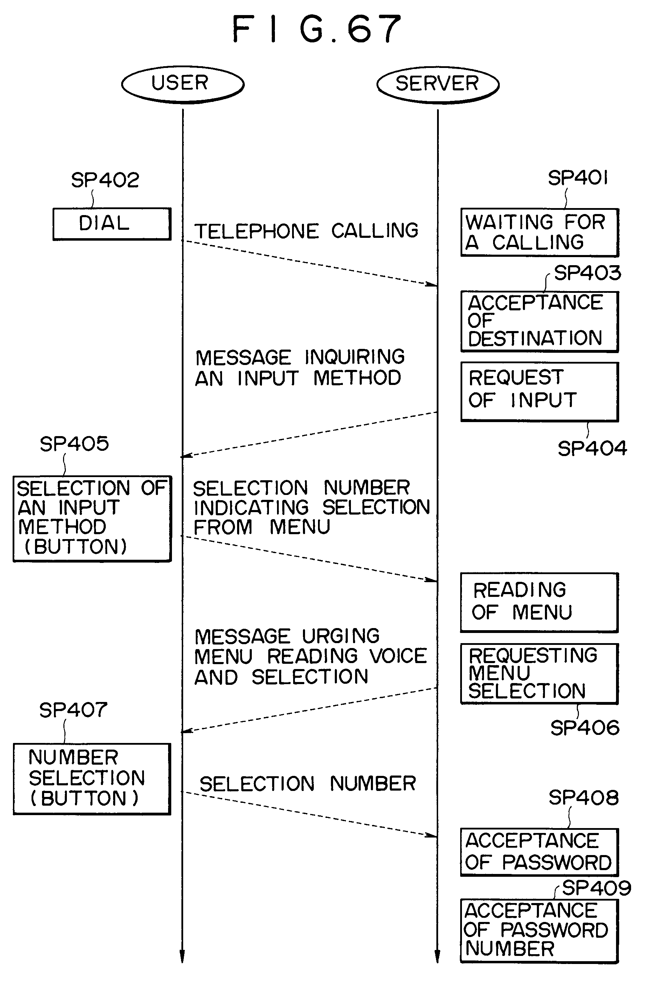

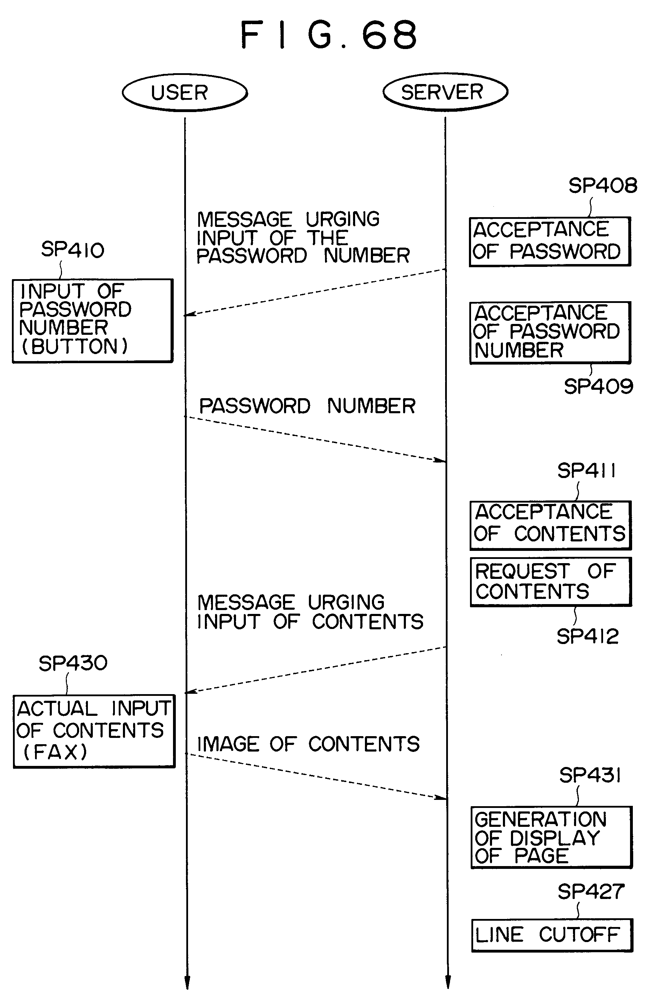

Fig. 66 is a flowchart showing the processing sequence for registering image data by making access to the world wide web from he facsimile apparatus 6. In this processing sequence, the image data by the facsimile apparatus 6 is registered by the communication sequence shown in Fig. 67 and Fig. 68.

In this case, the central processing means 9 accepts input of destination, etc. with the processing sequence similar to that explained above in regard to Fig. 61 to Fig. 65 with the telephone terminal incorporated to the facsimile apparatus 6. Thereby, the processing sequence similar to that explained in regard to Fig. 61 to Fig. 65 is designated by the similar reference codes in Fig. 67 and Fig. 68.

Namely, the central processing means 9 shifts to the step SP410 from the step SP420 to wait for a calling and then starts its operation in response to a telephone calling when a user shifts, under this condition, to the step SP402 from the step SP421 to dial by operating the operator of the telephone terminal 5.

Thereafter, the central processing means 9 executes the user identification process to this terminal and thereafter presents the selection menu and starts acceptance of destination in the step SP403 when a user selects the content registration service in the message dial.

For acceptance of the destination, the central processing means 9 inquires by voice the input method in the step SP404 and urges a user to input a destination in the subsequent step SP406, when a user selects, in the step SP405, the input method, for example, by depressing the operator having the number corresponding to the menu, The central processing means 9 reads the destination menu by means of the speech synthesis and thereafter issues the menu selection request to a user. When a user input the destination by selecting the menu, for example, by operating the operator in response to this request, the central processing means 9 starts acceptance of the password number in the step SP408.

Here, the central processing means 9 urges a user to input of the password number following the guide by voice in the step SP409 and thereafter retrieves, when a user inputs the password number by operation of the operator in the step SP410 in response to above process, the documents of world wide web designated by the destination to judge whether the input password matches the registered password or not.

When a mismatching result is obtained, the central processing means 9 notifies the fact by the speech synthesis and then closes the line. But, a matching result is obtained, the central processing means 9 starts acceptance of contents in the step SP411. For acceptance of the contents, the central processing means 9 sends a message urging a user to input of the contents to request input of the contents in the step SP412. In response to this process, a user operates the operator for transmission regarding a document set to the facsimile apparatus 6 to transmit the image of this document in the step SP430 by operating the operator for transmission.

When contents of message dial is input by image as explained above, the central processing means 9 records the contents to the external memory apparatus 13 in the step SP431. In this case, the central processing means 9 converts an image of this image data into the image data of the JPEC format and records this image to the external memory apparatus 13 by compressing the amount of data. Moreover, in this case, the central processing means 9 generates and updates the page of the home page to be adopted to the message dial corresponding to this image data and then presents this information to the document.

Moreover, the central processing means 9 adds, prior to transmission of the image data of this type, the header information (telephone number, name and department of an originator) transmitted from the facsimile apparatus 6 and then records this information or holds it to the document so that it can use this information for sorting and retrieval of image data. The central processing means 9 also records the sex of a user obtained by making access to the user information management database 13B to use it for classification and retrieval.

Upon completion of these processes, the central processing means 9 notifies a user the end of registration and closes the line in the step SP415 and thereafter shifts to the step SP428 to complete this processing sequence. Meanwhile, a user closes the line in the step SP425 in response to this notice and then shifts to the step SP426 to complete this processing sequence.

For the inquiry to message from a terminal consisting of the facsimile apparatus, a user executes the user identification and checks existence of image registered following the guide by voice obtained through the telephone terminal incorporated to the facsimile apparatus to designate the menu for extracting the contents by designating the page of image data. For this user's designation, the central processing means 9 converts the image data recorded by the JPEG format into the original image data and also converts the image data registered in the other format by a terminal such as computer into the image data corresponding to the facsimile apparatus to transmit this image data.

Thereby, the server 1 assures access to the world wide web also from the facsimile apparatus.

### (6) Book mark service , charging service

### (6-1) Book mark service

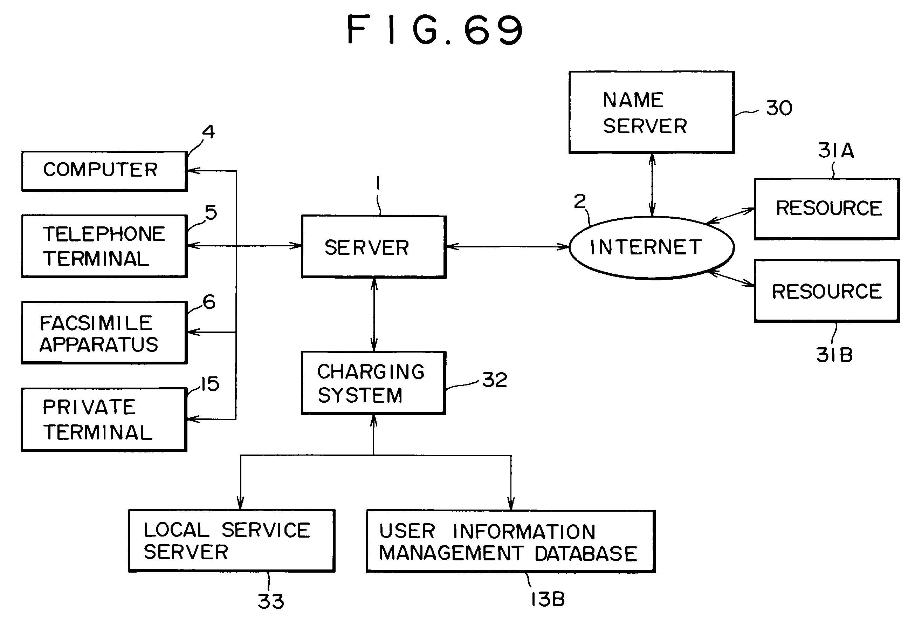

The server 1 also implements book mark service and charging service in separation. Fig. 69 is a block diagram showing the peripheral structure of the server 1 used for these book mark and charging services, etc.

Namely the server 1 makes access to the name server 30 and resources 31A, 31B via the Internet 2 and thereby a user designates the corresponding address for each access. Namely, a user is required each time to input the complicated address. Therefore, the server 1 can register the book mark to the user information management database 13B explained above in regard to Fig. 1 and therefore can access easily without intentional input of address for the pages previously registered using this book mark to originate the electronic mail and moreover use the message dial.

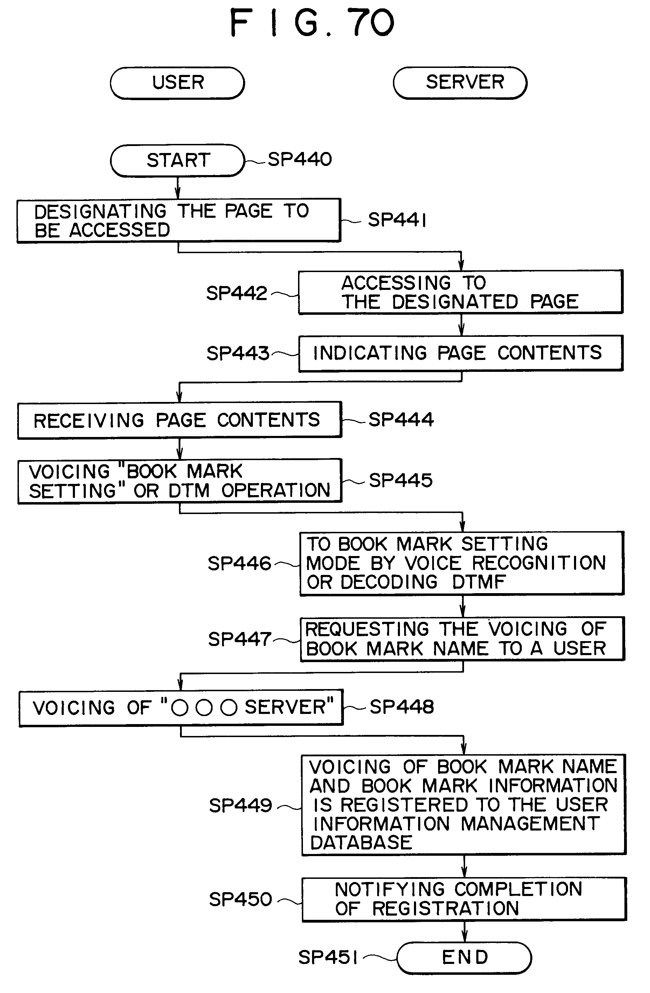

Fig. 70 is a flowchart shoeing the book mark registration service when a user makes access from a telephone terminal. In this case, the central processing means 9 is activated by a telephone call from a user to execute the user identification process and then urge a user to select the service. Here, after selecting the access to the world wide web, a user shifts to the step SP441 from the step SP440 to designate the page to be accessed. In this timing, the central processing means 9 shifts to the step SP442 to make access to the designated page. Subsequently, the central processing means 9 presents contents of the page accessed in the step SP443.

Thereby, a user receives contents of the presented page in the step SP444 to navigate the world wide web by designating the linked words. As explained above, when a user voices "book mark" in the step SP445 under the condition that the page desired by a user is presented or when a user operates the operator, for example, "#" for designating the book mark, the central processing means 9 detects this voice by the voice recognition in the step SP446 or detects operation of this operator with the DTMF signal to enter the book mark registration mode.

In this case, since recognition error of voice due to operation error of a user may be thought, the central processing means 9 urges a user to check the operation and enters the book mark registration mode, upon completion of check.

In the book mark registration mode, the central processing means 9 shifts to, the step SP447 to urge a user to pronounce the book mark name. In response to this urge, when a user pronounces, for example, "○○○ server" in the step SP448, the central processing means 9 acoustically analyzes this pronunciation in the step SP449 and registers the result of acoustic analysis in the user information management database 13B corresponding to the page being presented now. In this case, the central processing means 9 registers this acoustic analysis result as the voice template to be used for voice recognition for the later access. The central processing means 9 holds in direct the voice as required to use it as the voice template. Moreover, in this registration process, the central processing means 9 notifies a user the voice recognition result, for example, with address for identifying the page being presented now and thereby executes the book mark registration after obtaining the answer for acknowledgment from a user.

Subsequently, the central processing means 9 shifts to the step SP450 to send a notice indicating the end of registration to a user and then shifts to the step SP451 to complete this processing sequence.

During a series of book mark registration, when a user designates an input method of the book mark process, the central processing means 9 detects the operator operated by a user with the DTMF (Dual Tone Multi Frequency) signal in place of the voice of user by the voice recognition to register the number corresponding to the operator and the page being presented now into the user information management database 13B.

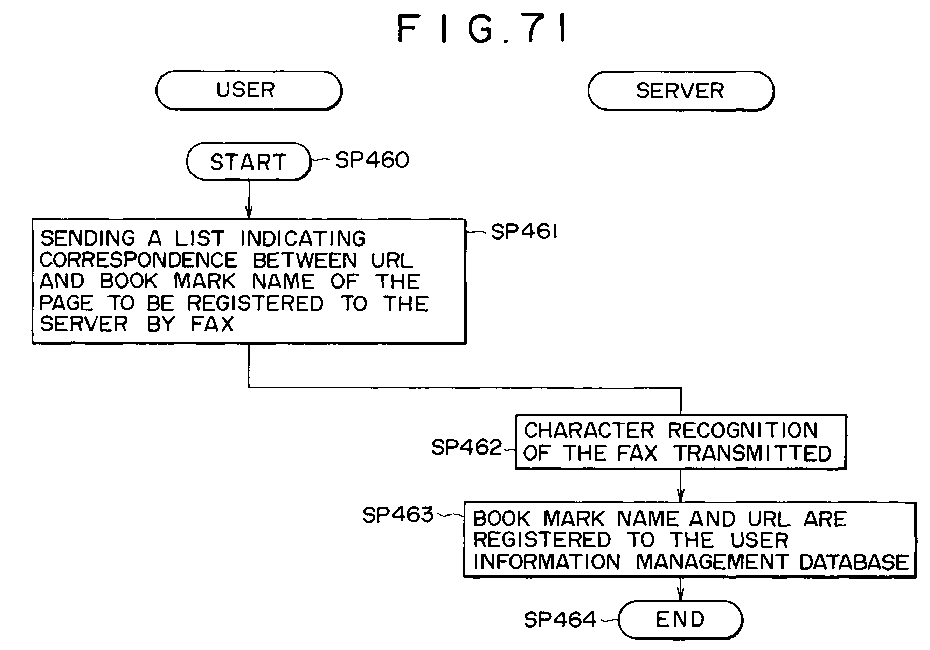

Moreover, when a user makes access from the telephone terminal incorporated to the facsimile apparatus 6, the central processing means 9 executes the book mark registration process with the voice recognition or operation of the operator. Moreover, in this case, as shown in Fig. 71, the book mark registration process can also be executed by the facsimile apparatus 6 depending on selection by user, in addition to registration explained above.

Namely, the central processing means 9 guides by voice a user to input the book mark name corresponding to the address by writing and sends message urging transmission of image data to a user, when a user selects book mark registration by the facsimile apparatus 6 in the book mark registration mode. In response to this process, a user shifts to the step SP461 from the step SP460 to transmit a document writing in parallel the address (URL: Uniform Resource Locator) of the page to be registered and the book mark name from the facsimile apparatus 6. Thereby, the central processing means 9 executes the character recognition process by the character recognition means 14 in the step SP462 to obtain the address and book mark name written in the document.

Subsequently, the central processing means 9 registers, in the step SP463, the address and book mark name to the user information management database 13B and thereafter shifts to the step SP464 to complete this processing sequence. In this case, the central processing means 9 notifies the address and corresponding book mark name of text data format obtained by character recognition to a user by the speech synthesis and thereby registers the address and book mark name after obtaining acknowledgment of user.

Thereby, the server 1 can register the book mark with the facsimile apparatus.

In this embodiment, the central processing means 9 executes, when accessed from the computer, the book mark service similar to that offered by an ordinary browser. In this book mark service, the book mark is registered in the user information management database 13B, like the book mark service in the telephone terminal, etc. as explained above, and the book mark registered for only a person may be used as required in the different terminals. Thereby, this server can easily and surely make access, also from the telephone terminal at the distant area, to the page which is usually accessed from the computer 4 used at the home by a user and moreover can check contents of the page by making use of the service by voice.

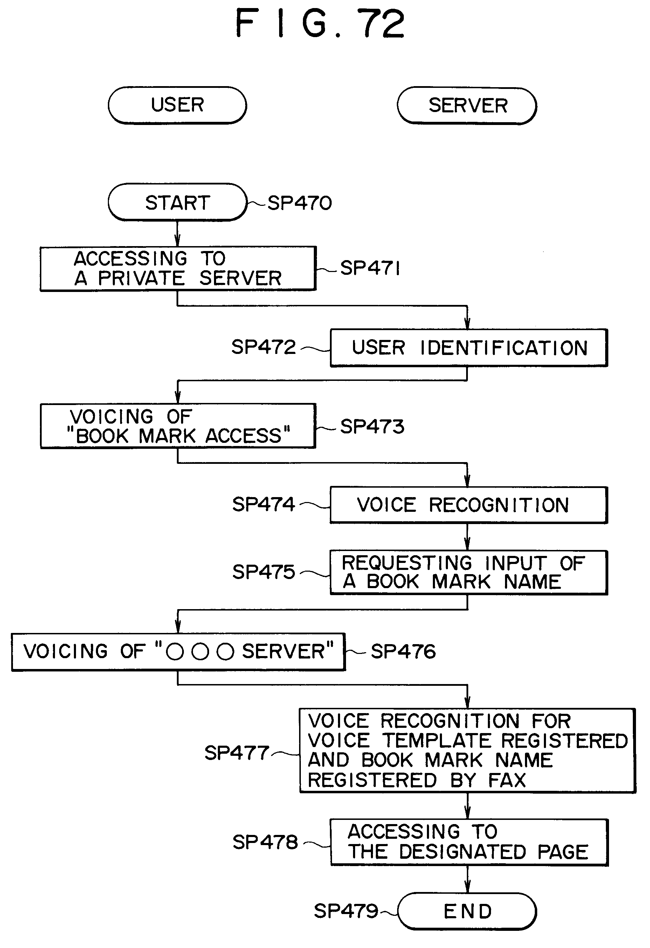

Namely, Fig. 72 is a flowchart showing a processing sequence of the book mark process when access is made from the telephone terminal 5 and telephone terminal incorporated to the facsimile apparatus 6 and when access is made by selecting the voice serve with the private terminal 15.

In this case, the central processing means 9 is activated when a user shifts to the step SP471 from the step SP470 to connects the line to the means 9 and executes the user identification process in the step SP472. When a user pronounces the voices for book mark access in the step SP473 after the user identification process is completed, or the selection menu is being presented by voice to a user and moreover when various pages are introduced by voice, the central processing means 9 detects pronunciation of these voices by voice recognition in the step SP474.

In the subsequent step SP475, the central processing means 9 outputs by speech synthesis a message urging input of the book mark name and then waits for an input from a user. In this case, the central processing means 9 notifies, depending on designation by user by operation of operator or by voice, the registered book mark together with the corresponding address.

In the subsequent step SP475, the central processing means 9 outputs by speech synthesis, in the step SP475, a message urging input of the book mark name and thereafter waits for input from a user. In this case, the central processing means 9 notifies by voice the registered book mark together with the corresponding address depending on designation by user by operation of operator or by voice.

In response to this process, when a user pronounces, for example, the book mark name "○○○ server" in the step SP476, the central processing means 9 detects, in the step SP477, the words pronounced by the voice recognition to retrieve the corresponding address. This voice recognition process is executed using the voice registered in the user information management database or voice template obtained by the acoustic analysis result and thereby the central processing means 9 detects the registered corresponding voice recognition result and the address corresponding to this voice recognition result. Moreover, when the book mark names obtained by character recognition of the image data are registered in the user information management database, the corresponding address is detected by the voice recognition process with reference to the text data which has been converted previously and registered.

Subsequently, the central processing means 9 notifies by voice the voice recognition result and address data to a user and makes access to the corresponding page in the step SP478, upon obtaining acknowledgment of user by operation of the operator or by voice and thereafter shifts to the step SP479 to complete this process.

When a user selects by operation of the operator or by voice the input of book mark by operator in the access by the book mark, the central processing means 9 detects the operator operated by a user with the DTMF signal in place of the book mark by the voice recognition and also detects the number corresponding to this operator and address of the corresponding page from the user information management database to make access to this detected page after waiting for check by a user.

Thereby, the server 1 can easily and surely make access to the page registered previously by means of the book mark name even with operation of the operator of the telephone terminal.

The central processing means 9 accepts, when a user has made access from the facsimile apparatus, designation of book mark access with the input by operation of the operator or by voice and executes the character recognition process to the image data input subsequently as in the case of the book mark registration to transmit contents of the corresponding page with the image data.

When a user only transmits a document to the server 1, depending on the preceding registration by user, without selection of any service, the central processing means 9 executes the user identification process through communication with the facsimile apparatus before the start of transmission and offers here the book mark access service to user. Namely, the central processing means 9 omits selection of service by means of the telephone terminal incorporated to the facsimile apparatus 6 and detects the book mark name written in the document through the character recognition to make access to the corresponding page. Moreover, the central processing means 9 converts the video data and text data of this page to the image data corresponding to the facsimile apparatus 6 to transmit this image data.

Thereby, the server 1 can offer, for example, the particular news, etc., for the access from the facsimile apparatus, by the simplified operation such as only transmission of the document to further improve operation flexibility.

### (6-2) Other services

The central processing means 9 can provide various services depending on selection by users in addition to the services explained above. As already described, for the selection by a user, various input methods may be used corresponding to the apparatuses used. These services are implemented mainly by the MAM server also explained above.

Namely, the central processing means 9 collects the access from users for each page and notifies the popular pages to a user depending on the collection result. Moreover, the pages opened only for the constant period, so-called the recommended pages are also notified.

In addition, the central processing means 9 retrieves these pages and presents to a user depending on selection by user. On the occasion of retrieval, the central processing means 9 retrieves the page which a user desires with reference to the keyword input by user and a plurality of similar words with reference to this keyword. Moreover, in this case, the central processing means 9 accepts input of these keywords through the voice recognition.

Moreover, the central processing means 9 offers the various kinds of services, for example, of sports, literature and arts corresponding to classification of books and retrieves and presents the pages corresponding to the kind of service by selection by voice or operation of corresponding operator.

In addition, for the input of keyword by voice, it is compared with the voice information provided in the resource on the Internet, depending on the selection, for example by the DP matching method and thereby the page which a user desires is notified.

When a user instructs retrieval by inputting image data and video data from the facsimile apparatus, the central processing means 9 compares these data with the video information provided on the resource of Internet, for example, by means of the template matching and notifies the page which a user desires depending on this comparison result.

Moreover, the central processing means 9 classifies the information depending on age, sex of user and type of apparatus registered in the user information management database and offers the information service in the sequence considered fitted to user. Namely, for a male user, for example, since he is assumed to be interested in sports, the home pages regarding sports are guided through detail classification. On the other hand, for a female user, since she is assumed to be interested in fashion, the home pages regarding fashion are guided through detail classification. These guides are executed in common even when information may be offered in any type of voice and text, etc.

### (6-3) Charging service

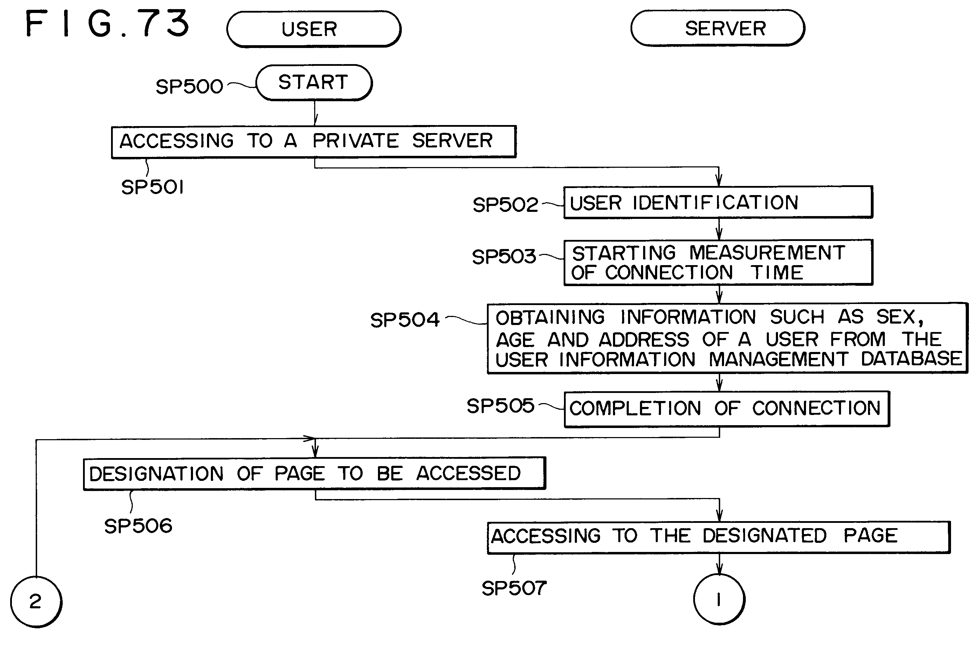

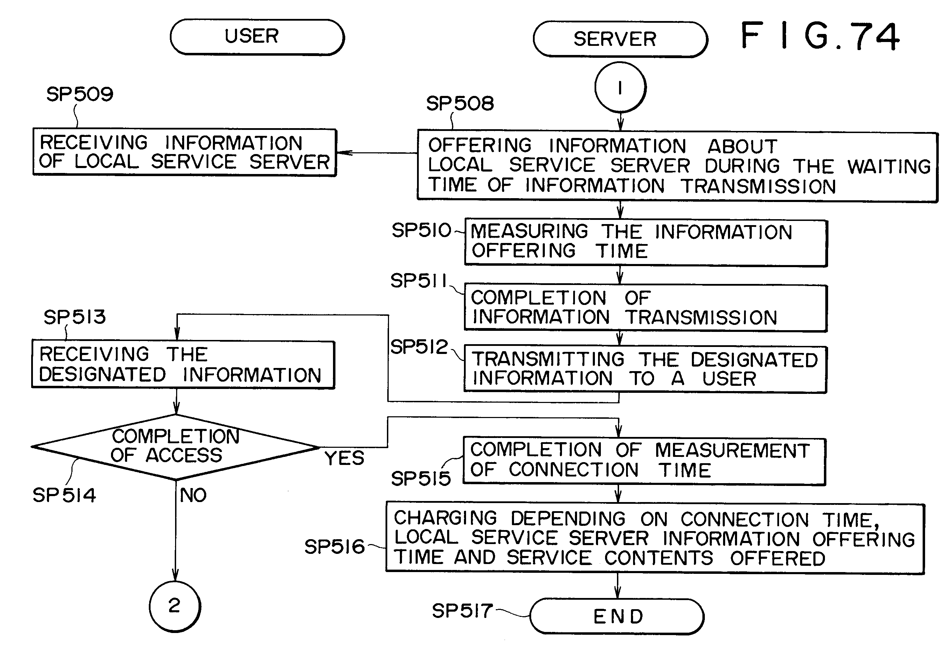

Fig. 73 and Fig. 74 are flowcharts showing the charging service. This charging service is offered by a charging system 3 formed of a computer incorporated to the server 1, a local service server 33 formed of a similar computer and the server 1 (Fig. 69) so that load of user may be alleviated and dissatisfaction for connection waiting time may also be dissolved.

That is, the local service server 33 holds the video data of commercial and video data for notifying change of service, etc. in unit of sex, age and address of user and access time and moreover corresponding to a kind of home page. The server 1 offers the data suitable for user from above data during the period until the information of the corresponding page can be obtained after a user has designated the desired page and moreover deposits the charges to an advertiser offering these data, in place of depositing the charge to a user, while these data are offered.

Namely, the central processing means 9 is activated, when a user shifts to the step SP501 from the step S500 and connects the line to the server 1, and executes the user identification process in the step SP502. Subsequently, the central processing means 9 shifts to the step SP503 to drive the charging system 32. In response to this process, the charging system 32 starts measuring of connection time in the step SP503 and reads information such as sex, age and address from the user information management database 13B in the step SP504. The central processing means 9 presents the services for selection to a user in the step SP505.

When a user selects the page to be accessed in the step SP506 under this condition, the central processing means 9 shifts to the step SP507 to start the access to the corresponding page. The charging system 32 loads, in the subsequent step SP508 (Fig. 74), loads the information corresponding to the personal information of a user obtained in the step SP504 from the local service server 33 to offer this information to a user via the server 1. In this case, the charging system 32 offers the corresponding information with reference to the current time and changes the information to be offered to a user depending on the selection previously registered by user to the user information management database 13B or on the selection by user at the time of making access.

Thereby, a user can check, in the step SP509, changes of commercial and service from this information during the period until the information of the desired page can be obtained and thereby a user can dissolve the irritated feeling until the connection may be established. Particularly when since the corresponding information is supplied with reference to sex and age, etc. of a user, he can obtain just interested information to eliminate dissatisfaction of this kind. Namely, in case a male user of twenties frequently accesses to the pages regarding automobiles, a commercial of automobiles is offered to him. Moreover, depending on the time schedule, broadcast of car race is served or, depending on the region, automobile show, etc. held in this region is guided. In addition, when a user selects the service, for example, for reading the headline of news papers, the corresponding service is offered.

As explained above, when the information of local service server 33 is offered, the charging system 32 starts, in the step SP510, measurement of time required for information service. The central processing means 9 sends a notice, in the step SP511, when the information of the page designated by a user is obtained and thereby completes transmission of information such as commercial and measurement of time for information service and shifts to the step SP512 to send the information of the desired page to a user.

Thereby, a user can obtain the information of the designated page in the subsequent step SP513. Accordingly, a user shifts to the step SP514 to judge whether access should be completed or not. When access is continuously required, a user shifts to the step SP506 to wait again by viewing he commercials until the information of the desired page can be obtained. On the other hand, when access is completed, a charging system 32 completes measurement of connection time, in the step SP515, depending on the operation by a user, be receiving a notice from the central processing means 9 and thereafter deposits the charge to the advertiser and user, in the subsequent step SP516, depending on the connection time of user, information offering time of commercials and contents of information served. Namely, when a charge-free data is offered during the connection waiting time, the charge of this waiting time is deposited to a person who has provided such data (an advertiser in the case of commercial), in place of a user. Moreover, when a pay data is served during the connection waiting time, the waiting time charge and charge of information served are deposited to a person who has served such data, in place of a user. In addition, depending on the contract with the advertiser, the charge or a part of the charge deposited in accordance with the connection time may be deposited to the advertiser.

### (7) Effect of the Embodiment

According to the structure explained above, access to the Internet can be realized even from a telephone terminal by combining the codes corresponding to the operators to be operated at the telephone terminal to form the code such as an address required for transmission and reception of information. Moreover, in this case, with formation of a user information management database by combining such codes to uniquely identify the terminal and recording of various pieces of information in this database, the data conversion process, data transfer process, information service process by voice and charging process, etc. corresponding to a type of terminals can be executed by effectively using the information of this database and compensating for the information of this database with operations by a user. Accordingly the operation flexibility can further be improved by easily utilizing the information network of this type.

### (8) Other embodiments

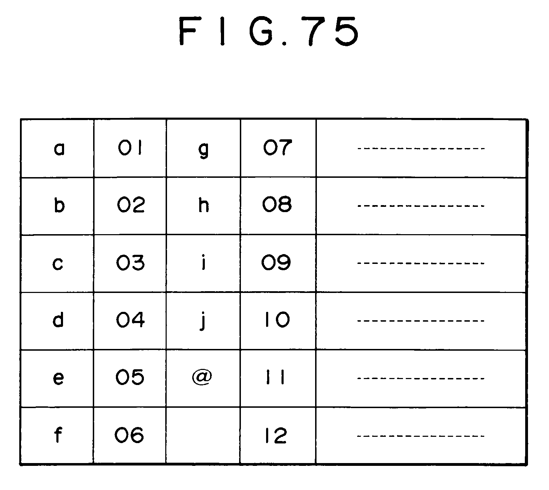

In above embodiment, the ASCII code has been converted into the Gaia code by converting character code expressed by the hexadecimal number in the ASCII code into the decimal number of three digits. The present invention is not limited thereto and it is also possible, as shown in Fig. 75, that combination of operators "0 to 9, * and #" which can be operated on the telephone terminal may be only replaced with alphanumerics with reference to the conversion table. Namely, in this case, alphabet "a" corresponds to operation of operator "01" and when a user designates the address "abc@eee.hhh.jjj" with address designation in the ordinary Internet from a telephone terminal, the numerical data of "010203110505051208080812101010" is input.

Moreover, in above embodiment, various services are offered utilizing a user information management database for the destination consisting of electronic mail termination terminal and access terminal of world wide web, but the present invention is not limited thereto and it is also possible to structure a database of information origination terminal with the user information management database and thereby various services are offered using this database. Namely, format of data transmitted by a terminal as the information originating terminal and language formed of data may be identified to provide the services such as data conversion and translation, etc.

Moreover, in the embodiment explained above, the area code of telephone network is used as the coordinate data for identifying an information originating terminal or an information destination terminal, but the present invention is not limited thereto but a regional code corresponding to the mail number can also be used. Thereby, services by mail can further be enriched.

Moreover, in above embodiment, direct access to the personal data with the Gaia server using the server program is disabled but the present invention is not limited thereto and it is also possible that the MAM server and Gaia server are constituted from a private computer, disabling direct access to the personal data from the Gaia server.

Moreover, in above embodiment, data format is converted when a user makes access to the electronic mails, but the present invention is not limited thereto and data may be converted, for example, using the time schedule having comparative allowance and data may also be converted when data is input.

Moreover, in above embodiment, the voice signal is converted to the voice data of WAV format or ISDN µ-law format, but the present invention is not limited thereto and the voice data may be generated by adopting AU, etc.

Moreover, in above embodiment, the present invention is applied to the information network consisting of the Internet, but the present invention is not limited thereto and the present invention can also be adopted to information networks formed in various scales.

Moreover, in above embodiment, access to the information network from a telephone terminal is enabled by combining the codes corresponding to the operator to be operated at the telephone terminal to form the code such as address required for transmission and reception of information. Therefore, access to the information network from a terminal of the simplified structure can be realized.

Moreover, in this case, with formation of a user information management database and recording of various pieces of information of a user to this database by combining the codes to uniquely identify the terminal, data conversion process, data transfer process, information service process by voice and charging process, etc. corresponding to the type of terminal can be executed by effectively utilizing information stored in the database and thereby the information network of this type can be easily used to improve operation flexibility.

## Claims

1. An information processing apparatus connected to information network for transmitting and receiving various pieces of information, comprising:
means for (3) receiving a code, which is an identification code input from one communication terminal (4, 5, 6, 15) among those of a plurality of kinds on the same network (2) belonging to a first user and is formed by combination of the codes corresponding to operators operated at said communication terminal, to identify at least one communication terminal of a plurality of kinds on he same network belonging to a second user or an information originating terminal offering information on the network as an access destination;
means (9) for obtaining an address of the access destination corresponding to said identification code received; and
means (7) for making communication between said address obtained and communication terminal of the first user.

2. An information processing apparatus according to claim 1, wherein said identification code includes an index code which indirectly indicates an address of said access destination and
said apparatus further comprising:
a retrieval table (13A) storing said identification code and address of communication terminal belonging to the second user or address of said information originating terminal on one to one basis; and
means for comparing said input identification code with said retrieval table (13A) to obtain address of access destination corresponding to said identification code.

3. An information processing apparatus according to claim 2, wherein said identification code is transmitted through data compression.

4. An information processing apparatus according to claim 2, wherein said index code is formed in the hierarchical structure.

5. An information processing apparatus according to claim 1, wherein said identification code is formed of an attribute data indicating a kind of access destination and a personal data indicating an address of access destination.

6. An information processing apparatus according to claim 5, wherein said personal data includes an access right information indicating propriety of access; and
said apparatus further comprising:
means for restricting access to said personal data based on said access right information.

7. An information processing apparatus according to claim 6, wherein said personal data any of the electronic mail, telephone number of telephone terminal, facsimile apparatus number and address.

8. An information processing apparatus according to claim 7, wherein an address of corresponding said personal data is output in order to mail information transmitted to or received from a computer (4).

9. An information processing apparatus connected to information networks for transmitting and receiving various pieces of information, comprising:
means (3) for receiving a code, which is an identification code input from one communication terminal (4, 5, 6, 15) among those of a plurality of kinds on the same network (2) belonging to a first user and is formed by combination of the codes corresponding to operators operated at said communication terminal, to identify at least one communication terminal of a plurality of kinds on the same network belonging to a second user or an information originating terminal offering information on the network as an access destination;
management means (23) for administrating individual data indicating incorporation of said identification code in correspondence to said identification together with a kind of access object; and
control means for controlling communication of said information depending on contents administrated by said management means (23).

10. An information processing apparatus according to claim 9, wherein said management means (23) includes link information instructing link with said communication terminal (4, 5, 6, 15).

11. An information processing apparatus according to claim 10, wherein said management means (23) includes time management information indicating the schedule of incorporated user of said identification code.

12. An information processing apparatus according to claim 10, wherein said management means (23) includes information regarding conditions for allowing the link corresponding to said link information.

13. An information processing apparatus according to claim 12, wherein said management means (23) includes the conditions for invalidating link together with the information regarding conditions for allowing link.

14. An information processing apparatus according to claim 9, wherein said means for controlling information communication transfers the information originated to the predetermined user depending on contents registered to said management means (23).

15. An information processing apparatus according to claim 14, wherein said means for controlling information communication transfers said information in accordance with the address of said information originating terminal.

16. An information processing apparatus according to claim 10, wherein said means for controlling information communication transfers, depending on said link information, the information originated to said second user to the link destination linked to said identification code.

17. An information processing apparatus according to claim 11, wherein said means for controlling information communication transfers said information in accordance with said time management information.

18. An information processing apparatus according to claim 12, wherein said means for controlling information communication transfers said information in accordance with said link permitting conditions and said link information.

19. An information processing apparatus according to claim 9, wherein said means for controlling information signal converts said information to be transferred in accordance with a kind of said access object.

20. An information processing apparatus connected to information networks for transmitting an input information input via a communication terminal, comprising:
means (3) for receiving a code, which is an identification code input from one communication terminal (4, 5, 6, 15)among those of a plurality of kinds on the same network (2) belonging to a first user and is formed by combination of the codes corresponding to operators operated at said communication terminal, to identify at least one communication terminal of a plurality of kinds on the same network belonging to a second user
means (9) for obtaining an address of the access destination corresponding to said received identification code;
means for discriminating a type of the communication terminal of the access destination from said address obtained; and
means for transmitting, after data conversion, said input information corresponding to a type of said communication terminal discriminated.

21. An information processing apparatus according to claim 20, wherein said input information is formed of a voice signal and said voice signal is transmitted after it is converted to the text data through voice recognition (10).

22. An information processing apparatus according to claim 21, wherein the image formed by said text data is transmitted by image data or video data.

23. An information processing apparatus according to claim 20, wherein said input information is text data and said text data is transmitted by a voice signal through speech synthesis (11).

24. An information processing apparatus according to claim 20, wherein said input information is a voice signal and said voice signal is transmitted after it is converted to voice data of the predetermined format through the analog-to-digital conversion process.

25. An information processing apparatus according to claim 20, wherein said input information is an image data input via a facsimile apparatus (6) and said image data is transmitted after it is converted to text data by executing character recognition process (14) to the image formed by said image data.

26. An information processing apparatus according to claim 25, wherein said text data is transmitted by a voice signal through the speech synthesis (11).

27. An information processing apparatus which is connected to an information network for accumulating various pieces of input information inter-related organically with each other for transmitting and receiving said input information between said information storing means and a terminal, comprising:
means for forming the identification code required for transmission and reception of said input information through combination of the codes corresponding to the operators operated on the telephone terminal (5); and
means for totally or partially converting said input information on the occasion of inputting or outputting said input information to or from said information storing means.

28. An information processing apparatus according to claim 27, wherein said input information is a voice signal and said voice signal is transferred after it is converted to text data through speech synthesis (11).

29. An information processing apparatus according to claim 28, wherein video formed by said text data is transmitted by an image data or by video data.

30. An information processing apparatus according to claim 27, wherein said input information is text data and said text data is transmitted by voice signal through speech synthesis.

31. An information processing apparatus according to claim 27, wherein said input information is formed of voice signal and said voice signal is transmitted after it is converted to the voice data of the predetermined format through the analog-to-digital conversion process.

32. An information processing apparatus according to claim 27, wherein said input information is image data input via a facsimile apparatus (6) and said image data is transmitted after it is converted text data by executing the character recognition process (14) to the image formed by said image data.

33. An information processing apparatus according to claim 32, wherein said text data is transmitted by voice signal through speech synthesis (11).

34. An information processing apparatus being connected to an information network for transmitting and receiving various pieces of information, comprising:
means for forming the identification code required for transmission and reception of said information by combining the codes corresponding to the operators operated on the telephone terminal (5); and
means for transmitting said information input from the information terminal by adding thereto an address code consisting of said identification code.

35. An information processing apparatus according to claim 34, wherein said address code is generated by executing voice recognition to the voice signal input from a telephone terminal (5).

36. An information processing apparatus according to claim 35, wherein said address code is formed by selecting the code previously registered, in accordance with the voice recognition result.

37. An information processing apparatus according to claim 36, wherein said address code selection is executed by selecting the code corresponding to a word by recognizing, through voice recognition (10), the voice of said word which is previously and individually registered by a user.

38. An information processing apparatus according to claim 34, wherein said address code is formed by detecting pronunciation of voice corresponding to the guide by voice.

39. An information processing apparatus according to claim 34, wherein said address code is formed by detecting operation of operator on a telephone terminal (5) or the terminal having the same operator as the telephone terminal (5).

40. An information processing apparatus according to claim 39, wherein said address code is formed by detecting said operation of operator corresponding to the guide by voice.

41. An information processing apparatus according to claim 34, wherein said address code is formed by character recognition (14) of image formed by the image data input from a facsimile apparatus (6).

42. An information processing apparatus according to claim 34, wherein said address code can be set again.

43. An information processing apparatus being connected to an information network for transmitting an electronic mail input via a terminal, comprising:
means for forming the identification code required for transmission and reception of said electronic mail through combination of codes corresponding to operator operated on a telephone terminal (5); and
means (8) for transmitting, through data conversion, an input information forming contents of said electronic mail in accordance with selection of an originating terminal of said electronic mail or in accordance with a destination terminal of said electronic mail.

44. An information processing apparatus according to claim 43, wherein said input information is voice signal and said voice signal is transferred after it is converted to text data by voice recognition (10).

45. An information processing apparatus according to claim 44, wherein an image formed by said text data is transmitted by image data or by video data.

46. An information processing apparatus according to claim 43, wherein said input information is text data and said text data is transmitted by voice signal through the speech synthesis (11).

47. An information processing apparatus according to claim 43, wherein said input information is voice signal and said voice signal is transmitted after it is converted to voice data of the predetermined format by the analog-to-digital conversion process.

48. An information processing apparatus according to claim 43, wherein said input information is formed of an image data input via a facsimile apparatus (6) and said image data is transmitted after it is converted to text data through character recognition process (14) of an image formed by said image data.

49. An information processing apparatus according to claim 48, wherein said text data is transmitted by voice signal through speech synthesis (11).

50. An information processing apparatus according to claim 43, wherein said input information is expressed by combination of codes corresponding to operator operated on a telephone terminal (5).

51. An information processing apparatus according to claim 43, wherein said input information is selected from the text registered previously in response to operation of operator on a telephone terminal (5).

52. An information processing apparatus according to claim 43, wherein said input information is selected from the text registered previously in accordance with the voice recognition result.

53. An information processing apparatus according to claim 43, wherein the data indicating the time for use is added to said input information.

54. An information processing apparatus according to claim 43, wherein the identification data indicating a kind of input information terminal to said input information.

55. An information processing apparatus according to claim 43, wherein the identification data indicating characteristic of voice of an originator to said input information.

56. An information processing apparatus being connected to an information network for storing various pieces of information inter-related organically with each other to an information storing means to transmit or receive said input information between said information storing means and a terminal, comprising:
means for forming the identification code required for transmission and reception of said input information by combining the codes corresponding to operator operated on a telephone terminal; and
means for adding classification information of said input information to said input information to be stored in said information storing means.

57. An information processing apparatus according to claim 56, wherein said classification information is the data for identifying a kind of input terminal having input said input information.

58. An information processing apparatus according to claim 56, wherein said classification information is the identification data indicating characteristic of a user having input said input information.

59. An information processing apparatus according to claim 56, wherein said identification data is detected by said voice of user.

60. An information processing apparatus according to claim 56, wherein said classification information is formed by combination of codes corresponding to operators operated on a telephone terminal (5).

61. An information processing apparatus according to claim 56, wherein characteristic of voice of user is utilized for user identification for access to said information network (2).

62. An information processing apparatus according to claim 1, wherein user identification is executed by checking pronunciation of keyword registered previously for the access to said information network.

63. An information processing apparatus being connected to an information network for transmitting voice signal input via a terminal, comprising:
means for forming the identification code required for transmission and reception of said voice signal by combining the codes corresponding to operators operated on a telephone terminal;
means (8) for transmitting said voice signal through data conversion; and
means for notifying amount of data after said data conversion to a charging system.

64. An information processing apparatus being connected to an information network for storing various pieces of information inter-related organically with each other to an information storing means for transmission and reception of said input information between said information storing means and a terminal, comprising:
means for forming the identification code required for transmission and reception of said input information by combining the codes corresponding to operators operated on a telephone terminal, and
means for offering, in response to the request from said terminal, the information held separately to said terminal during access to said input information stored in said information storing means.

65. An information processing apparatus according to claim 64, wherein an attribute data indicating characteristic of a user making access to said information is held in accordance with said identification code and said information held separately is selected and offered in accordance with said attribute data.

66. An information processing apparatus being connected to an information network for originating information input via a terminal, comprising:
means for forming the identification code required for transmission and reception of said information by combining the codes corresponding to operator operated on a telephone terminal, and
means for offering said information by voice in accordance with said identification code or selection by user.

67. An information processing apparatus according to claim 66, wherein said information is offered by voice through the speech synthesis process (11).

68. An information processing apparatus according to claim 66, wherein said information is offered by voice by reproducing the contents previously recorded.

69. An information processing apparatus according to claim 68, wherein said voice is varied or said voice is changed over in accordance with contents of said information or operation by user.

70. An information processing apparatus according to claim 69, wherein said variation of voice is executed by changing speed and level of the voice.

71. An information processing apparatus according to claim 69, wherein said voice is once punctuated at the space of said information to change the voice quality or language in order to vary said voice.

72. An information processing apparatus according to claim 66, wherein said information to be offered is notified following the guide by voice.

73. An information processing apparatus according to claim 66, wherein said information to be offered is selected for the offering purpose.

74. An information processing apparatus according to claim 73, wherein said information is an electronic mail and said selection process is executed with reference to the subject of said electronic mail.

75. An information processing apparatus according to claim 73, wherein said information is an electronic mail and said selection process is executed with reference to the length of contents.

76. An information processing apparatus according to claim 73, wherein said information is an electronic mail and said selection process is executed in accordance with inclusion or not inclusion of predetermined characters in the subject.

77. An information processing apparatus according to claim 73, wherein said information is an electronic mail and said selection process is executed in accordance with inclusion or not inclusion of characters input or selected by a user in said subject.

78. An information processing apparatus according to claim 73, wherein said information is an electronic mail and said selection process is executed in accordance with inclusion or not inclusion of a part of the character group input or selected by a user in said subject.

79. An information processing apparatus being connected to an information network (2) to store various pieces of information inter-related organically with each other for transmitting and receiving said information between said information storing means (13) and a terminal, comprising:
means for forming the identification code required for transmission and reception of said information by combining the codes corresponding to operators operated on a telephone terminal, and
means for adding, to said information, the control code for identifying a part output by the speech synthesis and a part output by the text.

80. An information processing apparatus according to claim 79, wherein said information is selectively offered by voice in accordance with said control code.

81. An information processing apparatus according to claim 80, wherein said information is offered through designation by voice.

82. An information processing apparatus according to claim 79, wherein the headline of said information is offered by the speech synthesis of the hierarchical structure.

83. An information processing apparatus according to claim 79, wherein the headline of said information is offered by the speech synthesis in accordance with the frequency of total access.

84. An information processing apparatus according to claim 79, wherein the headline of said information is offered by the speech synthesis registered for each user.

85. An information processing apparatus according to claim 79, wherein inter-relation of said information is established by link between the words included in each information and the other information and said information is offered by voice by varying or changing over the voice with said words.

86. An information processing apparatus according to claim 79, wherein access is made to said information storing means (13) by the voice recognition (10) or character recognition (14) of the address data input from a terminal.

87. An information processing apparatus according to claim 86, wherein access destination for said information storing means (13) can be registered previously.

88. An information processing apparatus according to claim 79, wherein an audio data is offered in addition to said information.

89. An information processing apparatus according to claim 79, wherein said information is offered through classification with reference to information regarding a user.

90. An information processing apparatus according to claim 89, wherein said information regarding a user is obtained from said voice of user.

91. A communication identification code to be processed by an information processing apparatus being connected to an information network for transmitting and receiving various pieces of information, wherein
said identification code is input from one communication terminal (4, 5, 6, 15) among those of a plurality of kinds on the same network (2) belonging a first user and is formed by combination of the codes corresponding to operators operated on said communication terminal to identify, as the access destination, at least one of the communication terminals of a plurality of kinds on the same network or an information originating terminal offering information on the network belonging to a second user;
an address of the access destination corresponding to said identification code is obtained in said information processing apparatus; and
communication is executed between said address obtained and a communication terminal as the first user.

92. An identification code for communication according to claim 91, wherein said identification code includes an index code indicating indirectly an address of said access destination, and
an address of the access destination corresponding to said identification code is obtained on the basis of a retrieval table (13A) storing, on one-to-one basis, said identification code and an address of the communication terminal or an address of said information originating terminal belonging to the second user.

93. A communication identification code to be processed by an information processing apparatus being connected to an information network for transmitting and receiving various pieces of information, wherein
said identification code is input from one communication terminal (4, 5, 6, 15) among those of a plurality of kinds on the same network (2) belonging a first user and is formed by combination of the codes corresponding to operators operated on said communication terminal to identify, as the access destination, at least one of the communication terminals of a plurality of kinds on the same network or an information originating terminal offering information on the network belonging to a second user;
individual data indicating incorporation of said identification code is administrated, together with a kind of access object, in said information processing apparatus corresponding to said identification code, and
communication of said information is controlled in accordance with said individual data corresponding to said input identification code.

94. An information processing method for transmitting and receiving various pieces of information through connection with an information network, comprising the steps of:
receiving the code, as the identification, input from one communication terminal (4, 5, 6, 15) among those of a plurality of kinds on the same network (2) belonging to a first user and formed of combination of the codes corresponding to operators operated on said communication terminal to identify, as the access destination, at least one of said communication terminals of a plurality of kinds on the same network or an information originating terminal offering the information on the network;
obtaining an address of the access destination corresponding to said identification code received, and
making communication between said address obtained and the communication terminal of the first user.

95. An information processing method for transmitting and receiving various pieces of information through connection with an information network, comprising the steps of:
receiving the code, as the identification, input from one communication terminal (4, 5, 6, 15) among those of a plurality of kinds on the same network (2) belonging to a first user and formed of combination of the codes corresponding to operators operated on said communication terminal to identify, as the access destination, at least one of said communication
terminals of a plurality of kinds on the same network or an information originating terminal offering the information on the network;
administrating the individual data indicating incorporation of said identification code together with a kind of access object corresponding to said identification code; and
controlling communication of said information in accordance with said individual data being administrated and kind of said access object.

96. An information processing method for transmitting input information input via a communication terminal through connection with an information network, comprising the steps of:
receiving the code, as the identification code, input from any one communication terminal (4, 5, 6, 15) among those of a plurality of kinds on the same network (2) belonging to a first user and formed by combination of the codes corresponding to operators operated on said communication terminal to identify, as the access destination, at least one communication terminal among those of a plurality of kinds on the same network belonging to a second user;
obtaining an address of the access destination corresponding to said identification code received;
discriminating a kind of the communication terminal of the access destination from said address obtained; and
transmitting said input information through data conversion corresponding to a kind of said communication terminal discriminated.
